(19) Europäisches Patentamt
European Patent Office
Office européen des brevets

(11) **EP 3 339 741 B1**

(12) **EUROPÄISCHE PATENTSCHRIFT**

(45) Veröffentlichungstag und Bekanntmachung des Hinweises auf die Patenterteilung:
**06.07.2022 Patentblatt 2022/27**

(21) Anmeldenummer: **17209904.6**

(22) Anmeldetag: **22.12.2017**

(51) Internationale Patentklassifikation (IPC):
**F24C 7/04** *(2021.01)* **C03C 10/00** *(2006.01)*
**C03C 17/00** *(2006.01)*

(52) Gemeinsame Patentklassifikation (CPC):
**F24C 15/10; C03C 10/00; C03C 17/00; F24C 7/083**

(54) **KOCHFELD MIT ANZEIGEEINRICHTUNG**

COOKING HOB WITH DISPLAY DEVICE

PLAQUE DE CUISSON POURVU DE DISPOSITIF D'AFFICHAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2016 DE 102016125672**
**14.08.2017 DE 102017118451**

(43) Veröffentlichungstag der Anmeldung:
**27.06.2018 Patentblatt 2018/26**

(73) Patentinhaber: **SCHOTT AG**
**55122 Mainz (DE)**

(72) Erfinder:
- **MUELLER, Martin**
**64285 Darmstadt (DE)**
- **ZENKER, Thomas**
**55268 Nieder-Olm (DE)**

- **OHL, Gerold**
**55286 Sulzheim (DE)**
- **BOCKMEYER, Matthias**
**55116 Mainz (DE)**
- **WEISS, Evelin**
**55131 Mainz (DE)**

(74) Vertreter: **Blumbach · Zinngrebe Patentanwälte PartG mbB**
**Alexandrastraße 5**
**65187 Wiesbaden (DE)**

(56) Entgegenhaltungen:
**WO-A1-2012/172257    WO-A1-2015/044168**
**DE-A1-102012 212 350    DE-A1-102015 102 743**
**DE-U1-202016 103 321    DE-U1-202016 104 800**
**US-A1- 2014 305 929**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Kochfeld mit einer Anzeigeeinrichtung, insbesondere einer kostengünstig erhältlichen graphischen Displayanzeige.

Bekannte Kochfelder mit graphischen Displayanzeigen, die für einen Betrachter oberhalb der Glaskeramik eine Leuchtdichte von über 100 cd/m$^2$ (nits) bereitstellen, stellen im ausgeschaltetem Zustand für diesen Benutzer keinen ausreichenden Dead-Front-Effekt bereit. Als DeadFront-Effekt wird dabei jene wünschenswerte Wirkung bezeichnet, durch welche punktuelle oder flächige Helligkeitsunterschiede im Displaybereich und insbesondere Unterschiede zwischen dem Displaybereich und den weiteren, den Displaybereich umgebenden Flächen des Kochfelds für einen Benutzer von außen nicht sichtbar sind und bei welcher vorzugsweise auch kein farblicher Unterschied erkennbar ist. Dieser Dead-Front-Effekt sorgt für ein homogenes Erscheinungsbild, welches eine attraktive Anmutung gerade auch bei dunkleren Kochfeldern wesentlich unterstützt.

Bei herkömmlichen Kochfeldern bleibt das Display- oder Anzeigefenster deutlich sichtbar und unterbricht die homogene Anmutung der gesamten Kochoberfläche.

Die internationale Patentanmeldung WO 2012/001300 A1 offenbart eine Garvorrichtung, bei welcher interne Einrichtungen wenigstens eine Heizvorrichtung, eine Steuerund/oder Überwachungseinrichtung, und wenigstens eine Licht emittierende Einrichtung umfassen. Diese internen Einrichtungen sind mit einer Glas- oder glaskeramischen Platte abgedeckt, welche unter Verwendung von Vanadiumoxid gefärbt ist. Die Glas- oder glaskeramische Platte weist eine intrinsische Lichttransmission von 2,3% bis 40% und eine Transmission von wenigstens 0,6% für mindestens eine Wellenlänge im Bereich von 420nm bis 480nm auf. Bei dieser Garvorrichtung ist mindestens eine Maskierung zum Maskieren wenigstens eines Bereichs der internen Elemente oberhalb, unterhalb oder innerhalb der Glas- oder glaskeramischen Platte vorgesehen.

Das deutsche Gebrauchsmuster DE 202010018044 U1 beschreibt eine Anzeigeanordnung, die einerseits eine Glaskeramikplatte vom Typ Lithium-Aluminosilikat, deren optische Transmission bei einer Dicke von 4 mm zwischen 0,2% und 4% bei wenigstens einer Wellenlänge im Bereich zwischen 400 nm und 500 nm liegt, sowie andererseits eine Leuchtvorrichtung, wobei die Leuchtvorrichtung wenigstens eine polychromatische Lichtquelle, die wenigstens eine erste Emission mit einer Intensität ungleich null mit der Wellenlänge zwischen 400 nm und 500 nm und wenigstens eine zweite Emission mit einer Wellenlänge von mehr als 500 nm aufweist, umfasst, bei welcher die Positionierung der Quelle dazu ausgelegt ist, ein Anzeigen durch die Glaskeramikplatte zu ermöglichen.

Der internationalen Patentanmeldung WO 2012/001300 A1 und dem deutschen Gebrauchsmuster DE 202011110363 U1 ist jeweils eine Kochvorrichtung zu entnehmen, umfassend innenliegende Elemente, darunter wenigstens ein Heizmittel, Steuer- und/oder Kontrollmittel sowie wenigstens eine lichtemittierende Vorrichtung, wobei die innenliegenden Elemente durch wenigstens eine mit Hilfe von Vanadiumoxid eingefärbte Glas- oder Glaskeramikplatte abgedeckt sind, wobei wenigstens eine lichtemittierende Vorrichtung durch die Platte hindurch gesehen nicht rotfarben ist, wobei die Platte eigentlich eine Lichtdurchlässigkeit von 2,3% bis 40% und eine optische Transmission von wenigstens 0,6% bei wenigstens einer Wellenlänge im Bereich von 420 nm bis 480 nm aufweist, wobei die Kochvorrichtung so ausgebildet ist, dass oberhalb, unterhalb oder innerhalb der Platte wenigstens ein Abdeckmittel angeordnet wird, das dazu bestimmt ist, wenigstens einen Teil der innenliegenden Elemente zu verdecken.

Dem deutschen Gebrauchsmuster DE 202012012718 U1 ist ein Artikel zu entnehmen, der wenigstens einen farbigen Leuchtbereich, insbesondere Anzeigebereich, aufweist, wobei der Artikel wenigstens ein Glaskeramiksubstrat, das eine Lichtdurchlässigkeit von 0,8% bis 40% sowie eine optische Transmission von wenigstens 0,1% für wenigstens eine Wellenlänge im Bereich zwischen 420 nm und 780 nm aufweist, wenigstens eine Lichtquelle sowie wenigstens einen Filter umfasst, um wenigstens einen farbigen Leucht-, insbesondere Anzeigebereich in wenigstens einem Bereich der Platte auszubilden.

Die Dokumente DE 10 2015 102743 A1, DE 20 2016 104800 U1 und US 2014/305929 A1 beschreiben Kochfelder mit einem Glasoder Glaskeramiksubstrat und einem Anzeigebereich.

Eine Aufgabe der Erfindung ist es, ein Kochfeld bereitzustellen, bei welchem ein kostengünstiges, handelsübliches Display, insbesondere mit einer Leuchtdichte von 200 bis 450 cd/m$^2$ (nits) verwendet und eine ausreichende Leuchtdichte oberhalb der Glaskeramik, insbesondere von über 100 cd/m$^2$ (nits) bereitgestellt werden kann, wobei ein ausreichender Dead-Front-Effekt bei ausgeschaltetem Display bereitgestellt wird, bei dem die Anzeigefläche für einen durchschnittlichen Benutzer ohne zusätzliche Hilfsmittel nicht mehr wahrnehmbar ist.

Die Erfindung ist in den unabhängigen Ansprüchen 1 und 31 definiert.

Die Erfindung betrifft ein Kochfeld für ein Kochgerät, beispielsweise ein Induktionskochgerät, mit einem Glasoder Glaskeramiksubstrat. Das Glas- oder Glaskeramiksubstrat hat eine einem Außenbereich zugewandte Substrataußenseite und eine gegenüberliegende, einem Innenbereich, insbesondere Innenbereich des Kochfelds oder Kochgeräts zugewandte Substratinnenseite.

Das Kochfeld umfasst eine Anzeigeeinrichtung mit einer Anzeigefläche zur Darstellung von Informationen durch Aussendung von Licht, wobei die Anzeigeeinrichtung im Innenbereich, insbesondere dem Innenbereich des Kochfelds oder Kochgeräts angeordnet ist, derart, dass von der Anzeigefläche ausgesendetes Licht durch das Glas- oder Glaskeramiksubstrat hindurchtritt und von einem Benutzer im Außenbereich wahrnehmbar ist.

Die Anzeigeeinrichtung ist als graphisches, selektiv ansteuerbares, vorzugsweise farbige Pixel umfassendes Display ausgebildet . Bei einem graphischen Pixelbildschirm kann es sich insbesondere um ein Touch-Display handeln. In vorteilhafter Weise können kosteneffizient am Markt verfügbare Displayanzeigen zum Einsatz kommen.

Das Glas- oder Glaskeramiksubstrat weist bei einer der bevorzugten Ausführungsformen eine auf der Substratinnenseite aufgebrachte Innenbeschichtung auf, welche durch partielle Aussparung zumindest ein Anzeigefenster für das von der Anzeigefläche ausgesendete Licht definiert. Mit anderen Worten ist die Glaskeramikinnenseite bei dieser Ausführungsform zumindest teilweise mit einer Innenbeschichtung versehen, wobei hierbei auch von einer Unterseitenbeschichtung gesprochen wird. Im Bereich des Anzeigefensters kann die Substratinnenseite insbesondere unbeschichtet sein, um das Anzeigefenster zu definieren.

Eine besonders bevorzugte Ausführungsform eines Kochfelds für ein Kochgerät umfasst ein Glas- oder Glaskeramiksubstrat mit einer einem Außenbereich zugewandten Substrataußenseite und einer gegenüberliegenden, einem Innenbereich, insbesondere einem Innenbereich des Kochfelds oder Kochgeräts zugewandten Substratinnenseite, zumindest eine Anzeigeeinrichtung mit einer Anzeigefläche zur Darstellung von Informationen durch Aussendung von Licht, insbesondere ausgebildet als graphisches, selektiv ansteuerbares, vorzugsweise farbige Pixel umfassendes Display, wobei die Anzeigeeinrichtung im Innenbereich, insbesondere im Innenbereich des Kochfelds oder Kochgeräts so angeordnet ist, dass von der Anzeigefläche ausgesendetes Licht durch das Glas- oder Glaskeramiksubstrat hindurchtritt und von einem Benutzer im Außenbereich wahrnehmbar ist, wobei zumindest ein Anzeigefenster für das von der Anzeigefläche ausgesendete Licht definiert ist, wobei das Glas- oder Glaskeramiksubstrat im Bereich der Anzeigefläche bzw. des Anzeigefensters einen Lichttransmissionsgrad ($\tau_{vis}$) aufweist, welcher im Bereich von 5 % bis 70 %, vorzugsweise im Bereich von 7 % bis 55 %, besonders bevorzugt im Bereich von 9 % bis 45 %, ganz besonders bevorzugt im Bereich von 12 % bis 30 % liegt. Vorteilhaft definiert dabei eine oberhalb, unterhalb und/oder innerhalb des Glas- oder Glaskeramiksubstrats angeordnete Anordnung das zumindest eine Anzeigefenster für das von der Anzeigefläche ausgesendete Licht.

Vorzugsweise definiert eine auf der Substratinnenseite aufgebrachte Innenbeschichtung durch partielle Aussparung das zumindest eine Anzeigefenster für das von der Anzeigefläche ausgesendete Licht und bildet damit insbesondere die Anordnung aus, welche das zumindest eine Anzeigefenster für das von der Anzeigefläche ausgesendete Licht definiert.

Bevorzugt umfasst die oberhalb, unterhalb und/oder innerhalb des Glas- oder Glaskeramiksubstrats angeordnete Anordnung, welche das zumindest eine Anzeigefenster für das von der Anzeigefläche ausgesendete Licht definiert zusätzlich oder alternativ,

- eine Außenbeschichtung, vorzugsweise mit einer partiellen Unterbrechung zur Ausbildung eines unbeschichteten Bereiches, welcher das Anzeigefenster definiert, welche an der Substrataußenseite angeordnet ist, und/oder

- eine Folie mit zumindest einer partiellen Aussparung einer Beschichtung oder Einfärbung, welche benachbart zur Substratinnenseite oder Substrataußenseite oder an der Substratinnenseite oder der Substrataußenseite angeordnet ist und das Anzeigefenster definiert, und/oder

- ein Trägermaterial mit zumindest einer Aussparung einer Beschichtung oder Einfärbung, welche benachbart zur Substratinnenseite oder Substrataußenseite oder an der Substratinnenseite oder der Substrataußenseite angeordnet ist und das Anzeigefenster definiert, und/oder

- einen geänderten Lichttransmissionsgrad des Glas- oder Glaskeramiksubstrats im Anzeigenbereich und/oder im dem Anzeigenbereich umliegenden Bereich, insbesondere eine partielle Aufhellung oder Abdunkelung oder Einfärbung des Glas- oder Glaskeramiksubstrates, welche das Anzeigefenster definiert.

Die Aussparung kann eine niedrigere oder bevorzugt eine höhere Lichttransmission, insbesondere im Vergleich zu einem an die Aussparung angrenzenden Bereich, aufweisen und kann wie vorstehend beschrieben verschiedenartig ausgeführt sein.

Nachfolgend werden rein beispielhaft verschiedene, generell geeignete, auch miteinander kombinierbare Ausführungsformen zur Ausbildung eines derartigen Anzeigefensters aufgeführt:

(i) eine Aufhellung oder Abdunkelung eines Teilbereiches des Glas- oder Glaskeramiksubstrates selbst, insbesondere eine Aufhellung im Anzeigenbereich oder eine zumindest teilweise Abdunkelung des dem Anzeigefenster umliegenden und/oder angrenzenden Bereichs oder eine Abdunkelung des Anzeigebereichs kombiniert mit einer stärkeren Abdunkelung des dem Anzeigefenster umliegenden und/oder angrenzenden Bereichs gemäß einer der Ausführungsformen (i) bis (iv) ,

(ii) eine an der Substratinnenseite aufgebrachte Innenbeschichtung (Unterseitenbeschichtung) oder an der Substrataußenseite angebrachte Außenbeschichtung (Oberseitenbeschichtung), wobei im Bereich des Anzeigefensters die Substratinnenseite oder Substrataußenseite insbesondere unbeschichtet ausgebildet sein kann, um das Anzeigefenster zu definieren,

(iii) eine Folie, auf der das Anzeigefenster durch eine Aussparung oder eine Aussparung einer Beschichtung oder einer Einfärbung dargestellt ist, wobei die Folie unterseitig oder oberseitig bezüglich des Glas- oder Glaskeramiksubstrats montiert, verklebt oder laminiert ist,

(iv) ein selbsttragendes Trägermaterial wie beispielsweise eine Kunststoff- oder Glasscheibe/-folie, auf der das Anzeigefenster durch eine Aussparung oder durch eine Aussparung einer Beschichtung oder einer Einfärbung dargestellt ist, und die unterhalb oder oberhalb des Glas- oder Glaskeramiksubstrates angebracht ist, oder

(v) eine Kombination von Ausführungen gemäß (i) bis (iv), die das Grundsubstrat dahingehend verändert, dass im Anzeigebereich die geforderte Lichttransmissionsgrad eingestellt wird und/oder in den dem Anzeigefenster umliegenden und/oder angrenzenden Bereichen ein vorzugsweise geringerer Lichttransmissionsgrad einstellt wird.

Diese Ausführungsformen können miteinander kombiniert oder bei Vorhandensein mehrerer Anzeigefenster auch alternativ verwendet werden. Auch in einem einzigen Glas- oder Glaskeramiksubstrat können auf diese Weise unterschiedlich ausgeführte Anzeigefenster vorhanden sein.

Das Trägermaterial mit zumindest einer Aussparung, Beschichtung oder Einfärbung kann von dem Glas- oder Glaskeramiksubstrat separate Trägermaterialien wie Folien, selbsttragende Substrate wie Kunststoff- oder Glasscheiben, insbesondere gehärtete Glasscheiben, oder auch, wie in Induktionsgeräten üblich, Isolationsmaterialien, die Schichtsilikate (Glimmer) wie Mica oder Faserstoffe beinhalten, umfassen und kann an der Unterseite des Glas- oder Glaskeramiksubstrats montiert, verklebt oder laminiert sein oder auch auf Elementen des Geräteunterbaus, wie auf Lichtelementen oder auf mechanischen Trägerkonstruktionen des Kochfelds oder Kochgeräts angebracht sein.

Es sind auch Ausführungsformen denkbar, die eine Anordnung als Verbund, etwa ein Glas-Folie-Glas-Verbund, umfassen. Bei derartigen Anordnungen ist es auch denkbar, zusätzlich Beschichtungen vorzusehen, welche innerhalb des Glas- oder Glaskeramiksubstrates ausgebildet sein können. Denkbar sind weiterhin Ausführungsformen, bei denen eine Folie auf einer Außenseite aufgebracht ist, obgleich derartige Ausführungen Nachteile aufweisen können in Bezug auf eine geringere Temperatur- und Kratzbeständigkeit.

Generell kann das zumindest eine Anzeigefenster durch einen geänderte Lichttransmissionsgrad innerhalb des zumindest einen Anzeigefensters relativ zu dem umgebenden Lichttransmissionsgrad innerhalb, oberhalb und/oder unterhalb des Glas- oder Glaskeramiksubstrats definiert werden.

Hierbei kann der Lichttransmissionsgrad des Anzeigefensters selbst und/oder derjenigen Bereiche, welche das Anzeigefenster im Glas- oder Glaskeramiksubstrat umgeben, innerhalb, oberhalb und/oder unterhalb des Glas- oder Glaskeramiksubstrats durch eine geänderte Transmission, ein geändertes Streuverhalten und/oder eine geänderte Reflektivität definiert eingestellt werden.

Das Glas- oder Glaskeramiksubstrat weist im Bereich der Anzeigefläche bzw. des Anzeigefensters einen Lichttransmissionsgrad ($\tau_{vis}$) auf, welcher im Bereich von 5 % bis 70 %, vorzugsweise im Bereich von 7 % bis 55 %, besonders bevorzugt im Bereich von 9 % bis 45%, ganz besonders bevorzugt im Bereich von 12 bis 30 % liegt.

Für den Lichttransmissionsgrad können ferner auch folgende Bereiche vorgesehen sein: 5 % bis 55 %, 5 % bis 45 %, 5 % bis 30 %, 7 % bis 70 %, 7 % bis 45 %, 7 % bis 30 %, 9 % bis 70 %, 9 % bis 55 %, 9 % bis 30 %, 12 % bis 70 %, 12 % bis 55 % oder 12 % bis 45 %.

Unter dem Lichttransmissionsgrad ($\tau_{vis}$) ist die Transmission für Licht im sichtbaren Spektralbereich zu verstehen. Der Lichttransmissionsgrad (light transmittance) ist hierbei insbesondere bestimmt gemäß DIN EN 410:2011, section 5.2 und/oder ISO 9050:2003, section 3.3.

In einer Ausführungsform umfasst das Kochfeld zumindest eine weitere Anzeigeeinrichtung. Insbesondere ist vorgesehen, dass eine weitere Anzeigeeinrichtung mit einer weiteren Anzeigefläche zur Darstellung von Informationen durch Aussendung von Licht umfasst ist, wobei diese insbesondere als Segmentanzeige ausgebildet ist.

Auch die zumindest eine weitere Anzeigeeinrichtung ist vorzugsweise im Innenbereich, insbesondere dem Innenbereich des Kochfelds oder Kochgeräts angeordnet, derart, dass von der Anzeigefläche ausgesendetes Licht durch das Glas- oder Glaskeramiksubstrat hindurchtritt und von einem Benutzer im Außenbereich wahrnehmbar ist.

Ferner definiert bei einer bevorzugten Ausführungsform die auf der Substratinnenseite aufgebrachte Innenbeschichtung vorzugsweise durch partielle Aussparung ein weiteres Anzeigefenster für das von der weiteren Anzeigefläche ausgesendete Licht, wobei im Bereich der weiteren Anzeigefläche bzw. des weiteren Anzeigefensters insbesondere ein Lichttransmissionsgrad ($\tau_{vis}$) im Bereich von 0,5 % bis 5 % vorgesehen ist. Dieses weitere Anzeigefenster innerhalb, oberhalb und/oder unterhalb des Glas- oder Glaskeramiksubstrats kann auch durch eine Beschichtung, eine Folie oder ein Trägermaterial vorzugsweise durch partielle Aussparung und/oder das Glasoder Glaskeramiksubstrat selbst durch einen geänderten Lichttransmissionsgrad, insbesondere eine partielle Aufhellung oder Abdunkelung definiert werden.

Vorzugsweise ist vorgesehen, dass die Anzeigefläche der Anzeigeeinrichtung, welche vorzugsweise als graphisches Display ausgebildet ist, eine Leuchtdichte aufweist, welche mindestens 200 cd/m$^2$ (Candela pro Quadratmeter), vorzugsweise mindestens 300 cd/m$^2$, besonders bevorzugt mindestens 400 cd/m$^2$, ganz besonders bevorzugt mindestens 500 cd/m$^2$ beträgt. Ferner ist vorgesehen, dass die Leuchtdichte höchstens 2000 cd/m$^2$, vorzugsweise höchstens 1500 cd/m$^2$, besonders bevorzugt höchstens 1200 cd/m$^2$, ganz besonders bevorzugt höchstens 1000 cd/m$^2$ und nochmals bevorzugter höchstens 800 cd/m$^2$ beträgt.

In einer bevorzugten Ausführungsform besteht zwischen einem prozentualen Grauwert $G_1$ der Anzeigefläche der Anzeigeeinrichtung im ausgeschalteten Zustand (insbesondere bei Betrachtung durch das Glas- oder Glaskeramiksubstrat hindurch) und einem prozentualen Grauwert $G_2$ der Innenbeschichtung des Glas- oder Glaskeramiksubstrats (insbesondere bei Betrachtung durch das Glas- oder Glaskeramiksubstrat hindurch) ein Unterschied $|G_1-G_2|$ von weniger als 5,0 %, vorzugsweise von weniger als 3,5 %, besonders bevorzugt von weniger 2,5 % und ganz besonders bevorzugt von weniger als 1,5 %.

Die vorstehenden und nachfolgend bei weiteren Ausführungsformen diskutierten Grauwertunterschiede $|G_1-G_2|$ bestehen insbesondere dann, wenn die prozentualen Grauwerte $G_1$ und $G_2$ bestimmt sind aus einer linearen Funktion G als $G_1=G(M_1)$ und $G_2=G(M_2)$ aus mittels einer Grauwertmesseinrichtung gemessenen Messwerten $M_1$ und $M_2$.

Der Messwert $M_1$ entspricht dabei der Anzeigefläche der Anzeigeeinrichtung im ausgeschalteten Zustand (insbesondere bei Betrachtung durch das Glas- oder Glaskeramiksubstrat hindurch) und ist mittels der Grauwertmesseinrichtung gemessen.

Bei weiteren Ausführungsformen, bei denen das Glaskeramiksubstrat nicht eingefärbt vorliegt, entspricht der Messwert $M_1$ der Anzeigefläche der Anzeigeeinrichtung im ausgeschalteten Zustand (insbesondere bei Betrachtung durch das Glas- oder Glaskeramiksubstrat und durch einem auf der Innenseite oder in der Nähe der Innenseite des Glas- oder Glaskeramiksubstrats angebrachten Trägersubstrat oder einer auf der Innenseite oder in der Nähe der Innenseite des Glas- oder Glaskeramiksubstrats angebrachten Folie hindurch) und ist ebenfalls mittels der Grauwertmesseinrichtung gemessen.

Bei weiteren Ausführungsformen entspricht der Messwert $M_1$ der Anzeigefläche der Anzeigeeinrichtung im ausgeschalteten Zustand (insbesondere bei Betrachtung durch das Glas- oder Glaskeramiksubstrat und durch einem auf der Außenseite oder in der Nähe der Außenseite des Glas- oder Glaskeramiksubstrats angebrachten Trägersubstrat oder einer auf der Außenseite oder in der Nähe der Außenseite des Glas- oder Glaskeramiksubstrats angebrachten Folie hindurch) und ist ebenfalls mittels der Grauwertmesseinrichtung gemessen.

Der Messwert $M_2$ entspricht bei einer bevorzugten Ausführungsform der Innenbeschichtung des Glas- oder Glaskeramiksubstrats (insbesondere bei Betrachtung durch das Glas- oder Glaskeramiksubstrat hindurch) und ist ebenfalls mittels der Grauwertmesseinrichtung gemessen.

Bei weiteren Ausführungsformen entspricht der Messwert $M_2$ einem auf der Innenseite oder in der Nähe der Innenseite des Glas- oder Glaskeramiksubstrats angebrachten Trägersubstrat oder einer auf der Innenseite oder in der Nähe der Innenseite des Glas- oder Glaskeramiksubstrats angebrachten Folie (insbesondere bei Betrachtung durch das Glas- oder Glaskeramiksubstrat hindurch) und ist ebenfalls mittels der Grauwertmesseinrichtung gemessen.

Bei nochmals weiteren Ausführungsformen entspricht der Messwert $M_2$ einer Außenbeschichtung, einem auf der Außenseite oder in der Nähe der Außenseite des Glas- oder Glaskeramiksubstrats angebrachten Trägersubstrat oder einer auf der Außenseite oder in der Nähe der Außenseite des Glas- oder Glaskeramiksubstrats angebrachten Folie (insbesondere bei direkter Betrachtung und nicht durch das Glas- oder Glaskeramiksubstrat hindurch gesehen) und ist ebenfalls mittels der Grauwertmesseinrichtung gemessen.

Die lineare Funktion G ist dadurch definiert ist, dass diese Funktion (a) einem Messwert, welcher einer RAL-Karte mit RAL-Farbe 9017 entspricht und mittels der Grauwertmesseinrichtung gemessenen ist, einen prozentualen Grauwert von 20 % zuordnet und (b) einem Messwert, welcher einer RAL-Karte mit RAL-Farbe 7012 entspricht und mittels der Grauwertmesseinrichtung gemessen ist, einen prozentualen Grauwert von 90 % zuordnet. Mit anderen Worten verläuft die durch die lineare Funktion G definierte Gerade durch diese beiden Referenzpunkte.

Die Grauwertmesseinrichtung umfasst eine Kamera und ist eingerichtet, ein Graustufenbild von der Anzeigefläche der Anzeigeeinrichtung im ausgeschalteten Zustand (insbesondere durch das Glas- oder Glaskeramiksubstrat hindurch betrachtet), der Innenbeschichtung des Glas- oder Glaskeramiksubstrats (insbesondere durch das Glas- oder Glaskeramiksubstrat hindurch betrachtet), der RAL-Karte mit RAL-Farbe 9017 und der RAL-Karte mit RAL-Farbe 7012 aufzunehmen und die zugehörigen Messwerte bereitzustellen.

Demnach betrifft die Erfindung ein Kochfeld,

wobei zwischen einem prozentualen Grauwert $G_1$ der Anzeigefläche der Anzeigeeinrichtung im ausgeschalteten Zustand vorzugsweise durch das Glas- oder Glaskeramiksubstrat hindurch betrachtet und
einem prozentualen Grauwert $G_2$ der Innenbeschichtung des Glas- oder Glaskeramiksubstrats
oder einem prozentualen Grauwert $G_2$ einer an der Substratinnenseite angebrachten oder in der Nähe der Substratinnenseite angebrachten Folie oder eines an der Substratinnenseite angebrachten oder in der Nähe der Substratinnenseite angebrachten Trägermaterials, vorzugsweise durch das Glas- oder Glaskeramiksubstrat hindurch betrachtet oder

einem prozentualen Grauwert $G_2$ einer Außenbeschichtung oder

einem prozentualen Grauwert $G_2$ einer an der Substrataußenseite angebrachten oder

einem prozentualen Grauwert $G_2$ einer in der Nähe der Substrataußenseite angebrachten Folie oder

einem prozentualen Grauwert $G_2$ eines an der Substrataußenseite angebrachten oder in der Nähe der Substrataußenseite angebrachten Trägermaterials, oder

einem prozentualen Grauwert $G_2$ eines abgedunkelten Bereichs des Glas- oder Glaskeramiksubstrats, vorzugsweise nicht durch das Glas- oder Glaskeramiksubstrat hindurch sondern direkt betrachtet ein Unterschied $|G_1\text{-}G_2|$ von weniger als 5,0 %, vorzugsweise von weniger als 3,5 %, besonders bevorzugt von weniger 2,5 %, ganz besonders bevorzugt von weniger als 1,5 % besteht,

insbesondere wenn die prozentualen Grauwerte $G_1$ und $G_2$ berechnet sind mittels einer linearen Funktion G als $G_1=G(M_1)$ und $G_2=G(M_2)$ aus mittels einer Grauwertmesseinrichtung gemessenen Messwerten $M_1$ und $M_2$,

wobei der Messwert $M_1$ der Anzeigefläche der Anzeigeeinrichtung im ausgeschalteten Zustand vorzugsweise durch das Glas- oder Glaskeramiksubstrat hindurch betrachtet entspricht und mittels der Grauwertmesseinrichtung gemessen ist und

wobei der Messwert $M_2$ der Innenbeschichtung des Glasoder Glaskeramiksubstrats oder

der an der Substratinnenseite angebrachten oder in der Nähe der Substratinnenseite angebrachten Folie oder

des an der Substratinnenseite angebrachten oder in der Nähe der Substratinnenseite angebrachten Trägermaterials, vorzugsweise durch das Glas- oder Glaskeramiksubstrat hindurch betrachtet oder

der Außenbeschichtung oder

der an der Substrataußenseite angebrachten oder in der Nähe der Substrataußenseite angebrachten Folie oder

des an der Substrataußenseite angebrachten oder in der Nähe der Substrataußenseite angebrachten Trägermaterials, oder

dem Glas- oder Glaskeramiksubstrat in dessen abgedunkelten Bereich vorzugsweise nicht durch das Glas- oder Glaskeramiksubstrat hindurch, sondern direkt betrachtet entspricht und mittels der Grauwertmesseinrichtung gemessen ist und

wobei die lineare Funktion G vorzugsweise dadurch definiert ist, dass diese einem Messwert, welcher einer RAL-Karte mit RAL-Farbe 9017 entspricht und mittels der Grauwertmesseinrichtung gemessenen ist, einen prozentualen Grauwert von 20 % zuordnet und einem Messwert, welcher einer RAL-Karte mit RAL-Farbe 7012 entspricht und mittels der Grauwertmesseinrichtung gemessen ist, einen prozentualen Grauwert von 90 % zuordnet und

wobei die Grauwertmesseinrichtung vorzugsweise eine Kamera umfasst und eingerichtet ist, ein Graustufenbild von der Anzeigefläche der Anzeigeeinrichtung im ausgeschalteten Zustand vorzugsweise durch das Glas- oder Glaskeramiksubstrat hindurch betrachtet, und der Innenbeschichtung des Glas- oder Glaskeramiksubstrats oder

der an der Substratinnenseite angebrachten oder in der Nähe der Substratinnenseite angebrachten Folie oder

des an der Substratinnenseite angebrachten oder in der Nähe der Substratinnenseite angebrachten Trägermaterials, vorzugsweise durch das Glas- oder Glaskeramiksubstrat hindurch betrachtet, der Außenbeschichtung oder

der an der Substrataußenseite angebrachten oder in der Nähe der Substrataußenseite angebrachten Folie oder

des an der Substrataußenseite angebrachten oder in der Nähe der Substrataußenseite angebrachten Trägermaterials, oder

dem Glas- oder Glaskeramiksubstrat in dessen abgedunkelten Bereich

vorzugsweise nicht durch das Glas- oder Glaskeramiksubstrat hindurch, sondern direkt betrachtet, der RAL-Karte mit RAL-Farbe 9017 und der RAL-Karte mit RAL-Farbe 7012 aufzunehmen und die zugehörigen Messwerte bereitzustellen.

Ferner umfasst die Grauwertmesseinrichtung einen optischen Langpassfilter mit einer Kanten-Wellenlänge, d.h. einer Wellenlänge bei Reintransmission von 50%, von 590nm.

Die vorstehend beschriebene Messmethode, mit welcher die prozentualen Grauwerte $G_1$ und $G_2$ ableitbar sind, wird weiter unten anhand von Figuren detaillierter beschrieben. Ebenso wird dort auch der optische Langpassfilter näher definiert.

In einer weiteren Ausführungsform ist vorgesehen, dass zwischen einem wahrnehmbaren Farbton $\{L_1^*, a_1^*, b_1^*\}$ oder einer Chromazität (Buntheit) $\{a_1^*, b_1^*\}$ der Anzeigefläche der Anzeigeeinrichtung im ausgeschalteten Zustand (insbesondere durch das Glas- oder Glaskeramiksubstrat hindurch betrachtet) und einem wahrnehmbaren Farbton $\{L_2^*, a_2^*, b_2^*\}$ oder einer Chromazität $\{a_2^*, b_2^*\}$ der Innenbeschichtung des Glasoder Glaskeramiksubstrats (insbesondere durch das Glasoder Glaskeramiksubstrat hindurch betrachtet) eine Chromazitätsdifferenz

$$\Delta C^* = \sqrt{(a_2^* - a_1^*)^2 + (b_2^* - b_1^*)^2}$$ von weniger als 8,0, vorzugsweise von weniger als 6,0, besonders bevorzugt von weniger als 4,5, ganz besonders bevorzugt von weniger als 3,0 besteht.

Die vorstehenden Chromazitätsdifferenzen $\Delta C^*$ bestehen insbesondere dann, wenn die Farbtöne $\{L_1^*, a_1^*, b_1^*\}$ und $\{L_2^*, a_2^*, b_2^*\}$ oder die Chromazitäten $\{a_1^*, b_1^*\}$ und $\{a_2^*, b_2^*\}$ unter den folgenden Normbedingungen gemessen sind: D65-Normlicht und 2°-Normalbeobachter und vorzugsweise durch jeweiliges Aufsetzen eines Farb-Messgeräts, z.B. eines Farb-Messgeräts des Herstellers Datacolor® (Lawrenceville, NJ 08648 USA) insbesondere des Typs Datacolor® check^plus, P/N: 1200-1513, S/N 5612.

Vorzugsweise ist vorgesehen, dass die Innenbeschichtung, insbesondere bei Betrachtung durch das Glas-oder Glaskeramikelement hindurch, einen Farbton {L,a,b} aufweist mit L kleiner als 50 und Werten für a und b, welche jeweils negativ sind. Hiermit kann eine möglichst schwarze Anmutung erreicht werden. Insbesondere hat sich herausgestellt, dass hierzu der L-Wert alleine nicht ausreichend ist. Auch bei niedrigen L-Werten kann eine Substratprobe bräunlich, rötlich bzw. "warm" wirken. Daher ist insbesondere vorgesehen, dass die Werte a und b negativ sind. Besonders bevorzugt ist, dass L kleiner als 26, a im Bereich von - 0,05 bis -0,35 und b im Bereich von -0,4 bis -2 liegt.

In einer weiteren Ausführungsform ist vorgesehen, dass zwischen einem Rückstrahlvermögen $\rho_1$ der Anzeigefläche der Anzeigeeinrichtung im ausgeschalteten Zustand und einem Rückstrahlvermögen $\rho_2$ der Innenbeschichtung des Glas- oder Glaskeramiksubstrats ein Unterschied $|\rho_1\text{-}\rho_2|$ von weniger als 3 %, bevorzugt von weniger als 1,5 % besteht.

$$\rho_1 = \frac{\int_{S_1}^{S_2} R_1(\lambda)\, d\lambda}{\int_{S_1}^{S_2} d\lambda} \quad \text{und} \quad \rho_2 = \frac{\int_{S_1}^{S_2} R_2(\lambda)\, d\lambda}{\int_{S_1}^{S_2} d\lambda}$$

Die Rückstrahlvermögen sind definiert als , insbesondere mit Integrationsgrenzen $S_1$ = 400nm und $S_2$ = 700*nm.*

Dabei bezeichnet $R_1(\lambda)$ die spektrale Reflektivität der Anzeigefläche der Anzeigeeinrichtung im ausgeschalteten Zustand und $R_2(\lambda)$ die spektrale Reflektivität der Innenbeschichtung des Glas- oder Glaskeramiksubstrats.

Alternativ kann auch vorgesehen sein, dass die Rückstrahlvermögen definiert sind als die Oberflächen-Albedo $\rho_1 = A_1$ der Anzeigefläche der Anzeigeeinrichtung im ausgeschalteten Zustand und $\rho_2 = A_2$ der Innenbeschichtung des Glas- oder Glaskeramiksubstrats.

In einer Weiterbildung der Erfindung umfasst das Kochfeld einen Kantenkontrastminimierungsbereich, welcher einen graduellen Übergang zwischen dem Grauwert und/oder dem Farbton der Anzeigefläche im ausgeschalteten Zustand (insbesondere durch das Glas- oder Glaskeramiksubstrat im Bereich des Anzeigefensters hindurch betrachtet) und dem Grauwert und/oder dem Farbton der Innenbeschichtung (insbesondere durch das Glas- oder Glaskeramiksubstrat hindurch betrachtet) erzeugt.

Hiermit wird eine Übergangszone definiert, mit welcher in vorteilhafter Weise die subjektive Wahrnehmbarkeit des Kantenkontrasts vermindert werden kann.

In einer Weiterbildung der Erfindung ist das Anzeigefenster und/oder das zumindest eine weitere Anzeigefenster dadurch gekennzeichnet, dass die partielle Aussparung der Innenbeschichtung, der Außenbeschichtung, der Folie oder des Trägermaterials oder die Aufhellung des Glas- oder Glaskeramiksubstrats rasterartig ausgeführt ist. Mit anderen Worten braucht ein Anzeigefenster nicht vollständig unbeschichtet zu sein.

Die rasterartige partielle Aussparung kann in Form von Linien, Punkten, eines gleichmäßigen und/oder stochastischen Rasters oder Punktrasters ausgeführt sein, insbesondere um im Mittel eine Verminderung des Lichttransmissionsgrades ($\tau_{vis}$) zu bewirken. Ferner kann die rasterartige partielle Aussparung die vorstehend beschriebene Übergangszone bereitstellen.

In einer bevorzugten Ausführungsform weist die Anzeigefläche und/oder die zumindest eine weitere Anzeigefläche vom Außenbereich durch das Glaskeramikelement hindurch betrachtet eine Leuchtdichte auf, welche größer ist als 60 cd/m$^2$, vorzugsweise größer ist als 100 cd/m$^2$, besonders bevorzugt größer ist als 150 cd/m$^2$, ganz besonders bevorzugt größer ist als 200 cd/m$^2$.

Das Kochfeld kann ferner zumindest einen im Innenbereich angeordneten Heizkörper zur Erwärmung eines auf der Substrataußenseite aufgestellten Kochgeschirrs umfassen.

Weiterhin kann bei dem Kochfeld oder Kochgerät auch zumindest ein im Innenbereich angeordneter Infrarotsensor insbesondere zur Messung der Temperatur eines auf der Substrataußenseite aufgestellten Kochgeschirrs vorgesehen sein.

Das Glas- oder Glaskeramiksubstrat weist dann vorzugsweise im Bereich des Heizkörpers und/oder des Infrarotsensors einen Lichttransmissionsgrad ($\tau_{vis}$) auf, welcher geringer ist als 5 %, vorzugsweise geringer ist als 1 %, besonders bevorzugt geringer ist als 0,5 %.

Das Glas- oder Glaskeramiksubstrat umfasst vorzugsweise ein LAS-System. Das Glaskeramikelement kann volumengefärbt sein, insbesondere, um den Lichttransmissionsgrad zu beeinflussen und so den benannten Lichttransmissionsgrad zu erhalten. Ferner kann das Glas- oder Glaskeramiksubstrat auch transparent sein.

Das Glas- oder Glaskeramiksubstrat kann im Bereich des Anzeigefensters eine spektrale Transmissionscharakteristik aufweisen, welche als Neutral- oder Graufilter ausgeführt ist, wobei die Transmission über den spektralen Bereich von 380nm bis 780nm, vorzugsweise über den spektralen Bereich von 400nm bis 700nm, besonders bevorzugt über den spektralen Bereich von 450nm bis 650nm höchstens um $\pm$ 20 % schwankt, vorzugsweise höchstens um $\pm$ 15 % schwankt, besonders bevorzugt höchstens um $\pm$ 10 % schwankt.

Vorzugsweise weist die Innenbeschichtung des Glas- oder Glaskeramiksubstrats einen Lichttransmissionsgrad ($\tau_{vis}$) auf, welcher im Bereich von < 0,5 % liegt, vorzugsweise im Bereich von < 0,005% liegt und besonders bevorzugt im Bereich von 0 bis 0,00005% % liegt.

Es kann in einer Weiterbildung der Erfindung vorgesehen sein, dass die Substrataußenseite des Glas- oder Glaskeramiksubstrats mit einer Außenbeschichtung, insbesondere einem (Oberseiten-)Dekor und/oder einer Kratzschutzschicht versehen ist. Das Substrat kann ferner poliert sein.

Vorgesehen ist demnach auch ein Kochfeld, wobei die Substrataußenseite des Glas- oder Glaskeramiksubstrats mit einer Außenbeschichtung, welche insbesondere ein Dekor ausbildet und/oder mit einer Kratzschutzschicht versehen ist und/oder wobei das Glas- oder Glaskeramiksubstrat poliert ist.

Die Innenbeschichtung und/oder die Außenbeschichtung des Glas- oder Glaskeramiksubstrats kann als Sputterschicht ausgebildet sein und/oder eine Lüsterfarbe umfassen, insbesondere schwarz ausgebildet sein und den Lichttransmissionsgrad beeinflussen bzw. vermindern. Ferner kann die Beschichtung mittels Solgel, Gasphasenabscheidung (PVD) oder PVD inkl. Sputtern erfolgen.

Es können auch opake Innen- oder Rückseitenbeschichtungen verwendet werden, um dem Glas- oder Glaskeramiksubstrat eine erwünschte Anmutung zu verleihen. Derartige Innenoder Rückseitenbeschichtungen können sogenannten Clearfarben umfassen, mittels welchen die Grundfarbe des Glas- oder Glaskeramiksubstrats vorgegeben oder beeinflusst werden kann. Diese Clearfarben werden in der Regel mittels Siebdruck aufgebracht. Sollen Schriften, Symbole oder Markierungen dargestellt werden, werden in der Regel Farben eingesetzt, die einen hohen Kontrast zur Grund- oder Clearfarbe aufweisen können. Diese Farben werden als Deepfarben bezeichnet und als erste Schicht vorzugsweise strukturiert auf das Substrat aufgebracht.

Deepfarben sind in der Regel die erste Farbschicht auf der beschichteten Seite des Glas- oder Glaskeramiksubstrats. Hier sind durchaus Strukturbreiten von weniger als 0,3 mm möglich, welches für den verwendeten Siebdruck eine sehr hohe Auflösung verlangt. Danach kann das Überdrucken mit einer Clearfarbe erfolgen, welches ebenfalls in strukturierter Weise erfolgen kann. Anschließend hieran kann das Versiegeln aller Schichten mittels einer in der Regel vollflächig oder gegebenenfalls auch strukturiert aufgebrachten Versiegelungssicht erfolgen.

Deepfarben sind ebenfalls opak und können jedoch im sichtbaren Wellenlängenbereich, zumindest, wenn diese mit einer Versiegelungsschicht versehen sind, nicht durchleuchtet werden

Bevorzugte Beschichtungen oder Clearfarben umfassen anorganische und/oder anorganisch-organisch modifizierte Sol-Gel-Schichten, die ein oxidisches Netzwerk ausbilden und Dekorpigmente enthalten, beziehungsweise nach dem Aushärten eine Matrix eines solchen oxidischen Netzwerks mit darin eingebetteten Dekorpigmenten ausbilden. Bevorzugt kann das oxidische Netzwerk aus $SiO_2$, $TiO_2$, $ZrO_2$, $Al_2O_3$-Bausteinen bestehen. Dabei können im Netzwerk noch organische Reste vorhanden sein.

Allgemein wird hinsichtlich pigmentierter Schichten im Rahmen der vorliegenden Offenbarung zwischen Deepfarben und Clearfarben unterschieden. Clearfarben können vollflächig gedruckt werden und eine Hintergrundfarbe des Dekors bilden. Im Bedarfsfalle erfolgt der Druck unter Aussparung eines Displaybereichs oder auch weiterer Bereiche, welche entweder Deepfarben oder weitere Anzeigeelemente enthalten können. Deepfarben können verwendet werden, um Symbole und Dekormuster zu drucken. Bei diesen Farben handelt es sich vorzugsweise um Sol-Gel-farben mit Pigmenten. Deepfarben können so gewählt werden, dass diese einen möglichst hohen Kontrast zu den Clearfarben aufweisen und werden in Aussparungen der Clearfarben gedruckt, insbesondere um Symbole, Linien oder ähnliches auf dem Kochfeld darzustellen.

Hinsichtlich ihrer Zusammensetzung unterscheiden sich Clear- und Deepfarben außer in ihrer Farbe, d.h. der Wahl der farbgebenden Pigmente, regelmäßig in der Größe der Effektpigmente und dem beim Siebdruck verwendeten Sieb. Deepfarben enthalten kleinere Effektpigmente und können daher mit einem feineren Sieb mit kleineren Öffnungen gedruckt werden. Hierdurch kann auf Kosten der Intensität des angestrebten Effekts die Druckauflösung gegenüber den Clear-Farben verbessert werden. Ansonsten kann die Zusammensetzung von Deep- und Clearfarben im Wesentlichen identisch sein.

Als Pigmente können insbesondere farbgebende Pigmente in Form von Metalloxiden hinzugesetzt werden, insbesondere Cobalt-Oxide/-Spinelle, Cobalt-Aluminium-Spinelle, Cobalt-Aluminium-Zink-Oxide, Cobalt-Aluminium-Silizium-Oxide, Cobalt-Titan-Spinelle, Cobalt-Chrom-Spinelle, Cobalt-Aluminium-Chrom-Oxide, Cobalt-Nickel-Mangan-Eisen-Chrom-Oxide/-Spinelle, Cobalt-Nickel-Zink-Titan-Aluminium-Oxide/- Spinelle, Chrom-Eisen-Nickel-Mangan-Oxide/-Spinelle, Cobalt-Eisen-Chrom-Oxide/-Spinelle, Nickel-Eisen-Chrom-Oxide/-Spinelle, Eisen-Mangan-Oxide/-Spinelle, Eisen-Oxide, Eisen-Chrom-Oxide, Eisen-Chrom-Zinn-Titan-Oxide, Kupfer-Chrom-Spinelle, Nickel-Chrom-Antimon-Titan-Oxide, Titan-Oxide, Zirkon-Silizium-Eisen-Oxide/-Spinelle.

Bevorzugt werden als Pigmente Absorptionspigmente, plättchen- oder stäbchenförmige Pigmente, sowie beschichtete Effektpigmente, z.B. auf Glimmerbasis verwendet. Ebenso kommen Pigmente wie Ruße, Graphit als auch Farbstoffe in Betracht.

Ebenso können die Schichten (Dekor- sowie gegebenenfalls Versiegelungsschichten) weitere Bestandteile wie Füllstoffe, bevorzugt nanoskalige Füllstoffe aufweisen. Als Füllstoffe kommen hierbei insbesondere $SiO_x$-Partikel, Aluminiumoxid-Partikel, pyrogene Kieselsäuren, Kalk-Natron-Partikel, Alkali-Aluminosilikat-Partikel, Polysiloxankugeln, Borosilikatglaskugeln und/oder Glashohlkugeln in Betracht.

Durch die Wahl der Dichte der Pigmente, deren Anteil an oder in der jeweiligen Farbe kann sichergestellt werden, dass Deepfarben zumindest zusammen mit der Versiegelungssicht oder zusammen mit einer Clearfarbe und der Versiegelungssicht blickdicht und Clearfarben zumindest in einem Teilbereich des visuell wahrnehmbaren Spektrums für die jeweilige Anwendung ausreichend transmittierend sind.

Derartige Beschichtungen sind sehr haltbar und temperaturbeständig und lassen sich je nach Wahl der Dekorpigmente in einer nahezu unbegrenzten Anzahl verschiedener optischer Anmutungen herstellen. Jedoch stellte gerade die Strukturierung solcher Beschichtungen eine Schwierigkeit dar, insbesondere, wenn in dieser ein hoher Pigmentanteil vorhanden ist, oder die einzelnen Pigmentpartikel relativ groß sind. Letzteres ist beispielsweise der Fall, wenn plättchenförmige Dekorpigmente eingesetzt werden, um Metallic- oder Glitzereffekte hervorzurufen.

Die Dekorpigmente und deren Menge in der Beschichtungszusammensetzung können so ausgewählt werden, dass bei der vorgesehenen Schichtdicke der Beschichtung deren Transmission im sichtbaren Spektralbereich kleiner als 5% ist. Gegebenenfalls kann diese niedrige Transmission auch durch eine mehrlagige Beschichtung erzielt werden.

Geeignete Beschichtungszusammensetzungen und daraus hergestellte Beschichtungen sind unter anderem aus der DE 10 2008 031 426 A1, sowie der DE 10 2008 031 428 A1 bekannt.

Es kann beispielsweise eine blickdichte Beschichtung hergestellt werden, indem in einem ersten Schritt die Dekorschicht mittels eines Sol-Gel-Verfahrens hergestellt wird, wobei die Schicht auf das Glas- oder GlaskeramikSubstrat aufgebracht und durch Einbrennen ausgehärtet wird, und in einem zweiten Schritt die Dekorschicht zum Schutz gegen thermische, chemische und mechanische Einwirkungen und, falls gewünscht, zur Erhöhung der optischen Dichte, mit einer Versiegelungsschicht abgedeckt wird, die ebenfalls mittels eines Sol-Gel-Verfahrens hergestellt ist, wobei für die Herstellung der Versiegelungssicht anorganische Dekorpigmente und Füllstoffe mit einem Sol vermischt werden und wobei die anorganischen Dekorpigmente plättchenförmige Pigment-Partikel und anorganische Festschmierstoff-Partikel umfassen können, die in einem Verhältnis im Bereich von 10:1 bis 1:1 Gew.-%, bevorzugt 5:1 bis 1:1 Gew.-% und besonders bevorzugt 3:1 bis 1,5:1 Gew.-% zugegeben werden, wobei dann die erzeugte Mischung auf das Glaskeramik-Substrat mit der ausgehärteten Dekorschicht aufgebracht und anschließend bei erhöhten Temperaturen ausgehärtet wird.

Die ausgehärtete Versiegelungsschicht kann die gleiche Zusammensetzung wie die ausgehärtete Dekorschicht aufweisen, mit dem Unterschied, dass das Metalloxid-Netzwerk der Versiegelungsschicht mehr organische Reste als das Metalloxid-Netzwerk der Dekorschicht enthält, bezogen auf die Anzahl der organischen Reste vorzugsweise mindestens 5 % mehr organische Reste als das Metalloxid-Netzwerk der Dekorschicht enthält. Unter einem Metalloxid-Netzwerk wird dabei auch ein oxidisches Netzwerk mit in elementarer Form halbleitenden Elementen verstanden (insbesondere also auch das bereits erwähnte $SiO_2$-Netzwerk).

Die Innenbeschichtung ist vorzugsweise eben und/der glatt ausgebildet. Eine homogene Beschichtung hat zum Vorteil, die Lesbarkeit der mit der Anzeigefläche dargestellten Informationen zu erhöhen.

Es kann beispielsweise eine transparente Glaskeramik (CERAN Cleartrans®) mit einer TiN-Beschichtung verwendet werden. Es kann beispielsweise auch Borofloat® eingesetzt werden. Das Kochfeld kann eine Farbkompensationsschicht umfassen, welche vorzugsweise als weitere Beschichtung des Glaskeramikelements ausgebildet ist. Es kommt insbesondere ein Color Compensation Filter (CCF) in Betracht.

Es kann auch ein Weißabgleich der Anzeigeeinrichtung vorgesehen sein, um eine Farbkompensation zu bewirken. Durch eine Farbkompensation kann in vorteilhafter Weise die Eigenfarbe des Substrates ausgeglichen werden.

Das Kochfeld kann außerdem eine elektrisch leitfähige Schicht umfassen, welche ausgebildet ist, eine Berührung der dem Außenbereich zugewandten Substrataußenseite durch den Benutzer zu detektieren. Die elektrisch leitfähige Schicht kann insbesondere Sensorzellen bilden, welche eine Touch-Bedienung durch den Benutzer ermöglichen.

Die elektrisch leitfähige Schicht kann als weitere Beschichtung des Glas- oder Glaskeramiksubstrats, insbesondere auf der Substratinnenseite, ausgebildet sein. Bevorzugt kann es sich hierbei um eine einlagige Schicht handeln.

Die elektrisch leitfähige Schicht kann alternativ oder zusätzlich auf der Anzeigefläche der Anzeigeeinrichtung und/oder der zumindest einen weiteren Anzeigefläche der weiteren Anzeigeeinrichtung angeordnet sein.

Die Anzeigeeinrichtung und/oder die weitere Anzeigeeinrichtung kann z.B. unmittelbar an der dem Innenbereich des Kochfelds oder Kochgeräts zugewandten Substratinnenseite angebracht sein. Hierbei kann die Anzeigeeinrichtung beabstandet zu der Substratinnenseite angeordnet sein.

In einer bevorzugten Ausführungsform der Erfindung weist das Glas- oder Glaskeramiksubstrat, welches auch als Forte Material ausgebildet sein kann, eine Dicke im Bereich von 0,1 bis 10 Millimeter, vorzugsweise im Bereich von 1 bis 5 Millimeter, besonders bevorzugt im Bereich von 2 bis 4 Millimeter auf.

Die Erfindung betrifft ferner ein Kochgerät, insbesondere ein Induktionskochgerät mit einem Kochfeld.

Im Folgenden wird die Erfindung anhand von Ausführungsbeispielen und unter Bezugnahme auf die Figuren näher erläutert, wobei gleiche und ähnliche Elemente teils mit gleichen Bezugszeichen versehen sind und die Merkmale der verschiedenen Ausführungsbeispiele miteinander kombiniert werden können.

Es zeigen:

Fig. 1      nach Lichtdurchtritt durch verschiedene Glaskeramikelemente mit unterschiedlichen Lichttransmissionsgraden ($\tau_{vis}$) resultierende Leuchtdichten zweier graphischer Anzeigeflächen mit Leuchtdichten von 200 cd/m$^2$ bzw. 400 cd/m$^2$,

Fig. 2A     schematisch in Seitenansicht eine Grauwertmesseinrichtung zur Bestimmung eines prozentualen Grauwerts einer Anzeigefläche einer Anzeigeeinrichtung im ausgeschalteten Zustand betrachtet durch ein Substrat hindurch ($G_1$) und eines prozentualen Grauwerts einer Innenbeschichtung des Substrats durch das Substrat hindurch ($G_2$),

Fig. 2B     schematisch in Aufsicht das Substrat und die Anzeigeeinrichtung aus Fig. 2A,

Fig. 3      spektraler Verlauf des Reintransmissionsgrads $\tau_i$ eines eingesetzten optischen Langpassfilters,

Fig. 4      ermittelte Grauwertdifferenzen $|G_1\text{-}G_2|$ für verschiedene Glas- oder Glaskeramiksubstrate (insb. Proben 1-18: schwarze Quadrate) mit einer ersten Innenbeschichtung und für eine erste Anzeigefläche aufgetragen gegen den Lichttransmissionsgrad ($\tau_{vis}$) der Glas- oder Glaskeramiksubstrate,

Fig. 5      ermittelte Grauwertdifferenzen $|G_1\text{-}G_2|$ für die verschiedenen Glas- oder Glaskeramiksubstrate (insb. Proben 1-18: schwarze Quadrate) mit einer zweiten Innenbeschichtung und für die erste Anzeigefläche aufgetragen gegen den Lichttransmissionsgrad ($\tau_{vis}$) der Glas- oder Glaskeramiksubstrate,

Fig. 6      ermittelte Grauwertdifferenzen $|G_1\text{-}G_2|$ für die verschiedenen Glas- oder Glaskeramiksubstrate (insb. Proben 1-18: schwarze Quadrate) mit der ersten Innenbeschichtung und für eine zweite Anzeigefläche aufgetragen gegen den Lichttransmissionsgrad ($\tau_{vis}$) der Glas- oder Glaskeramiksubstrate,

Fig. 7      ermittelte Grauwertdifferenzen $|G_1\text{-}G_2|$ für die verschiedenen Glas- oder Glaskeramiksubstrate (insb. Proben 1-18: schwarze Quadrate) mit der zweiten Innenbeschichtung und für die zweite Anzeigefläche aufgetragen gegen den Lichttransmissionsgrad ($\tau_{vis}$) der Glas- oder Glaskeramiksubstrate,

Fig. 8      ermittelte Grauwertdifferenzen $|G_1\text{-}G_2|$ für die verschiedenen Glas- oder Glaskeramiksubstrate (insb. Proben 1-18: schwarze Quadrate) mit der ersten Innenbeschichtung und für eine dritte Anzeigefläche aufgetragen gegen den Lichttransmissionsgrad ($\tau_{vis}$) der Glas- oder Glaskeramiksubstrate,

Fig. 9      ermittelte Grauwertdifferenzen $|G_1\text{-}G_2|$ für die verschiedenen Glas- oder Glaskeramiksubstrate (insb. Proben 1-18: schwarze Quadrate) mit der zweiten Innenbeschichtung und für die dritte Anzeigefläche aufgetragen gegen den Lichttransmissionsgrad ($\tau_{vis}$) der Glas- oder Glaskeramiksubstrate,

Fig. 10     ermittelte Chromazitätsdifferenzen $\Delta C^*$ für die verschiedenen Glas- oder Glaskeramiksubstrate (insb. Proben 1-18: schwarze Quadrate) mit der ersten Innenbeschichtung und für die erste Anzeigefläche aufgetragen gegen den Lichttransmissionsgrad ($\tau_{vis}$) der Glas- oder Glaskeramiksubstrate,

Fig. 11     ermittelte Chromazitätsdifferenzen $\Delta C^*$ für die verschiedenen Glas- oder Glaskeramiksubstrate (insb. Proben 1-18: schwarze Quadrate) mit der zweiten Innenbeschichtung und für die erste Anzeigefläche aufgetragen gegen den Lichttransmissionsgrad ($\tau_{vis}$) der Glas- oder Glaskeramiksubstrate,

Fig. 12     ermittelte Chromazitätsdifferenzen $\Delta C^*$ für die verschiedenen Glas- oder Glaskeramiksubstrate (insb. Proben 1-18: schwarze Quadrate) mit der ersten Innenbeschichtung und für die zweite Anzeigefläche aufge-

tragen gegen den Lichttransmissionsgrad ($\tau_{vis}$) der Glas- oder Glaskeramiksubstrate,

Fig. 13     ermittelte Chromazitätsdifferenzen $\Delta C^*$ für die verschiedenen Glas- oder Glaskeramiksubstrate (insb. Proben 1-18: schwarze Quadrate) mit der zweiten Innenbeschichtung und für die zweite Anzeigefläche aufgetragen gegen den Lichttransmissionsgrad ($\tau_{vis}$) der Glas- oder Glaskeramiksubstrate,

Fig. 14     ermittelte Chromazitätsdifferenzen $\Delta C^*$ für die verschiedenen Glas- oder Glaskeramiksubstrate (insb. Proben 1-18: schwarze Quadrate) mit der ersten Innenbeschichtung und für die dritte Anzeigefläche aufgetragen gegen den Lichttransmissionsgrad ($\tau_{vis}$) der Glas- oder Glaskeramiksubstrate,

Fig. 15     ermittelte Chromazitätsdifferenzen $\Delta C^*$ für die verschiedenen Glas- oder Glaskeramiksubstrate (insb. Proben 1-18: schwarze Quadrate) mit der zweiten Innenbeschichtung und für die dritte Anzeigefläche aufgetragen gegen den Lichttransmissionsgrad ($\tau_{vis}$) der Glas- oder Glaskeramiksubstrate,

Fig. 16A    ermittelte Grauwertdifferenzen $|G_1$-$G_2|$ (Quadrate) und Chromazitätsdifferenzen $\Delta C^*$ (Dreiecke) für verschiedene Glas- oder Glaskeramiksubstrate (insb. Proben 1-18) mit einer ersten Innenbeschichtung und für eine erste Anzeigefläche aufgetragen gegen statistisch ermittelte Schulnoten für den Deadfront-Effekt,

Fig. 16B    ermittelte Grauwertdifferenzen $|G_1$-$G_2|$ (Quadrate) und Chromazitätsdifferenzen $\Delta C^*$ (Dreiecke) für verschiedene Glas- oder Glaskeramiksubstrate (insb. Proben 1-18) mit einer zweiten Innenbeschichtung und für die erste Anzeigefläche aufgetragen gegen statistisch ermittelte Schulnoten für den Deadfront-Effekt,

Fig. 16C    ermittelte Grauwertdifferenzen $|G_1$-$G_2|$ (Quadrate) und Chromazitätsdifferenzen $\Delta C^*$ (Dreiecke) für verschiedene Glas- oder Glaskeramiksubstrate (insb. Proben 1-18) mit der ersten Innenbeschichtung und für eine zweite Anzeigefläche aufgetragen gegen statistisch ermittelte Schulnoten für den Deadfront-Effekt,

Fig. 16D    ermittelte Grauwertdifferenzen $|G_1$-$G_2|$ (Quadrate) und Chromazitätsdifferenzen $\Delta C^*$ (Dreiecke) für verschiedene Glas- oder Glaskeramiksubstrate (insb. Proben 1-18) mit der zweiten Innenbeschichtung und für die zweite Anzeigefläche aufgetragen gegen statistisch ermittelte Schulnoten für den Deadfront-Effekt,

Fig. 17A    gemessene spektrale Transmissionsgrade eines Glas- bzw. Glaskeramiksubstrats der Probe 1,

Fig. 17B    gemessene spektrale Transmissionsgrade eines Glas- bzw. Glaskeramiksubstrats der Probe 3,

Fig. 17C    gemessene spektrale Transmissionsgrade eines Glas- bzw. Glaskeramiksubstrats der Probe 4,

Fig. 17D    gemessene spektrale Transmissionsgrade eines Glas- bzw. Glaskeramiksubstrats der Probe 5,

Fig. 17E    gemessene spektrale Transmissionsgrade eines Glas- bzw. Glaskeramiksubstrats der Probe 6,

Fig. 17F    gemessene spektrale Transmissionsgrade eines Glas- bzw. Glaskeramiksubstrats der Probe 7,

Fig. 17G    gemessene spektrale Transmissionsgrade eines Glas- bzw. Glaskeramiksubstrats der Probe 12,

Fig. 17H    gemessene spektrale Transmissionsgrade eines Glas- bzw. Glaskeramiksubstrats der Probe 13,

Fig. 17I     gemessene spektrale Transmissionsgrade eines Glas- bzw. Glaskeramiksubstrats der Probe 14,

Fig. 17J    gemessene spektrale Transmissionsgrade eines Glas- bzw. Glaskeramiksubstrats der Probe 15,

Fig. 17K    gemessene spektrale Transmissionsgrade eines Glas- bzw. Glaskeramiksubstrats der Probe 16,

Fig. 17L    gemessene spektrale Transmissionsgrade eines Glas- bzw. Glaskeramiksubstrats der Probe 17,

Fig. 17M    gemessene spektrale Transmissionsgrade eines Glas- bzw. Glaskeramiksubstrats der Probe 18,

Fig. 17N    gemessene spektrale Transmissionsgrade eines Glas- bzw. Glaskeramiksubstrats der Probe 21,

Fig. 18    gemessene spektrale Transmissionsgrade zweier Glaskeramiksubstrate mit bzw. ohne Farbkorrektur,

Fig. 19    gemessene spektrale Transmissionsgrade zweier Glaskeramiksubstrate mit bzw. ohne Farbkorrektur,

Fig. 20    schematisch ein Kochfeld,

Fig. 21    schematisch in Seitenansicht eine Grauwertmesseinrichtung zur Bestimmung eines prozentualen Grauwerts einer Anzeigefläche einer Anzeigeeinrichtung im ausgeschalteten Zustand betrachtet durch ein Substrat hindurch ($G_1$) und eines prozentualen Grauwerts einer an der Unterseite des Substrats oder in der Nähe der Unterseite des Substrats angeordneten Folie oder eines Trägermaterials, welche eine Aussparung zur Definition des Anzeigefensters aufweisen, durch das Substrat hindurch ($G_2$),

Fig. 22    schematisch in Seitenansicht eine Grauwertmesseinrichtung zur Bestimmung eines prozentualen Grauwerts einer Anzeigefläche einer Anzeigeeinrichtung im ausgeschalteten Zustand betrachtet durch ein Substrat hindurch ($G_1$) und eines prozentualen Grauwerts einer an der Unterseite des Substrats oder in der Nähe der Unterseite des Substrats angeordneten Folie oder eines Trägermaterials, welche eine Aufhellung zur Definition des Anzeigefensters aufweisen, durch das Substrat hindurch ($G_2$),

Fig. 23    schematisch in Seitenansicht eine Grauwertmesseinrichtung zur Bestimmung eines prozentualen Grauwerts einer Anzeigefläche einer Anzeigeeinrichtung im ausgeschalteten Zustand betrachtet durch ein Substrat hindurch ($G_1$) und eines prozentualen Grauwerts ($G_2$) einer an der Oberseite des Substrats oder in der Nähe der Oberseite des Substrats angeordneten Folie oder eines Trägermaterials, welche eine Aussparung zur Definition des Anzeigefensters aufweisen,

Fig. 24    schematisch in Seitenansicht eine Grauwertmesseinrichtung zur Bestimmung eines prozentualen Grauwerts einer Anzeigefläche einer Anzeigeeinrichtung im ausgeschalteten Zustand betrachtet durch ein Substrat hindurch ($G_1$) und eines prozentualen Grauwerts ($G_2$) einer an der Oberseite des Substrats oder in der Nähe der Oberseite des Substrats angeordneten Folie oder eines Trägermaterials, welche eine Aufhellung zur Definition des Anzeigefensters aufweisen,

Fig. 25    schematisch in Seitenansicht eine Grauwertmesseinrichtung zur Bestimmung eines prozentualen Grauwerts einer Anzeigefläche einer Anzeigeeinrichtung im ausgeschalteten Zustand betrachtet durch ein Anzeigefenster des Substrat hindurch ($G_1$), welches durch einen Aufhellung des Glas- oder Glaskeramiksubstrats definiert ist, und eines prozentualen Grauwerts ($G_2$) des Glas- oder Glaskeramiksubstrats außerhalb des Anzeigefensters.

Bei der nachfolgenden Beschreibung der bevorzugten Ausführungsformen sind um der Klarheit willen und für ein besseres Verständnis die Figuren nicht maßstabsgerecht dargestellt. Um der Kürze willen wird ferner im Rahmen der vorliegenden Offenbarung das Glas- oder Glaskeramiksubstrat auch abkürzend lediglich als Substrat bezeichnet.

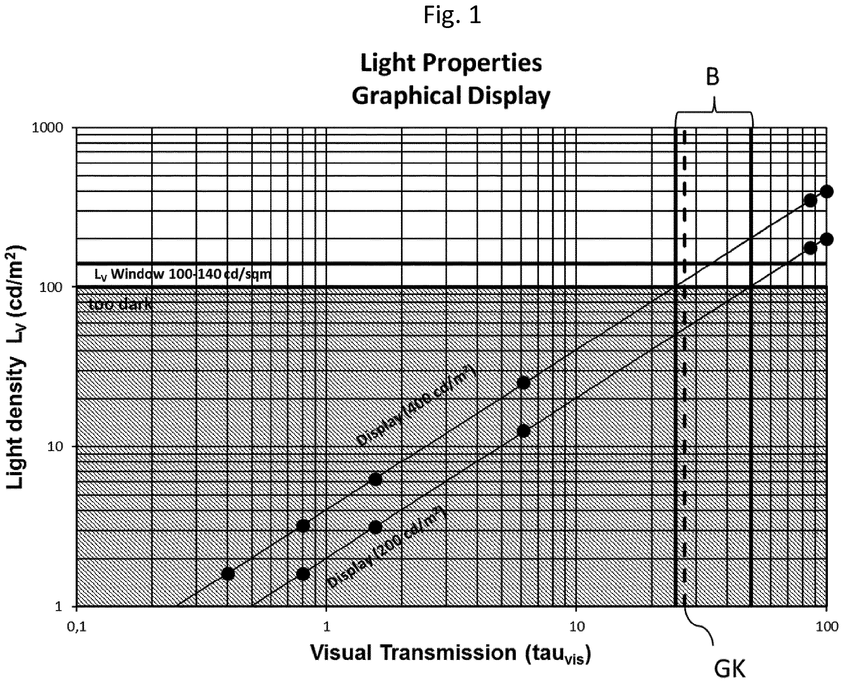

Fig. 1 zeigt für zwei graphische Displays welche weißes Licht mit 200 cd/m$^2$ bzw. 400 cd/m$^2$ abgeben, resultierende Leuchtdichten (Kreise in der Abbildung) nachdem das abgegebene Licht jeweils durch verschiedene Glaskeramiksubstrate aus dem Stand der Technik mit bestimmten Lichttransmissionsgraden hindurchgetreten ist, d.h. in den Außenbereich gelangt ist. Ferner gezeigt sind die Leuchtdichten der Displays als solche, d.h. ohne Lichtdurchtritt durch ein zusätzliches Substrat und zudem jeweils ein linearer Fit.

Für die Glaskeramiksubstrate aus dem Stand der Technik wird im Außenbereich lediglich eine Leuchtdichte unterhalb von 30 cd/m$^2$ erreicht. Wünschenswert wäre hingegen eine Leuchtdichte beispielsweise im Bereich von 100 cd/m$^2$ bis 140 cd/m$^2$, ggf. vorzugsweise noch höher.

Geht man davon aus, dass sich die Leuchtdichte im Außenbereich als Produkt des Lichttransmissionsgrades der Glaskeramik und der Leuchtdichte der Anzeigefläche ergibt, kann beispielsweise ein wünschenswerter Bereich B des Lichttransmissionsgrads von 15-50 % angegeben werden. Ein erfindungsgemäßes Glaskeramiksubstrat GK hat beispielsweise einen Lichttransmissionsgrad in diesem Bereich.

Insbesondere können aus der erwünschten Leuchtdichte im Außenbereich von mindestens 100 cd/m$^2$ (Nits) beispielhaft folgende Abschätzungen für den Lichttransmissionsgrad getroffen werden, wobei insbesondere angenommen werden kann, dass es sich um weißes Licht handelt.

a) Das Display hat eine Leuchtdichte von mindestens 200 cd/m$^2$. Für das Glas- oder Glaskeramiksubstrat ist ein Lichttransmissionsgrad von mindestens 50% vorgesehen.

b) Das Display hat eine Leuchtdichte von mindestens 250 cd/m². Für das Glas- oder Glaskeramiksubstrat ist ein Lichttransmissionsgrad von mindestens 45% vorgesehen.

c) Das Display hat eine Leuchtdichte von mindestens 280 cd/m². Für das Glas- oder Glaskeramiksubstrat ist ein Lichttransmissionsgrad von mindestens 45% vorgesehen.

d) Das Display hat eine Leuchtdichte von mindestens 400 cd/m². Für das Glas- oder Glaskeramiksubstrat ist ein Lichttransmissionsgrad von mindestens 25% vorgesehen.

e) Das Display hat eine Leuchtdichte von mindestens 800 cd/m². Für das Glas- oder Glaskeramiksubstrat ist ein Lichttransmissionsgrad von mindestens 12,5%, insbesondere mindestens 12% vorgesehen.

f) Das Display hat eine Leuchtdichte von mindestens 1000 cd/m². Für das Glas- oder Glaskeramiksubstrat ist ein Lichttransmissionsgrad von mindestens 10%, insbesondere mindestens 9% vorgesehen.

g) Das Display hat eine Leuchtdichte von mindestens 1200 cd/m². Für das Glas- oder Glaskeramiksubstrat ist ein Lichttransmissionsgrad von mindestens 8,3%, insbesondere mindestens 7% vorgesehen.

h) Das Display hat eine Leuchtdichte von mindestens 1500 cd/m². Für das Glas- oder Glaskeramiksubstrat ist ein Lichttransmissionsgrad von mindestens 6,7%, insbesondere mindestens 5% vorgesehen.

i) Das Display hat eine Leuchtdichte von mindestens 2000 cd/m². Für das Glas- oder Glaskeramiksubstrat ist ein Lichttransmissionsgrad von mindestens 5% vorgesehen.

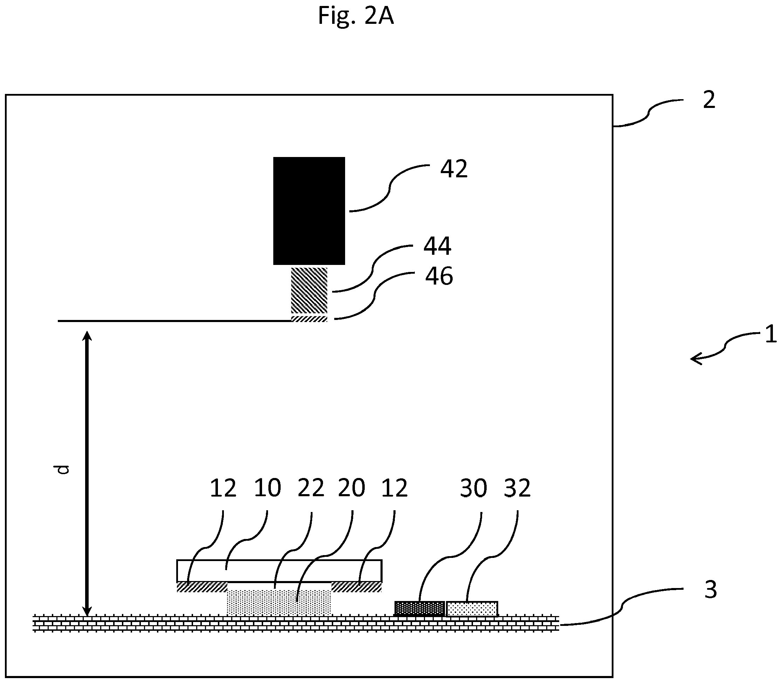

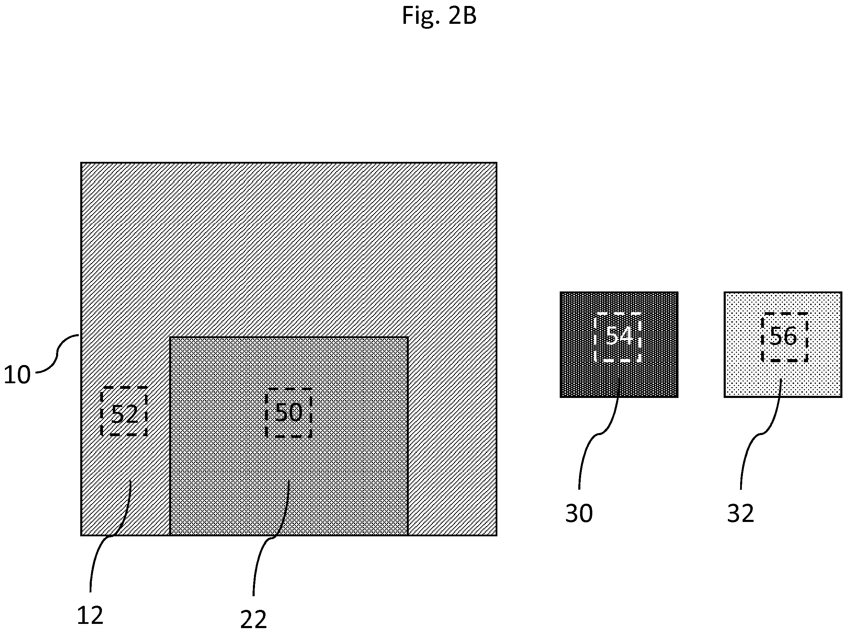

Die Fig. 2A und 2B zeigen eine Grauwertmesseinrichtung 1 zur Bestimmung prozentualer Grauwerte, insbesondere um Graustufenunterschiede zwischen verschiedenen Bereichen bestimmen zu können. Der Messaufbau befindet sich in einer Dunkelkammer 2, um Fremdlicht ausschließen zu können.

In der Dunkelkammer 2 befindet sich auf einer Auflage 3 eine als graphisches Display ausgebildete Anzeigeeinrichtung 20 mit einer lichtemittierenden Anzeigefläche 22. Oberhalb des Displays befindet sich ein Glas- oder Glaskeramiksubstrat 10, welches unterseitig teilweise mit einer Innenbeschichtung 12 versehen ist. Das Substrat überdeckt das Display zumindest partiell.

Ferner sind zwei RAL-Karten 30, 32 in der Dunkelkammer 2 platziert. Die RAL-Karte 30 hat die RAL-Farbe 9017 (verkehrsschwarz) und die RAL-Karte 32 hat die RAL-Farbe 7012 (basaltgrau).

In einem Abstand d, welcher beispielsweise 606 Millimeter beträgt, ist eine Kamera 42 mit einem Objektiv 44 angeordnet. Optional kann vor dem Objektiv ein Filter 46 angebracht sein.

Bei der verwendeten Messvorrichtung kommen folgende Komponenten zum Einsatz:

Die Kamera 42 ist ausgebildet als eine acA1920 - 40µm / Graustufenkamera der Basler AG und das Objektiv 44 ist ausgebildet als LM35HC Megapixel der Kowa GmbH.

Insbesondere wurden folgende Einstellungen der Kamera eingesetzt, welche von dem mit der genannten Graustufenkamera befassten Fachmann aus der zugehörigen Protokolldatei entnommen sind:

| | |
|---|---|
| Width | 1920 |
| Height | 1200 |
| OffsetX | 8 |
| OffsetY | 8 |
| CenterX | 0 |
| CenterY | 0 |
| BinningHorizontal | 1 |
| BinningVertical | 1 |
| ReverseX | 0 |
| ReverseY | 0 |
| PixelFormat | Mono8 |
| TestImageSelector | Off |
| GainAuto | Off |
| GainSelector | All |
| Gain | 0.00000 |

(fortgesetzt)

| | |
|---|---|
| GainSelector | All |
| BlackLevelSelector | All |
| BlackLevel | 0.00000 |
| BlackLevelSelector | All |
| Gamma | 1.00000 |
| RemoveParameterLimitSelector | Gain |
| RemoveParameterLimit | 0 |
| RemoveParameterLimitSelector | Gain |
| ExposureAuto | Off |
| ExposureMode | Timed |
| ExposureTime | 550000.0 |
| AcquisitionBurstFrameCount | 1 |
| TriggerSelector | FrameBurstStart |
| TriggerMode | Off |
| TriggerSelector | FrameStart |
| TriggerMode | Off |
| TriggerSelector | FrameStart |
| TriggerSelector | FrameBurstStart |
| TriggerSource | Line1 |
| TriggerSelector | FrameStart |
| TriggerSource | Line1 |
| TriggerSelector | FrameStart |
| TriggerSelector | FrameBurstStart |
| TriggerActivation | RisingEdge |
| TriggerSelector | FrameStart |
| TriggerActivation | RisingEdge |
| TriggerSelector | FrameStart |
| TriggerDelay | 0 |
| AcquisitionFrameRateEnable | 0 |
| AcquisitionFrameRate | 100.00000 |
| DeviceLinkSelector | 0 |
| DeviceLinkThroughputLimit | 360000000 |
| DeviceLinkSelector | 0 |
| DeviceLinkSelector | 0 |
| DeviceLinkThroughputLimitMode | On |
| DeviceLinkSelector | 0 |
| ChunkSelector | Gain |
| ChunkEnable | 0 |
| ChunkSelector | ExposureTime |
| ChunkEnable | 0 |
| ChunkSelector | Timestamp |
| ChunkEnable | 0 |
| ChunkSelector | LineStatusAll |
| ChunkEnable | 0 |
| ChunkSelector | CounterValue |
| ChunkEnable | 0 |
| ChunkSelector | PayloadCRC16 |
| ChunkEnable | 0 |
| ChunkSelector | Timestamp |
| ChunkModeActive | 0 |
| AutoTargetBrightness | 0.30196 |

(fortgesetzt)

| AutoFunctionProfile | MinimizeGain |
|---|---|
| AutoGainLowerLimit | 0.00000 |
| AutoGainUpperLimit | 36.00000 |
| AutoExposureTimeLowerLimit | 76.0 |
| AutoExposureTimeUpperLimit | 1000000.0 |

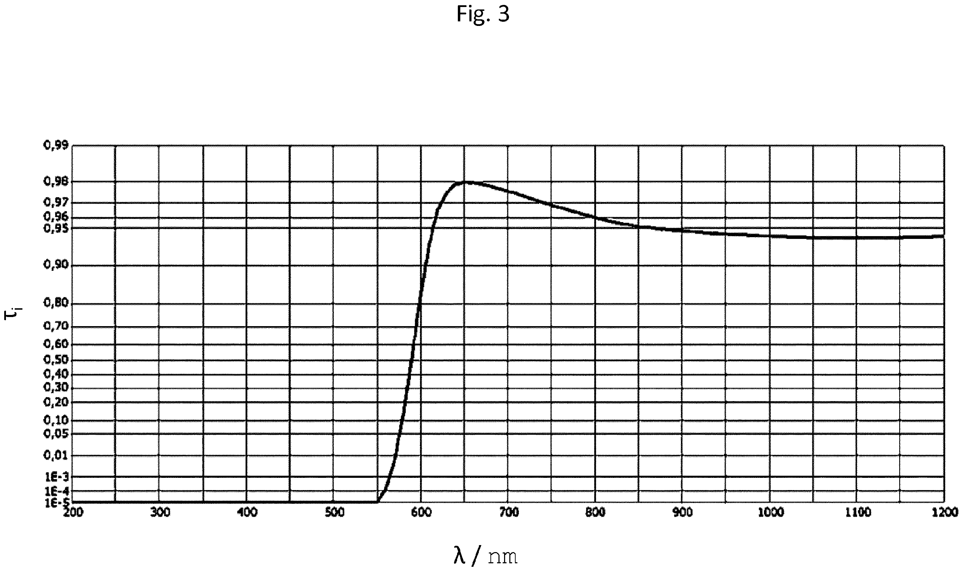

Der optionale Filter 46 ist ausgebildet als optischer Langpassfilter des Typs "OG590" mit Kante bei 590nm ("Orangefilter") der SCHOTT AG. Es hat sich herausgestellt, dass ein dem Objektiv 44 vorgesetzter Langpassfilter Graustufenkontraste erhöhen kann. Der eingesetzte optische Filter zeichnet sich durch den in Fig. 3 dargestellten Spektralverlauf und durch die in den folgenden Tabellen angegeben Daten aus:

| Reflexionsfaktor | |
|---|---|
| $P_d$ | 0.921 |

| Dichte | |
|---|---|
| $p \ [g/cm^3]$ | 2,56 |

| Referenzdick | |
|---|---|
| $d \ [mm]$ | 3 |

| Blasenhaltigkeit | |
|---|---|
| Blasenklasse | 3 |

| Spektrale Garantiewerte |
|---|
| $\lambda_O \ (\tau_1 = 0.5) \ [nm] = 590 \pm 6$ |
| $\lambda \ (\tau_{i,U} = 0.00001) \ [nm] = 510$ |
| $\lambda_D \ (\tau_{L,L} = 0.93) \ [nm] = 660$ |

| Chemische Haltbarkeit | |
|---|---|
| FR Klasse | 0 |
| SR Klasse | 1.0 |
| AR Klasse | 1.0 |

| Transformationstemperatur | |
|---|---|
| $Tg \ [°C]$ | 506 |

| Brechzahl n | |
|---|---|
| $n_d$ (587.6 nm) = 1.510 | |
| ns (852.1 nm) = 1.510 | |
| $n_t$ (1014.0 nm) = 1.500 | |

| Wärmeausdehnung | |
|---|---|
| $\alpha_{-3D+70°C}$ [$10^{-6}$ /K] | 7,9 |
| $\alpha_{20/300°C}$ [$10^{-6}$/K] | 9,0 |
| $\alpha_{20/200°C}$ [$10^{--6}$/K] | |

| Temperaturkoeffizient | |
|---|---|
| $T_K$ [nm/°C] | 0,13 |

| Farbmetrische Auswertung | | | | | | | | | | | |
|---|---|---|---|---|---|---|---|---|---|---|---|
| Lichtart | A (Planck T = 2856 K) | | | Lichtart | Planck T = 3200 K | | | Lichtart | D65 ($T_c$ = 6504 K) | | |
| d [mm] | 1 | 2 | 3 | d [mm] | 1 | 2 | 3 | d [mm] | 1 | 2 | 3 |
| x | 0,639 | 0,662 | 0,669 | x | 0,635 | 0,660 | 0,667 | x | 0,610 | 0,652 | 0,661 |
| y | 0,354 | 0,338 | 0,331 | y | 0,356 | 0,340 | 0,332 | y | 0,361 | 0,347 | 0,338 |
| Y | 39 | 33 | 30 | Y | 37 | 31 | 28 | Y | 27 | 22 | 19 |
| $\lambda_d$ [nm] | 605 | 609 | 611 | $\lambda_d$ [nm] | 604 | 608 | 611 | $\lambda_d$ [nm] | 602 | 606 | 609 |
| $P_e$ | 0,96 | 1,00 | 1,00 | $P_e$ | 0,95 | 1,00 | 1,00 | $P_e$ | 0,92 | 1,00 | 1,00 |

| λ [nm] | $\tau_i$ | λ [nm] | $\tau_i$ | λ [nm] | $\tau_i$ | λ [nm] | $\tau_i$ | λ [nm] | $\tau_i$ | λ [nm] | $\tau_i$ |
|---|---|---|---|---|---|---|---|---|---|---|---|
| 200 | $< 10^{-5}$ | 500 | $< 10^{-5}$ | 800 | 0,960 | 1100 | 0,941 | 2200 | 0,933 | 3700 | 0,151 |
| 210 | $< 10^{-5}$ | 510 | $< 10^{-5}$ | 810 | 0,958 | 1110 | 0,941 | 2250 | 0,929 | 3750 | 0,156 |
| 220 | $< 10^{-5}$ | 520 | $< 10^{-5}$ | 820 | 0,957 | 1120 | 0,941 | 2300 | 0,932 | 3800 | 0,162 |
| 230 | $< 10^{-5}$ | 530 | $< 10^{-5}$ | 830 | 0,955 | 1130 | 0,941 | 2350 | 0,931 | 3850 | 0,170 |
| 240 | $< 10^{-5}$ | 540 | $< 10^{-5}$ | 840 | 0,954 | 1140 | 0,941 | 2400 | 0,927 | 3900 | 0,176 |
| 250 | $< 10^{-5}$ | 550 | $1,1 \cdot 10^{-5}$ | 850 | 0,952 | 1150 | 0,941 | 2450 | 0,921 | 3950 | 0,181 |
| 260 | $< 10^{-5}$ | 560 | $1,3 \cdot 10^{-4}$ | 860 | 0,951 | 1160 | 0,941 | 2500 | 0,912 | 4000 | 0,179 |
| 270 | $< 10^{-5}$ | 570 | $5,9 \cdot 10^{-3}$ | 870 | 0,950 | 1170 | 0,942 | 2550 | 0,902 | 4050 | 0,168 |
| 280 | $< 10^{-5}$ | 580 | 0,121 | 880 | 0,950 | 1180 | 0,942 | 2600 | 0,899 | 4100 | 0,148 |
| 290 | $< 10^{-5}$ | 590 | 0,515 | 890 | 0,949 | 1190 | 0,942 | 2650 | 0,892 | 4150 | 0,125 |
| 300 | $< 10^{-5}$ | 600 | 0,823 | 900 | 0,948 | 1200 | 0,942 | 2700 | 0,834 | 4200 | 0,101 |
| 310 | $< 10^{-5}$ | 610 | 0,933 | 910 | 0,947 | 1250 | 0,943 | 2750 | 0,434 | 4250 | $7,7 \cdot 10^{-2}$ |
| 320 | $< 10^{-5}$ | 620 | 0,966 | 920 | 0,947 | 1300 | 0,946 | 2800 | 0,339 | 4300 | $5,7 \cdot 10^{-2}$ |
| 330 | $< 10^{-5}$ | 630 | 0,975 | 930 | 0,946 | 1350 | 0,949 | 2850 | 0,338 | 4350 | $3,9 \cdot 10^{-2}$ |
| 340 | $< 10^{-5}$ | 640 | 0,979 | 940 | 0,945 | 1400 | 0,949 | 2900 | 0,347 | 4400 | $2,2 \cdot 10^{-2}$ |
| 350 | $< 10^{-5}$ | 650 | 0,980 | 950 | 0,945 | 1450 | 0,955 | 2950 | 0,352 | 4450 | $1,0 \cdot 10^{-2}$ |
| 360 | $< 10^{-5}$ | 660 | 0,980 | 960 | 0,944 | 1500 | 0,959 | 3000 | 0,345 | 4500 | $4,7 \cdot 10^{-3}$ |
| 370 | $< 10^{-5}$ | 670 | 0,979 | 970 | 0,944 | 1550 | 0,963 | 3050 | 0,325 | 4550 | $1,7 \cdot 10^{-3}$ |
| 380 | $< 10^{-5}$ | 680 | 0,978 | 980 | 0,943 | 1600 | 0,966 | 3100 | 0,297 | 4600 | $6,6 \cdot 10^{-4}$ |
| 390 | $< 10^{-5}$ | 690 | 0,977 | 990 | 0,943 | 1650 | 0,968 | 3150 | 0,265 | 4650 | $2,5 \cdot 10^{-4}$ |
| 400 | $< 10^{-5}$ | 700 | 0,976 | 1000 | 0,943 | 1700 | 0,969 | 3200 | 0,232 | 4700 | $1,1 \cdot 10^{-4}$ |
| 410 | $< 10^{-5}$ | 710 | 0,975 | 1010 | 0,942 | 1750 | 0,968 | 3250 | 0,208 | 4750 | $5,7 \cdot 10^{-5}$ |
| 420 | $< 10^{-5}$ | 720 | 0,973 | 1020 | 0,942 | 1800 | 0,966 | 3300 | 0,190 | 4800 | $3,2 \cdot 10^{-5}$ |
| 430 | $< 10^{-5}$ | 730 | 0,972 | 1030 | 0,942 | 1850 | 0,964 | 3350 | 0,176 | 4850 | $1,8 \cdot 10^{-5}$ |
| 440 | $< 10^{-5}$ | 740 | 0,970 | 1040 | 0,941 | 1900 | 0,962 | 3400 | 0,164 | 4900 | $< 10^{-5}$ |
| 450 | $< 10^{-5}$ | 750 | 0,969 | 1050 | 0,941 | 1950 | 0,960 | 3450 | 0,157 | 4950 | $< 10^{-5}$ |
| 460 | $< 10^{-5}$ | 760 | 0,967 | 1060 | 0,941 | 2000 | 0,958 | 3500 | 0,153 | 5000 | $< 10^{-5}$ |
| 470 | $< 10^{-5}$ | 770 | 0,965 | 1070 | 0,941 | 2050 | 0,955 | 3550 | 0,149 | 5050 | $< 10^{-5}$ |
| 480 | $< 10^{-5}$ | 780 | 0,963 | 1080 | 0,941 | 2100 | 0,952 | 3600 | 0,147 | 5100 | $< 10^{-5}$ |
| 490 | $< 10^{-5}$ | 790 | 0,962 | 1090 | 0,941 | 2150 | 0,948 | 3650 | 0,148 | 5150 | $< 10^{-5}$ |

In der Dunkelkammer 1 befinden sich zudem LED-Spots der OSRAM Licht AG mit Farbtemperatur 4000K, EAN: 4052899944282 (nicht eingezeichnet). Die LED-Spots sind so eingestellt, dass auf dem Glas- oder Glaskeramiksubstrat 10 eine Helligkeit von 1200 Lux herrscht. Generell kann unabhängig vom jeweiligen Leuchtmittel, soweit dieses eine für Haushalte übliche Farbtemperatur und/oder spektrale Intensitätsverteilung aufweist, auch eine andere Lichtquelle, wie beispielsweise ein Schwarzkörperstrahler, insbesondere eine handelsübliche Halogenlichtquelle, verwendet werden, soweit diese eine Helligkeit von etwa 1200 Lux erzeugen. Hiermit wird eine Beleuchtungssituation erzielt, die für Kochfelder typisch ist. Hinzuweisen ist darauf, dass die mittels der Grauwertmesseinrichtung bestimmten Messwerte von der Helligkeit im Wesentlichen unabhängig sind, so dass auch eine andere Beleuchtung vorgesehen sein kann.

Für die Messung wird das Beleuchtungssystem eingeschaltet und die Dunkelkammer geschlossen. Mit der Kamera 42 wird ein Graustufenbild der Situation aufgenommen. Mit anderen Worten wird mittels der Grauwertmesseinrichtung 1 ein Graustufenbild erzeugt, welches zumindest folgendes abbildet: Die Anzeigefläche 22 der Anzeigeeinrichtung 20 im ausgeschalteten Zustand durch das Glas- oder Glaskeramiksubstrat 10 hindurch betrachtet, die Innenbeschichtung 12 des Glas- oder Glaskeramiksubstrats 10 durch das Glas- oder Glaskeramiksubstrat 10 hindurch betrachtet, die RAL-Karte 30 mit RAL-Farbe 9017 und die RAL-Karte 32 mit RAL-Farbe 7012.

Basierend auf dem erzeugten Graustufenbild stellt die Grauwertmesseinrichtung 1 einen Messwert $M_1$ bereit, welcher der Anzeigefläche 22 der Anzeigeeinrichtung 20 im ausgeschalteten Zustand durch das Glas- oder Glaskeramiksubstrat hindurch betrachtet entspricht.

Ferner stellt die Grauwertmesseinrichtung 1 einen Messwert $M_2$ bereit, welcher der Innenbeschichtung 12 des Glas- oder Glaskeramiksubstrats 10 durch das Glas- oder Glaskeramiksubstrat 10 hindurch betrachtet entspricht.

Bei weiteren Ausführungsformen entspricht der Messwert $M_2$ einem auf der Innenseite oder in der Nähe der Innenseite des Glas- oder Glaskeramiksubstrats 10 angebrachten Trägersubstrat 112 oder einer auf der Innenseite oder in der Nähe der Innenseite des Glas- oder Glaskeramiksubstrats angebrachten Folie 112 (insbesondere bei Betrachtung durch das Glas- oder Glaskeramiksubstrat hindurch) und ist ebenfalls mittels der Grauwertmesseinrichtung 1 gemessen.

Bei nochmals weiteren Ausführungsformen entspricht der Messwert $M_2$ einer Außenbeschichtung 113, einem auf der Außenseite oder in der Nähe der Außenseite des Glas- oder Glaskeramiksubstrats 10 angebrachten Trägersubstrat 113 oder einer auf der Außenseite oder in der Nähe der Außenseite des Glas- oder Glaskeramiksubstrats 10 angebrachten Folie 113 (insbesondere bei direkter Betrachtung und nicht durch das Glas- oder Glaskeramiksubstrat 10 hindurch gesehen) und ist ebenfalls mittels der Grauwertmesseinrichtung 1 gemessen.

Darüber hinaus stellt die Grauwertmesseinrichtung 1 zwei weitere Messwerte bereit, welche den RAL-Karten 30 bzw. 32 entsprechen.

Bei der verwendeten Grauwertmesseinrichtung wird das Graustufenbild mit Hilfe der Bildauswertungssoftware Halcon SDK Industry 12 der MVTec Software GmbH ausgewertet. Es hat sich gezeigt, dass die Messung unabhängig von den Belichtungsbedingungen und der Helligkeit der Beleuchtung ist, vorausgesetzt das Bild ist nicht unter- oder überbelichtet. Über eine Auswerteroutine in der Software können auf dem Bild verteilt diverse Messfenster, insbesondere die in Fig. 2B gezeigten Messfenster 50, 52, 54, 56 auf ihre Graustufen hin ausgewertet werden. In jedem Messfenster kann der Mittelwert der Grauwerte aller Pixel über die Messfläche inklusive der Standardabweichung gemessen und festgehalten werden. Mit anderen Worten können die Messwerte $M_1$, $M_2$ und die Messwerte der RAL-Karten als Mittelwerte über Messbereiche gebildet sein, wobei die Messbereiche jeweils mindestens eine Fläche von 0,2 cm$^2$, vorzugsweise 0,9 cm$^2$ aufweisen.

Basierend auf den gemessenen Messwerten $M_1$, $M_2$ und den Messwerten der beiden RAL-Karten, welche jeweils absolute Werte darstellen, werden prozentuale Grauwerte $G_1$ und $G_2$ berechnet. Mit anderen Worten, werden relative Kontraste in Prozent berechnet, um Messungen vergleichbar zu machen.

Dazu wird eine lineare Funktion G dadurch definiert, dass diese lineare Funktion dem Messwert, welcher der RAL-Karte 30 mit RAL-Farbe 9017 entspricht, einen prozentualen Grauwert von 20 % zuordnet und dem Messwert, welcher der RAL-Karte 32 mit RAL-Farbe 7012 entspricht prozentualen Grauwert von 90 % zuordnet. Mit anderen Worten werden die Messwerte der RAL-Karten 9017 als 20% und 7012 als 90% referenziert, worüber eine lineare Umrechnung für alle gemessene Grauwerte definiert wird.

Mit der linearen Funktion G=G(M), welche absolute Messwerte in prozentuale Grauwerte umrechnet, werden die prozentualen Grauwerte $G_1$ und $G_2$ berechnet als $G_1=G(M_1)$ und $G_2=G(M_2)$.

Optional können in der Dunkelkammer auch zusätzlich weitere RAL-Karten vorgesehen sein, beispielsweise mit RAL-Farbe 9003 (signalweiss), RAL-Farbe 9006 (weissaluminium) und/oder RAL-Farbe 7038 (achatgrau). Abweichend von der Darstellung in den Fig. 2 und 3 können die RAL-Karten auch auf oder unmittelbar neben dem Display platziert sein. Die RAL-Karten können ferner auch von dem Glas- oder Glaskeramiksubstrat 10 zumindest partiell überdeckt sein.

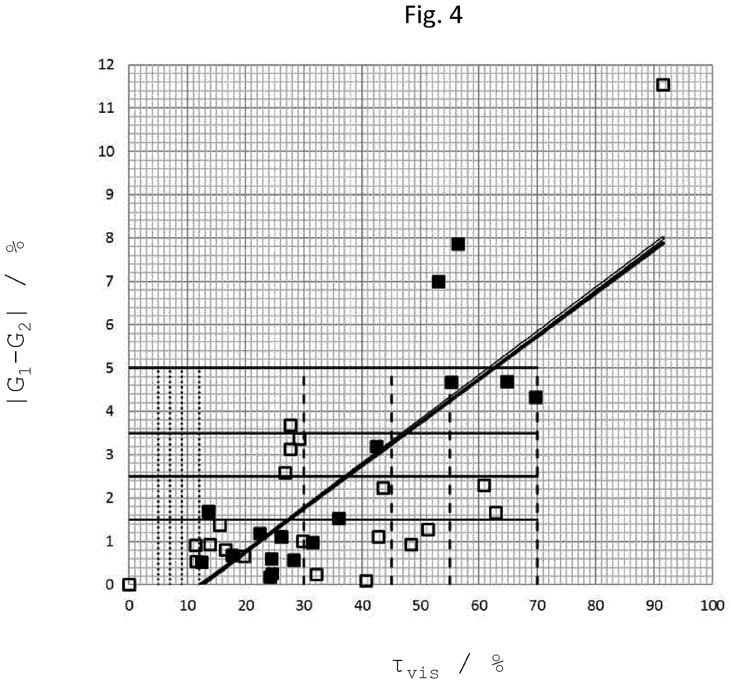

Die Fig. 4 bis 15 zeigen ermittelte Grauwertdifferenzen $|G_1-G_2|$ bzw. Chromazitätsdifferenzen $\Delta C^*$ für 18 verschiedene Glas- bzw. Glaskeramiksubstrate (Proben 1 bis 18), die sich durch verschiedene Lichttransmissionsgrade ($\tau_{vis}$) auszeichnen, wobei die Lichttransmissionsgrade über einen weiten Bereich, nämlich zwischen 12% und 70% variieren. Zur Herstellung des jeweiligen Glases bzw. der jeweiligen Glaskeramik können insbesondere die am Ende

17

der Beschreibung angegebenen Zusammensetzungen in Gew.-% dienen. Die in den Abbildungen gezeigten Datenpunkte bei 84,2% und 91,5% Lichttransmissionsgrad entsprechen hochtransmissiven Proben (SCHOTT CERAN Cleartrans® und SCHOTT B270® Superwite).

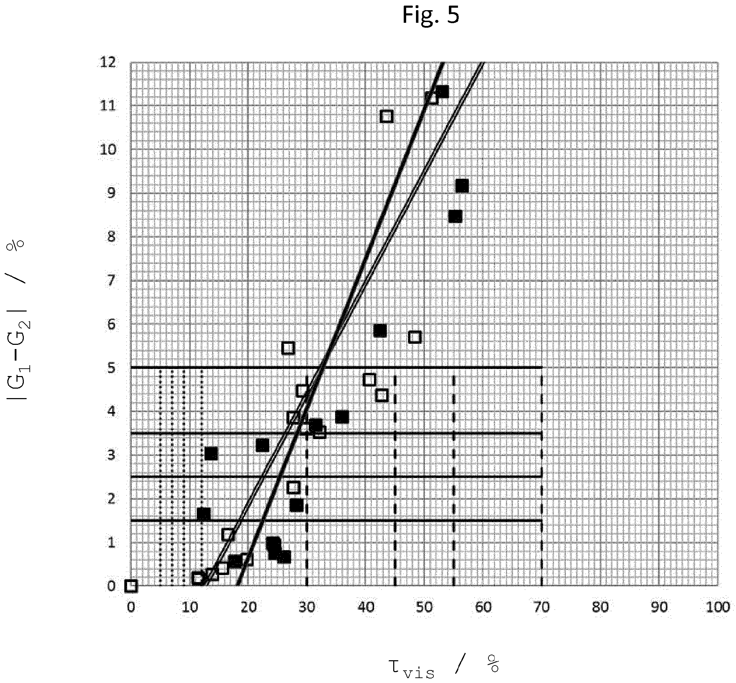

Fig. 4 und 5 zeigen mittels der Grauwertmesseinrichtung 1 ermittelte Grauwertdifferenzen $|G_1-G_2|$ für verschiedene Glas- oder Glaskeramiksubstrate 10 mit einer ersten (Fig. 4) bzw. zweiten (Fig. 5) Innenbeschichtung 12 und für eine erste Anzeigeeinrichtung 20 mit erster Anzeigefläche 22 aufgetragen gegen den Lichttransmissionsgrad ($\tau_{vis}$) der Glas- oder Glaskeramiksubstrate.

Die Innenbeschichtung 12 weist einen Lichttransmissionsgrad ($\tau_{vis}$) auf, welcher im Bereich von < 0,5 % liegt. Für die Anzeigeeinrichtung 20 liegt der Lichttransmissionsgrad $\tau_{vis}$ vorzugsweise in einem Bereich von < 0,005 %. In einer weiteren, bevorzugten Ausführungsform liegt der Lichttransmissionsgrad $\tau_{vis}$ der Innenbeschichtung in einem Bereich von 0 bis 0,00005 %.

Die erste Innenbeschichtung ist dadurch gekennzeichnet, dass, wenn sie aufgebracht ist, beispielsweise auf einer der Oberflächen eines hochtransmissiven Substrats, insbesondere SCHOTT B270® Superwite oder SCHOTT CERAN Cleartrans@, auf der gegenüberliegenden Substratoberfläche betrachtet durch das Substrat hindurch ein wahrnehmbarer Farbton {L*,a*,b*} besteht, wobei **27,9 <** $L^*$ **< 28,4** und -0,16 < $a^*$ < -0,06 und **-0,47 <** $b^*$ **<** -0,13 gilt. Für die Chromazität (Buntheit) gilt demnach 0,15 < $C^*$ < 0,49.

Die zweite Innenbeschichtung ist dadurch gekennzeichnet, dass, wenn sie aufgebracht ist, beispielsweise auf einer der Oberflächen eines hochtransmissiven Substrats, insbesondere SCHOTT B270® Superwite oder SCHOTT CERAN Cleartrans®, auf der gegenüberliegenden Substratoberfläche betrachtet durch das Substrat hindurch ein wahrnehmbarer Farbton {L*,a*,b*} besteht, wobei **28,6 <** $L^*$ **< 29,0** und -0,58 < $a^*$ < -0,52 und -1,72 **<** $b^*$ **<** -1,31 gilt. Für die Chromazität (Buntheit) gilt demnach **1,43 <** $C^*$ < 1,80.

Die erste Anzeigefläche 22 der ersten Anzeigeeinrichtung 20 ist dadurch gekennzeichnet, dass bei direkter Betrachtung ein wahrnehmbarer Farbton {L*,a*,b*} besteht, wobei 43,5 < $L^*$ **< 43,7** und **-0,43 <** $a^*$ **<** -0,41 und -1,63 **<** $b^*$ **<** -1,61 gilt. Für die Chromazität (Buntheit) gilt demnach 1,66 < $C^*$ < **1,68.**

Die vorstehenden Farbtöne bestehen insbesondere dann, wenn diese unter den folgenden Normbedingungen gemessen sind: D65-Normlicht und 2°-Normalbeobachter und vorzugsweise durch jeweiliges Aufsetzen eines Farb-Messgeräts, z.B. eines Farb-Messgeräts des Herstellers Datacolor® (Lawrenceville, NJ 08648 USA) insbesondere des Typs Datacolor® check^plus, P/N: 1200-1513, S/N 5612.

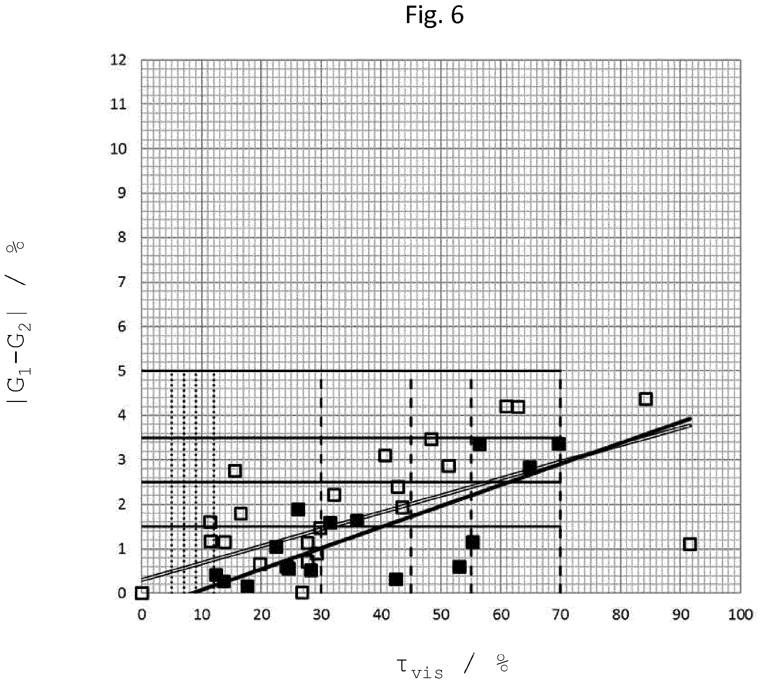

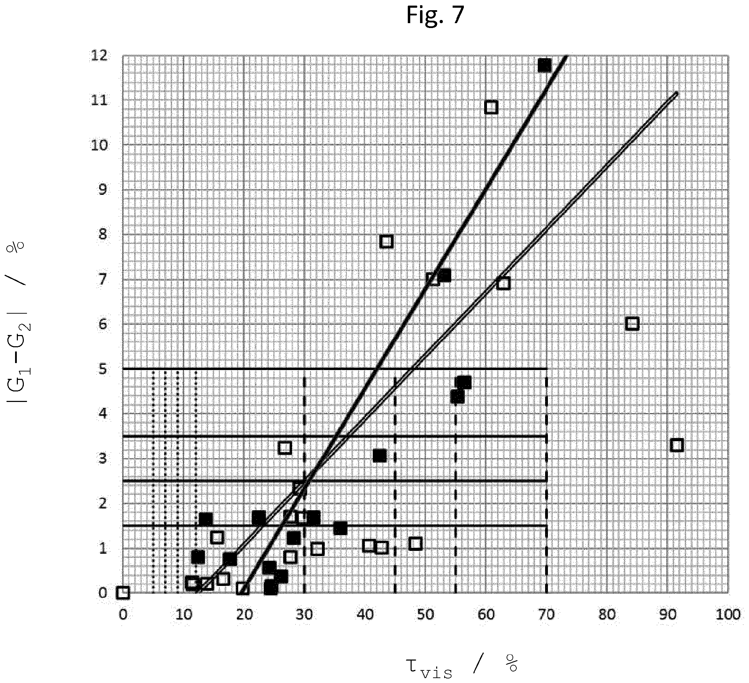

Fig. 6 und 7 zeigen mittels der Grauwertmesseinrichtung 1 ermittelte Grauwertdifferenzen $|G_1-G_2|$ für die verschiedenen Glas- oder Glaskeramiksubstrate 10 mit der ersten (Fig. 6) bzw. zweiten (Fig. 7) Innenbeschichtung 12 und für eine zweite Anzeigeeinrichtung 20 mit zweiter Anzeigefläche 22 aufgetragen gegen den Lichttransmissionsgrad ($\tau_{vis}$) der Glas- oder Glaskeramiksubstrate.

Die zweite Anzeigefläche 22 der zweiten Anzeigeeinrichtung 20 ist dadurch gekennzeichnet, dass bei direkter Betrachtung ein wahrnehmbarer Farbton {L*,a*,b*} besteht, wobei **31,5 <** $L^*$ **< 31,7** und -1,98 **<** $a^*$ **<** -1,96 und 2,58 < $b^*$ < **2,60** gilt. Für die Chromazität (Buntheit) gilt demnach 3,24 < $C^*$ < **3,26.**

Der vorstehende Farbton besteht insbesondere dann, wenn dieser wiederum gemessen ist unter den genannten Normbedingungen und vorzugsweise durch Aufsetzen eines Farb-Messgeräts, z.B. des vorgenannten Typs.

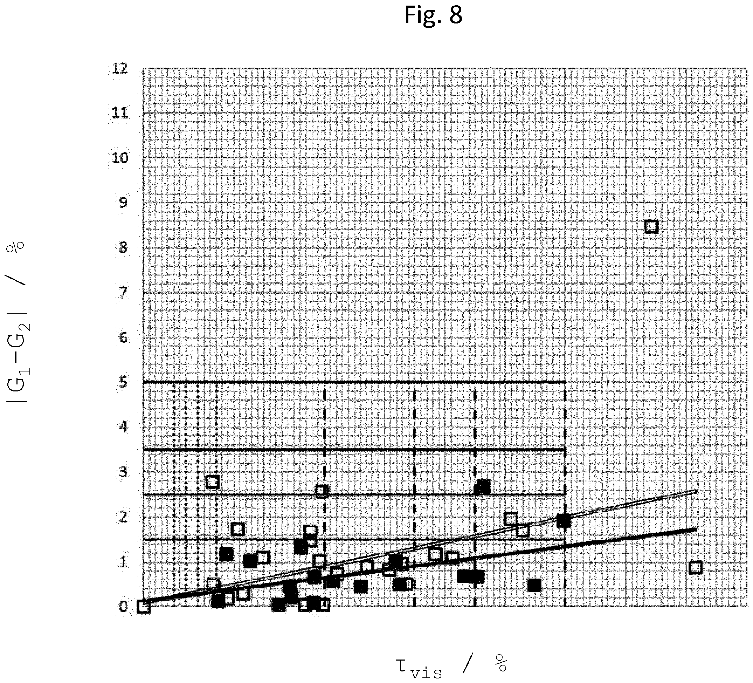

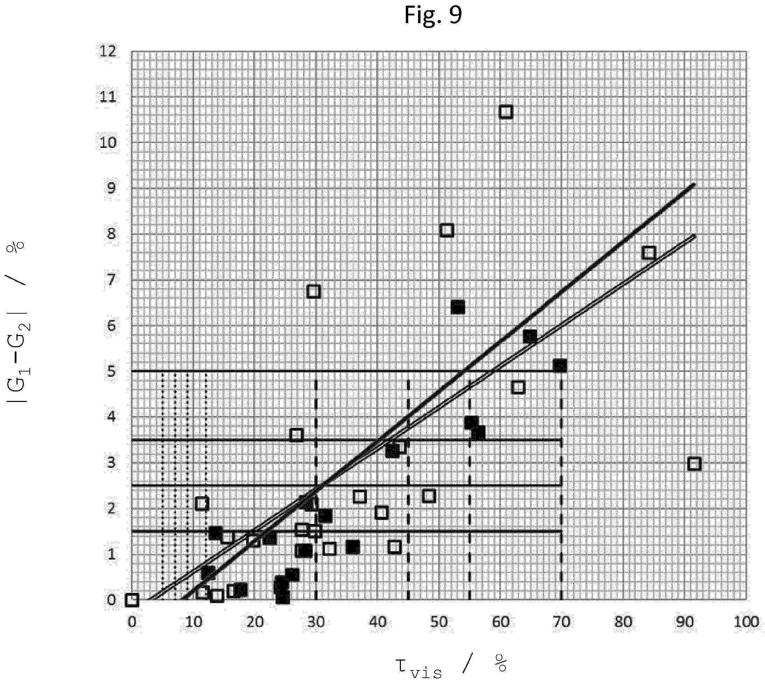

Fig. 8 und 9 zeigen mittels der Grauwertmesseinrichtung 1 ermittelte Grauwertdifferenzen $|G_1-G_2|$ für die verschiedenen Glas- oder Glaskeramiksubstrate 10 mit der ersten (Fig. 8) bzw. zweiten (Fig. 9) Innenbeschichtung 12 und für eine dritte Anzeigeeinrichtung 20 mit dritter Anzeigefläche 22 aufgetragen gegen den Lichttransmissionsgrad ($\tau_{vis}$) der Glas- oder Glaskeramiksubstrate.

Die dritte Anzeigefläche 22 der dritten Anzeigeeinrichtung 20 ist dadurch gekennzeichnet, dass bei direkter Betrachtung ein wahrnehmbarer Farbton {L*,a*,b*} besteht, wobei 27,4 < $L^*$ < **27,6** und -0,66 < $a^*$ < -0,64 und **0,43 <** $b^*$ < **0,45** gilt. Für die Chromazität (Buntheit) gilt demnach 0,77 < $C^*$ < **0,79.**

Der vorstehende Farbton besteht insbesondere dann, wenn dieser wiederum gemessen ist unter den genannten Normbedingungen und vorzugsweise durch Aufsetzen eines Farb-Messgeräts, z.B. des vorgenannten Typs.

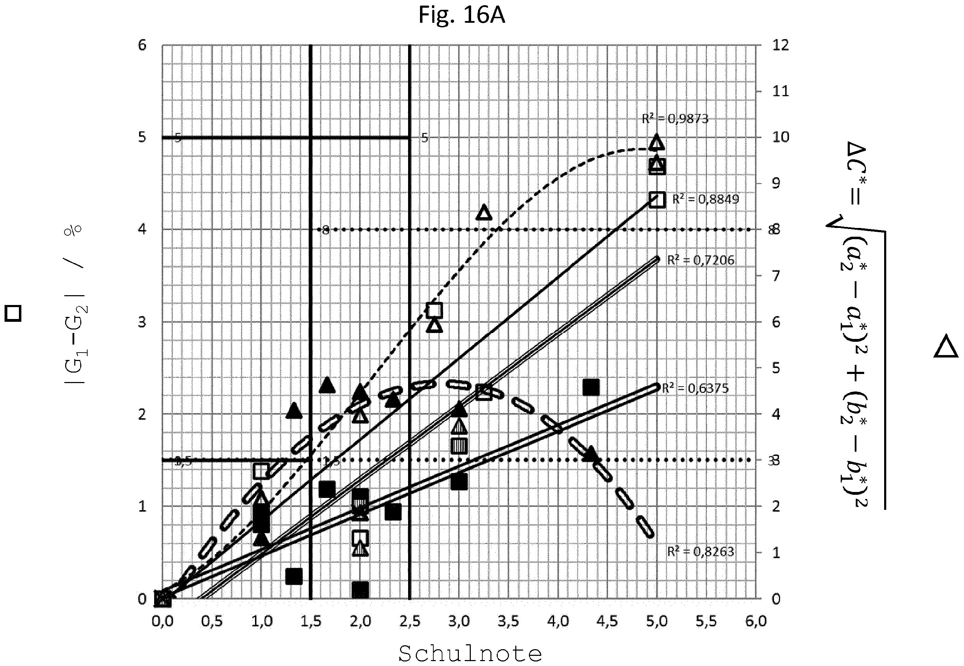

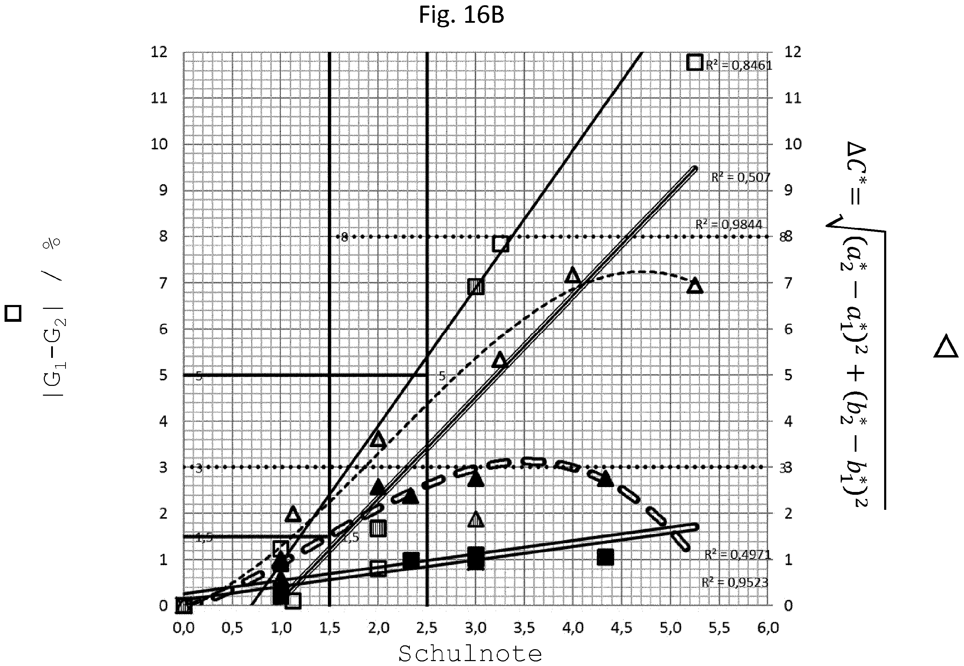

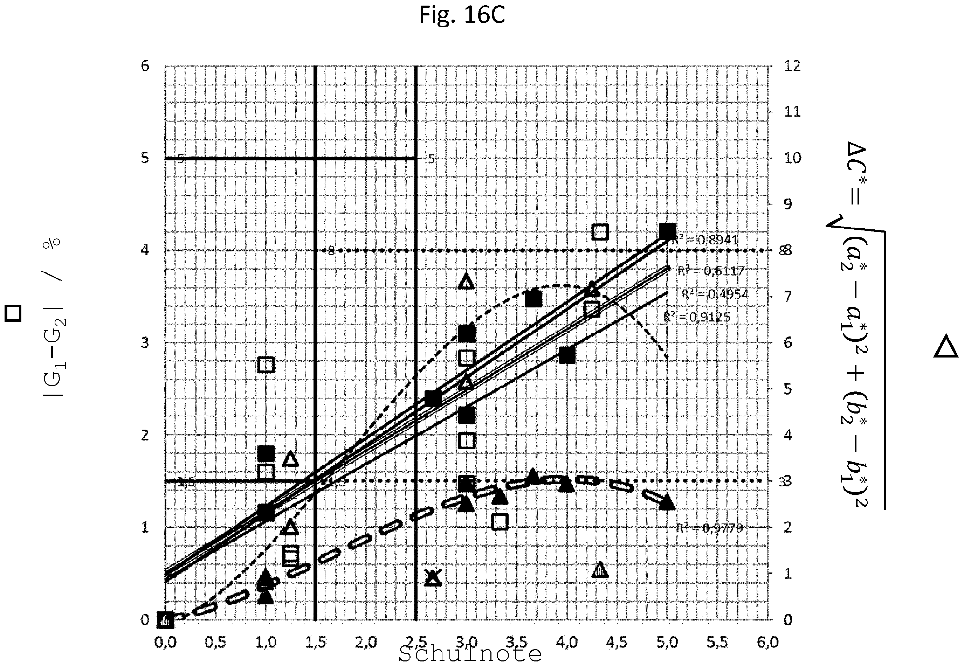

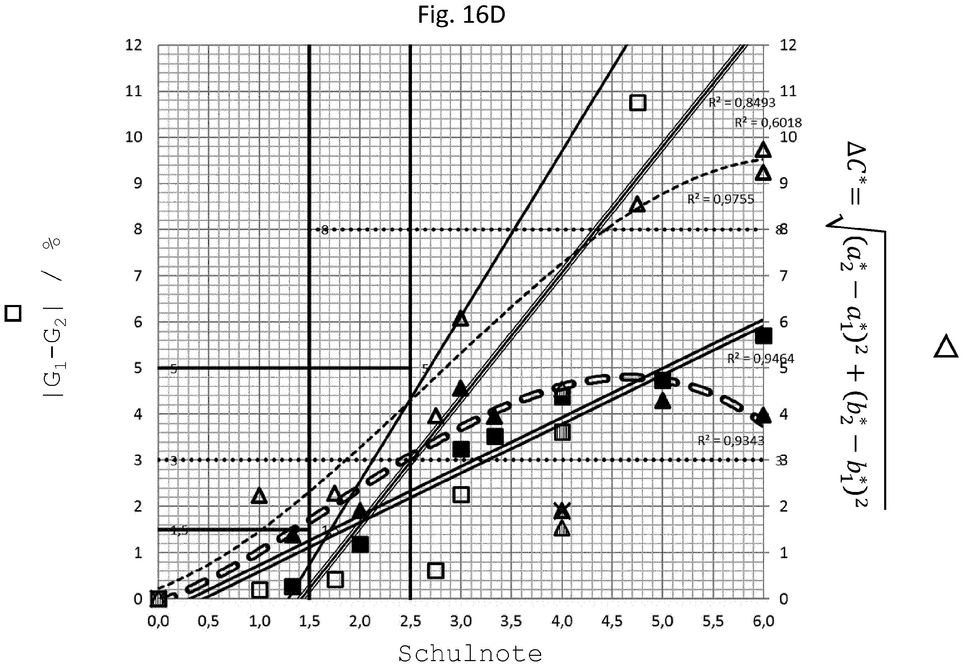

In den Fig. 4 bis 9 ist jeweils die Grauwertdifferenz (Kontrastunterschied) von 5,0 % als horizontale durchgezogene Linie eingezeichnet. Es hat sich herausgestellt, dass Werte unterhalb von 5,0 % von dem menschlichen Auge kaum noch wahrnehmbar sind. Mit anderen Worten wird ein Dead-Front-Effekt erreicht. Für einen noch besseren Dead-Front-Effekt ist es bevorzugt, wenn die Grauwertdifferenz geringer ist als 3,5 %, noch bevorzugter geringer ist als 2,5 % und besonders bevorzugt geringer ist als 1,5 %. Zur Bestimmung dieser Werte wurde eine statistische Analyse durchgeführt, deren Ergebnisse in den Fig 16A bis 16D dargestellt sind.

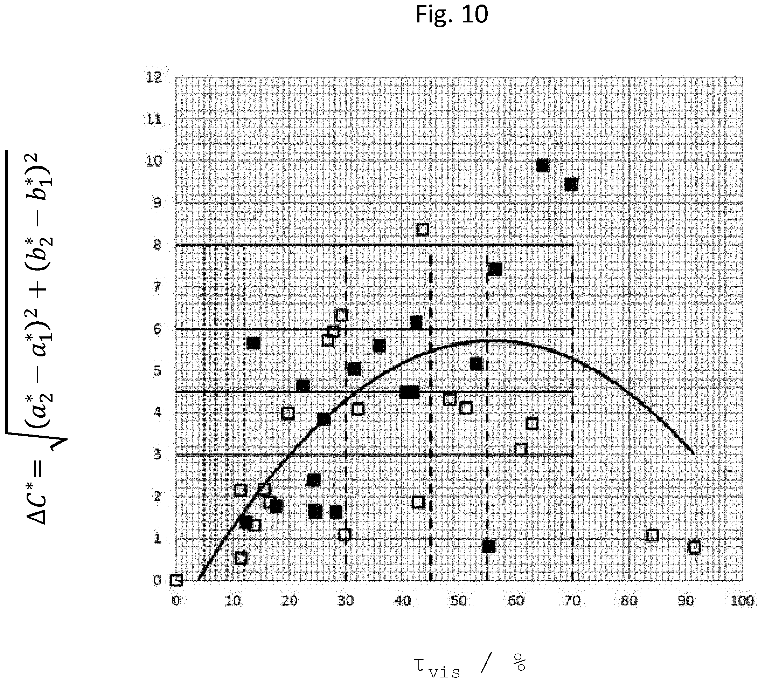

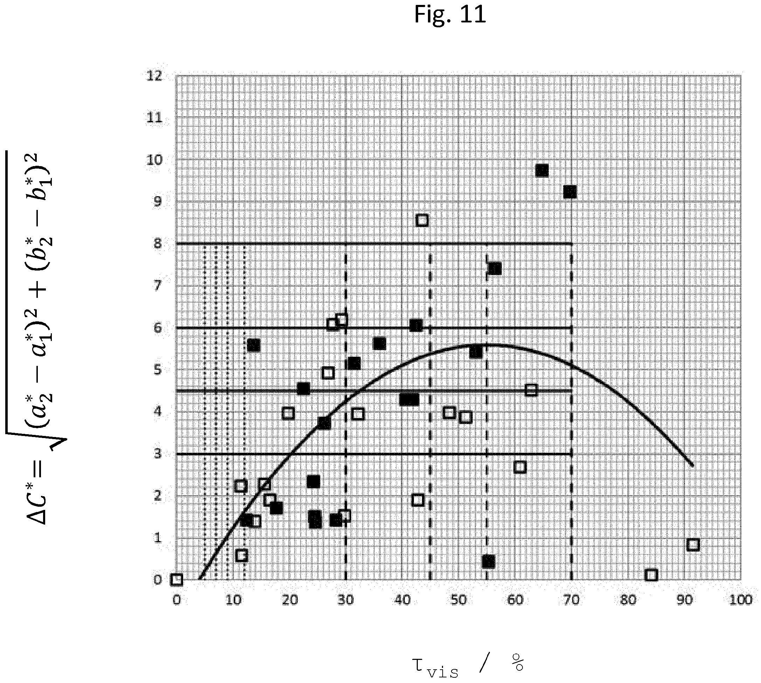

Fig. 10 und 11 zeigen mittels eines Farb-Messgeräts ermittelte Chromazitätsdifferenzen $\Delta C^*$ für die verschiedenen Glas- oder Glaskeramiksubstrate 10 mit der ersten (Fig. 10) bzw. der zweiten (Fig. 11) Innenbeschichtung 12 und für die erste Anzeigeeinrichtung 20 mit der ersten Anzeigefläche 22 aufgetragen gegen den Lichttransmissionsgrad ($\tau_{vis}$) der Glas- oder Glaskeramiksubstrate.

Die Chromazitätsdifferenzen $\Delta C^*$ beziehen sich auf die Differenz der Chromazitäten zwischen einer Chromazität {$a_1^*,b_1^*$} der Anzeigefläche der Anzeigeeinrichtung im ausgeschalteten Zustand bei Betrachtung durch das Glas- oder Glaskeramiksubstrat hindurch und einer Chromazität $\{a_2{}^*,b_2{}^*\}$ der Innenbeschichtung des Glas- oder Glaskeramiksubstrats bei Betrachtung durch das Glas- oder Glaskeramiksubstrat hindurch.

Die Chromazitäten sind gemessen wiederum unter den folgenden Normbedingungen: D65-Normlicht und 2°-Normalbeobachter und vorzugsweise durch jeweiliges Aufsetzen eines Farb-Messgeräts, z.B. des vorgenannten Typs.

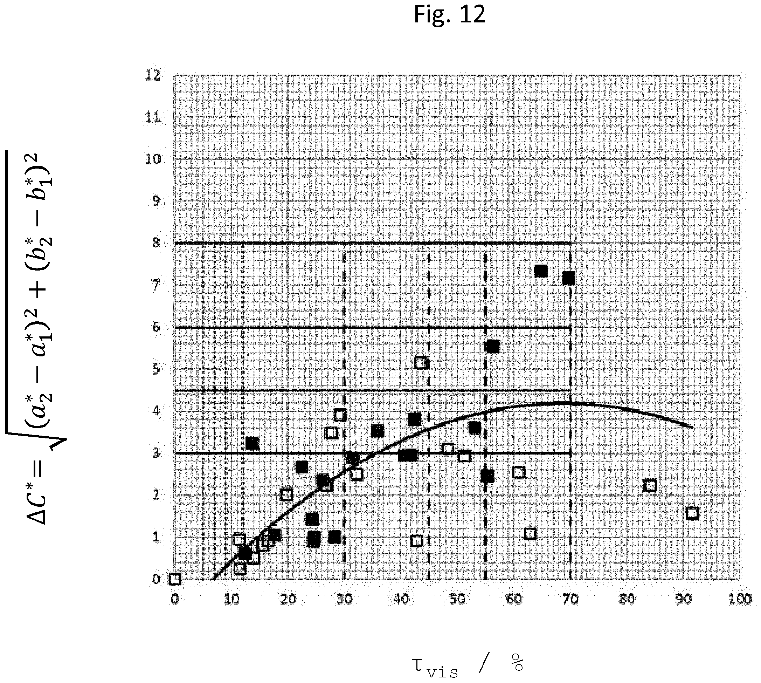

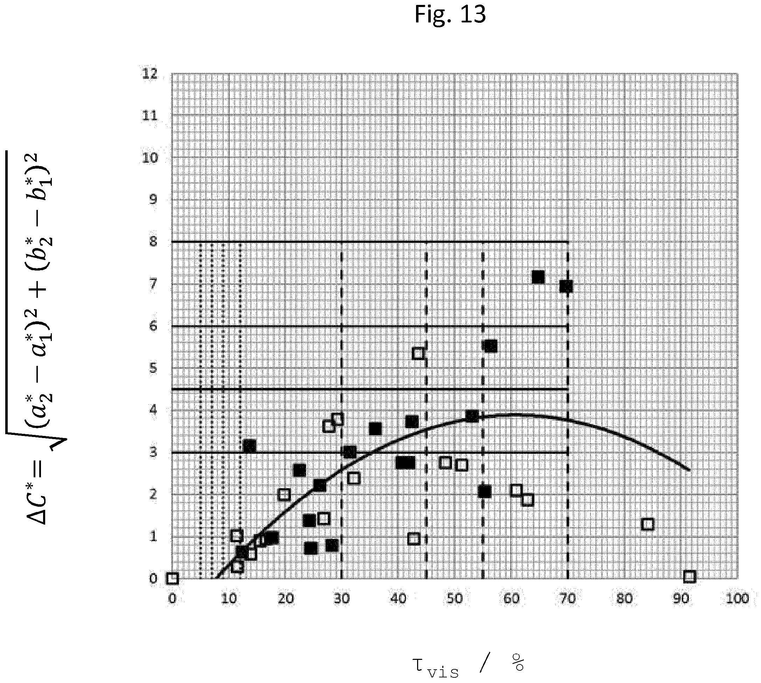

In ähnlicher Weise zeigen Fig. 12 und 13 mittels des Farb-Messgeräts ermittelte Chromazitätsdifferenzen $\Delta \boldsymbol{C}^*$ für die verschiedenen Glas- oder Glaskeramiksubstrate 10 mit der ersten (Fig. 12) bzw. der zweiten (Fig. 13) Innenbeschichtung 12 und für die zweite Anzeigeeinrichtung 20 mit der zweiten Anzeigefläche 22 aufgetragen gegen den Lichttransmissionsgrad ($\tau_{vis}$) der Glas- oder Glaskeramiksubstrate.

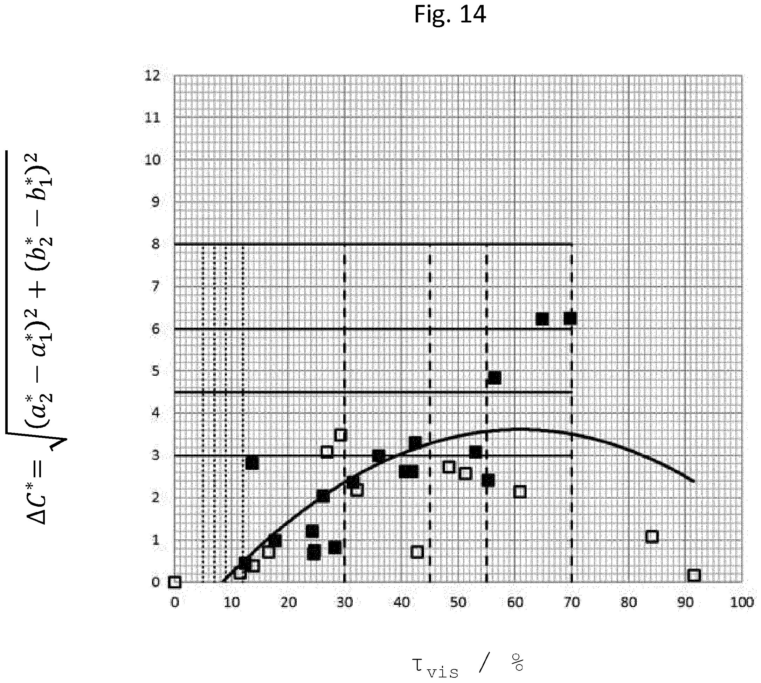

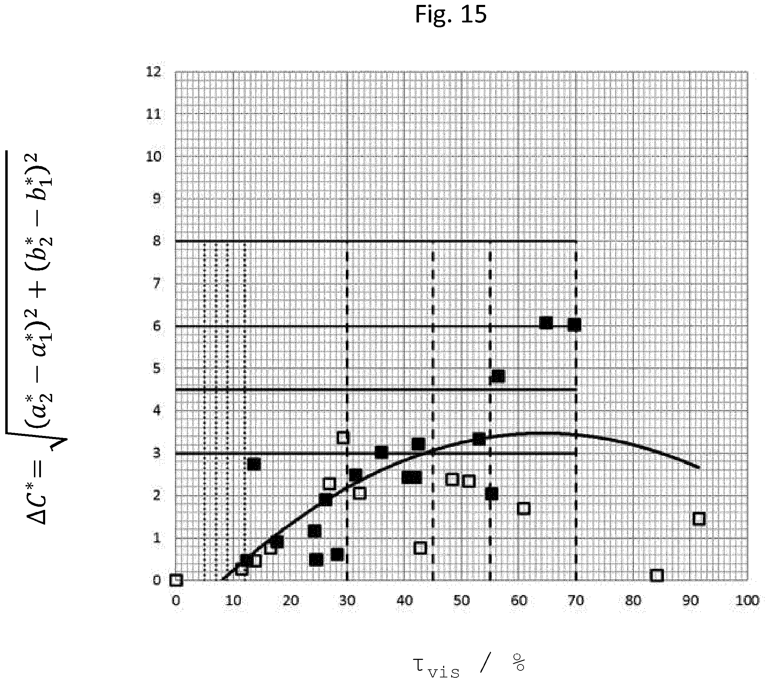

Schließlich zeigen Fig. 14 und 15 mittels des Farb-Messgeräts ermittelte Chromazitätsdifferenzen $\Delta \boldsymbol{C}^*$ für die verschiedenen Glas- oder Glaskeramiksubstrate 10 mit der ersten (Fig. 14) bzw. der zweiten (Fig. 15) Innenbeschichtung 12 und für die dritte Anzeigeeinrichtung 20 mit der dritten Anzeigefläche 22 aufgetragen gegen den Lichttransmissionsgrad ($\tau_{vis}$) der Glas- oder Glaskeramiksubstrate.

In den Fig. 10 bis 15 ist jeweils die Chromazitätsdifferenz von 8 als horizontale durchgezogene Linie eingezeichnet. Es hat sich herausgestellt, dass mit Werte unterhalb von 8 ein Dead-Front-Effekt erzielbar ist. Für einen noch besseren Dead-Front-Effekt ist es bevorzugt, wenn die Chromazitätsdifferenz geringer ist als 6, noch bevorzugter geringer ist als 4,5 und besonders bevorzugt geringer ist als 3. Auch diese Werte wurden im Rahmen der statistischen Analyse durchgeführt, deren Ergebnisse in den Fig. 16A bis 16D dargestellt sind.

In den Fig. 4 bis 15 sind ferner jeweils untere Grenzen des Lichttransmissionsgrads ($\tau_{vis}$) als gepunktete vertikale Linien eingezeichnet. Der Lichttransmissionsgrad beträgt vorzugsweise mindestens 5 %, bevorzugt mindestens 7 %, noch bevorzugter mindestens 9 % und ganz besonders bevorzugt mindestens 12 %. Weiterhin sind jeweils obere Grenzen des Lichttransmissionsgrads als vertikale gestrichelte Linien eingezeichnet. Der Lichttransmissionsgrad beträgt vorzugsweise höchstens 70 %, bevorzugt höchstens 55 %, noch bevorzugter höchstens 45 % und ganz besonders bevorzugt höchstens 30 %.

Es kann insbesondere vorteilhaft sein, die obere(n) Grenze(n) des Lichttransmissionsgrads in Abhängigkeit von den Werten für $|G_1\text{-}G_2|$ bzw. $\Delta \boldsymbol{C}^*$ zu wählen. In einem ersten Beispiel kann etwa vorgesehen sein, dass der Wert für $|G_1\text{-}G_2|$ höchstens 5% beträgt und/oder dass der Wert für $\Delta \boldsymbol{C}^*$ höchstens 8 beträgt und dass der Lichttransmissionsgrad des Substrats höchstens 70% beträgt. In einem zweiten Beispiel kann vorgesehen sein, dass der Wert für $|G_1\text{-}G_2|$ höchstens 3,5% beträgt und/oder dass der Wert für $\Delta \boldsymbol{C}^*$ höchstens 6 beträgt und dass der Lichttransmissionsgrad des Substrats höchstens 55% beträgt. In einem dritten Beispiel kann vorgesehen sein, dass der Wert für $|G_1\text{-}G_2|$ höchstens 2,5% beträgt und/oder dass der Wert für $\Delta \boldsymbol{C}^*$ höchstens 4,5 beträgt und dass der Lichttransmissionsgrad des Substrats höchstens 45% beträgt. In einem vierten Beispiel kann vorgesehen sein, dass der Wert für $|G_1\text{-}G_2|$ höchstens 1,5% beträgt und/oder dass der Wert für $\Delta \boldsymbol{C}^*$ höchstens 3 beträgt und dass der Lichttransmissionsgrad des Substrats höchstens 30% beträgt.

Allgemein, unabhängig von den Ausführungsformen, ist es bevorzugt vorgesehen, dass die Anzeigefläche der Anzeigeeinrichtung bei direkter Betrachtung einen wahrnehmbarer Farbton $\{\boldsymbol{L^*,a^*,b^*}\}$ aufweist mit $\boldsymbol{25 < L^* < 45}$ und/oder $\boldsymbol{-2 <} \alpha^* \boldsymbol{< 0}$ und/oder $\boldsymbol{-1,7 < b^* < 3,0}$. Bevorzugt gilt für die Chromazität $C^* < 3,5$.

Ferner, ebenfalls unabhängig von den Ausführungsformen, ist es bevorzugt vorgesehen, dass die Innenbeschichtung dadurch gekennzeichnet ist, dass, wenn sie aufgebracht ist auf einer der Oberflächen eines hochtransmissiven Substrats, insbesondere SCHOTT B270® Superwite oder SCHOTT CERAN Cleartrans®, auf der gegenüberliegenden Substratoberfläche betrachtet durch das Substrat hindurch ein wahrnehmbarer Farbton $\{\boldsymbol{L^*,a^*,b^*}\}$ besteht, wobei $\boldsymbol{27 < L^* < 30}$ und/oder $\boldsymbol{-0,6 <} \alpha^* \boldsymbol{< 0}$ und/oder $\boldsymbol{-2 < b^* < 0}$ gilt. Für die Chromazität (Buntheit) gilt bevorzugt $\boldsymbol{C^* < 2.}$

Die vorstehenden Farbtöne bestehen insbesondere dann, wenn diese wiederum gemessen sind unter den genannten Normbedingungen und vorzugsweise durch Aufsetzen eines Farb-Messgeräts, z.B. des vorgenannten Typs.

In den Fig. 16A bis 16D sind die Ergebnisse einer statistischen Analyse zur subjektiven Bewertung des Dead-Front-Effekts mit objektiven Messungen entsprechend der vorstehenden Ausführungen korreliert.

Probanden aus einem Personenkreis von 5 bis 10 Personen haben die Anzeigefläche der Anzeigeeinrichtung im ausgeschalteten Zustand durch das Glas- oder Glaskeramiksubstrat hindurch und die Innenbeschichtung des Glas- oder Glaskeramiksubstrats durch das Glas- oder Glaskeramiksubstrat hindurch betrachtet und Schulnoten für wahrnehmbare Kontrast- bzw. Farbunterschiede vergeben.

Die Schulnoten 1 und 2 wurden vergeben, wenn kein Unterschied wahrgenommen werden konnte, d.h. ein perfekter Dead-Front-Effekt erzielt worden ist. Für den Fall, dass die Probanden einen Unterschied mit Mühe zu erkennen vermochten, d.h. noch immer ein angemessener Dead-Front-Effekt erzielt worden ist, wurden Schulnoten 3 und 4 vergeben. Die Schulnoten 5 und 6 wurden vergeben für Fälle in denen ein Unterschied problemlos sichtbar war.

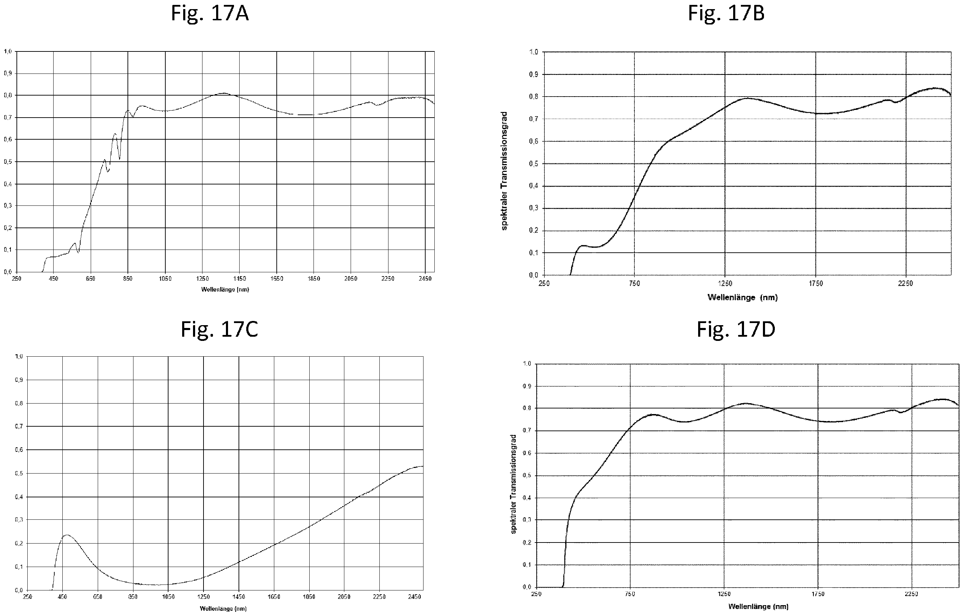

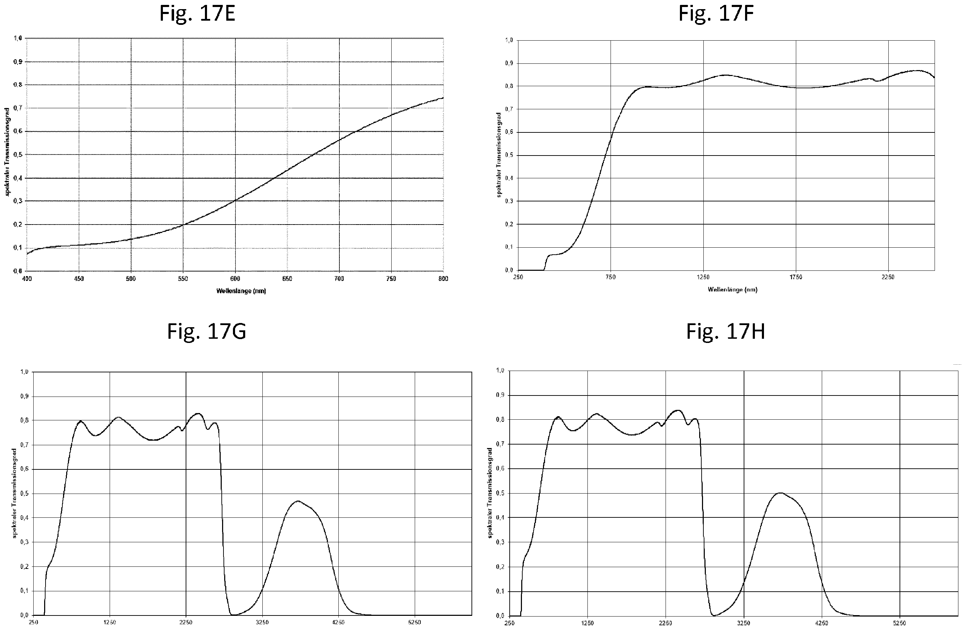

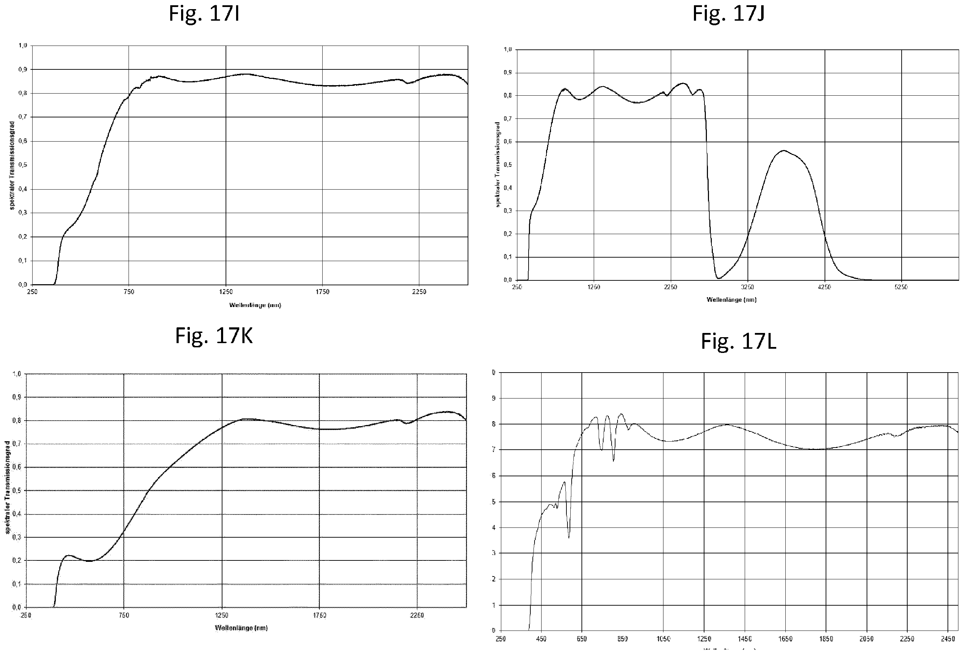

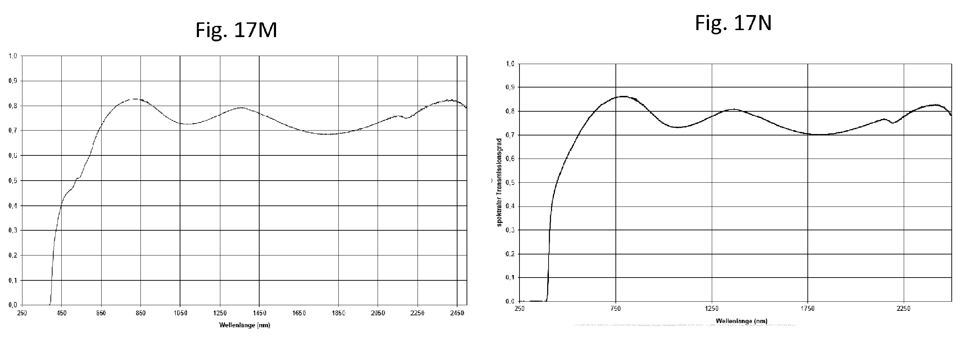

Fig. 17A bis 17N zeigen spektralen Transmissionsgrade der verschiedenen Glas- oder Glaskeramikelemente entsprechend den verwendeten Proben 1 bis 21.

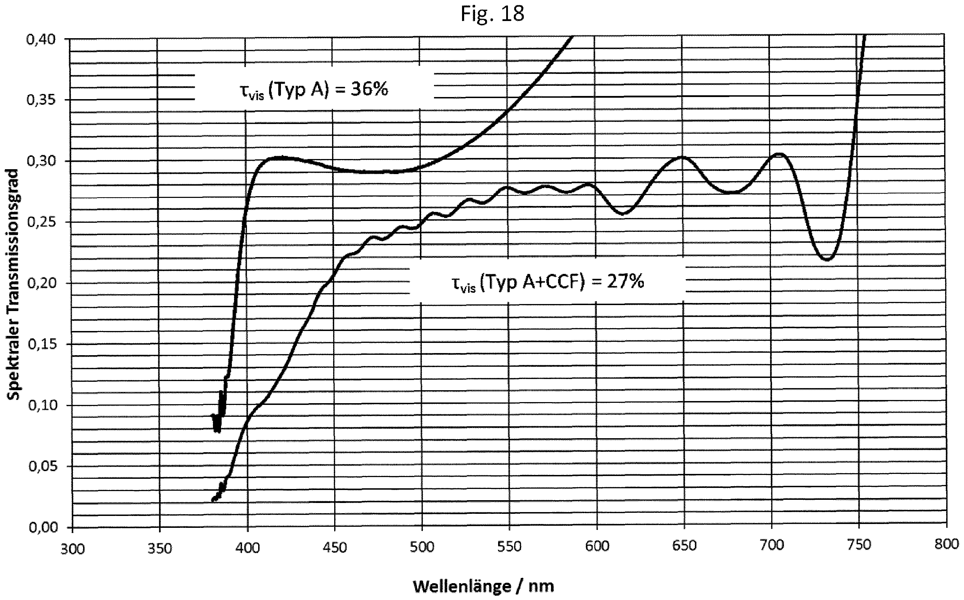

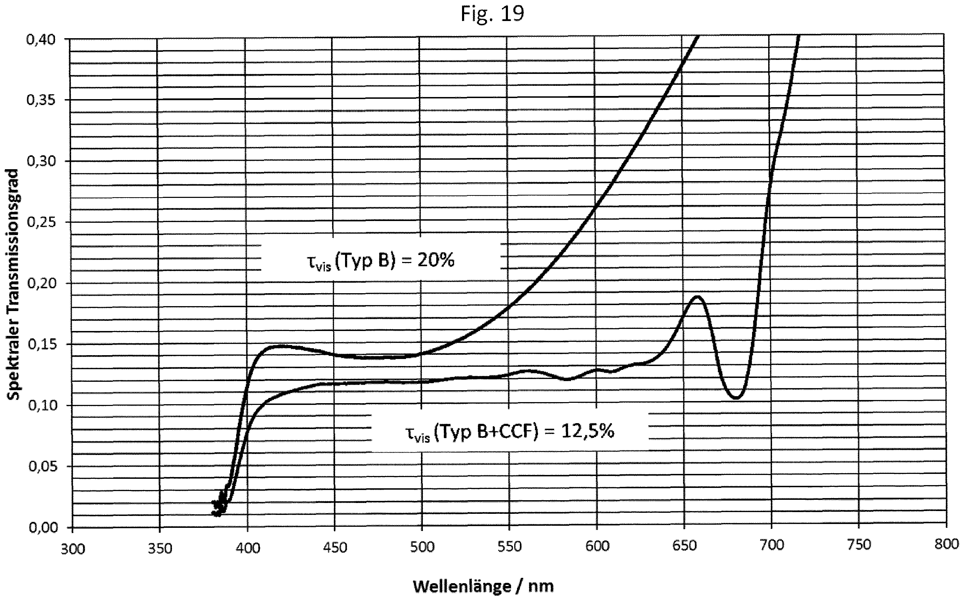

Fig. 18 und 19 zeigen spektrale Transmissionsgrade verschiedener Glaskeramikelemente, wobei die beiden Elemente in Fig. 18 dieselbe Zusammensetzung "Typ A" aufweisen und eines der Elemente zusätzlich mit einem Color Compensation Filter (CCF) versehen ist. Gleiches gilt für die Glaskeramikelemente des "Typs B" in Fig. 19.

Das als "Typ A" bezeichnete Glaskeramikelement weist einen Lichttransmissionsgrad von 36 % auf. Für sichtbare Wellenlängen unterhalb von 550 nm liegt der Lichttransmissionsgrad zwischen 25 % und 35 %. Für sichtbare Wellenlängen oberhalb von 550 nm liegt der Lichttransmissionsgrad über 35 %. Das Glaskeramikelement eignet sich z.B. für Anzeigeflächen mit roter Darstellung.

Das als "Typ A + CCF" bezeichnete Glaskeramikelement weist eine Farbkompensation und einen Lichttransmissionsgrad von 27% auf. Für Wellenlängen zwischen 400 nm und 700 nm liegt der Lichttransmissionsgrad zwischen 8 % und 32 %. Für Wellenlängen im Bereich von 450 nm und 700 nm liegt der Lichttransmissionsgrad zwischen 20 % und 32 %. Hierdurch kann in vorteilhafter Weise auch ein RGB-Display genutzt werden.

Das als "Typ B" bezeichnete Glaskeramikelement weist einen Lichttransmissionsgrad von 20 % auf. Für sichtbare Wellenlängen unterhalb von 550 nm liegt der Lichttransmissionsgrad zwischen 10 % und 20 %. Für sichtbare Wellenlängen oberhalb von 550 nm liegt der Lichttransmissionsgrad über 18 %. Das Glaskeramikelement eignet sich demnach wiederum insbesondere für Anzeigeflächen mit roter Darstellung.

Das als "Typ B + CCF" bezeichnete Glaskeramikelement weist wiederum eine Farbkompensation auf und hat einen Lichttransmissionsgrad von 12,5 %. Für Wellenlängen im Bereich von 410 nm bis 690 nm liegt der Lichttransmissionsgrad zwischen 10 % und 20 %. Hierdurch kann wiederum in vorteilhafter Weise ein RGB-Display verwendet werden.

Ferner kann als eingefärbte Glaskeramik auch "CERAN Hightrans® eco" mit weniger Vanadiumoxid als üblich zum Einsatz kommen.

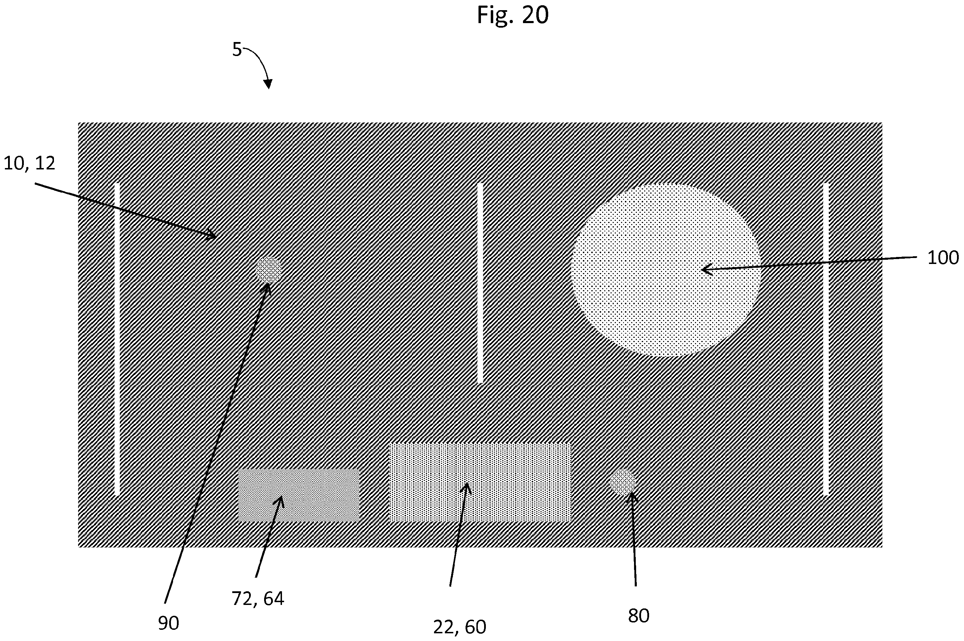

Fig. 20 zeigt vom Außenbereich gesehen ein Kochfeld 5 für ein Kochgerät mit einem Glaskeramiksubstrat 10. Auf der Glaskeramikinnenseite ist eine Innenbeschichtung 12 aufgebracht, welche durch teilweise Aussparung ein Anzeigefenster 60 definiert, durch welches eine darunter befindliche als Graphikdisplay ausgebildete Anzeigefläche im eingeschalteten Zustand sichtbar ist. Im Bereich der partiellen Aussparung der Innenbeschichtung 12 sind die optischen Eigenschaften, insbesondere der Lichttransmissionsgrad, des Glaskeramiksubstrates 10 unterschiedlich, im vorliegenden Beispiel vorzugsweise erhöht im Vergleich zu einem an die Aussparung angrenzenden Bereich des Glas- oder Glaskeramiksubstrats 10. In dem Anzeigefenster 60 weist das Glaskeramiksubstrat 10 einen Lichttransmissionsgrad im Bereich von 5 bis 70 % auf.

Im Bereich des Anzeigefensters 60 ist demnach in diesem Ausführungsbeispiel im Unterschied zu einem angrenzenden Bereich keine Innenbeschichtung vorgesehen, um die von dem angrenzenden Bereich des Glaskeramiksubstrates 10 abweichenden optischen Eigenschaften des Glaskeramiksubstrates 10 hervorzurufen.

Es ist aber auch möglich, in diesem Bereich des Anzeigefensters 60 eine Aufhellung oder Abdunkelung des Glaskeramiksubstrates 10 selbst vorzusehen, um eine höhere oder niedrigere Lichttransmission zu bewirken. Weiterhin ist es auch möglich, eine Folie vorzusehen, auf der das Anzeigefenster 60 durch eine Aussparung, eine Beschichtung oder eine Einfärbung dargestellt ist, und wobei die Folie unterseitig montiert, verklebt oder laminiert ist. Schließlich ist es auch möglich, ein selbsttragendes Trägermaterial wie beispielsweise eine Kunststoff- oder Glasscheibe vorzusehen, auf der das Anzeigefenster 60 durch eine Aussparung, eine Beschichtung oder eine Einfärbung dargestellt ist, und die unterhalb des Glaskeramiksubstrates 10 angebracht ist.

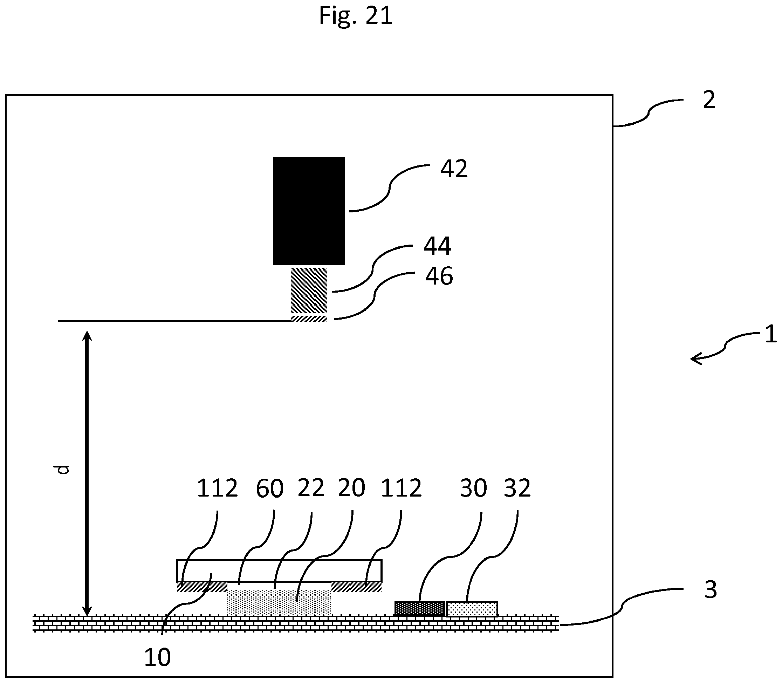

Detaillierter wird dieses nachfolgend unter Bezugnahme auf die Figuren 21 bis 25 beschrieben.

Figur 21 zeigt schematisch wie Figur 2A in Seitenansicht die Grauwertmesseinrichtung 1 zur Bestimmung prozentualer Grauwerte und es wird folglich diesbezüglich ergänzend auch auf die vorstehende Beschreibung der Figur 2A Bezug genommen.

Die Anzeigefläche 22 der Anzeigeeinrichtung 20 wird im ausgeschalteten Zustand durch das Glas- oder Glaskeramiksubstrat 10 hindurch betrachtet und es wird deren prozentualer Grauwert ($G_1$) und ein prozentualen Grauwert einer an der Unterseite des Substrats oder in der Nähe der Unterseite des Substrats angeordneten Folie 112 oder eines Trägermaterials 112, welche eine Aussparung zur Definition des Anzeigefensters 60 aufweisen, durch das Substrat hindurch ($G_2$) gemessen. Das Trägermaterial 112 kann ein selbsttragendes Trägermaterial 112 sein, wie beispielsweise eine Kunststoff- oder Glasscheibe, in welcher der das Anzeigefenster 60 durch eine Aussparung im Trägermaterial 112 selbst ausgebildet ist.

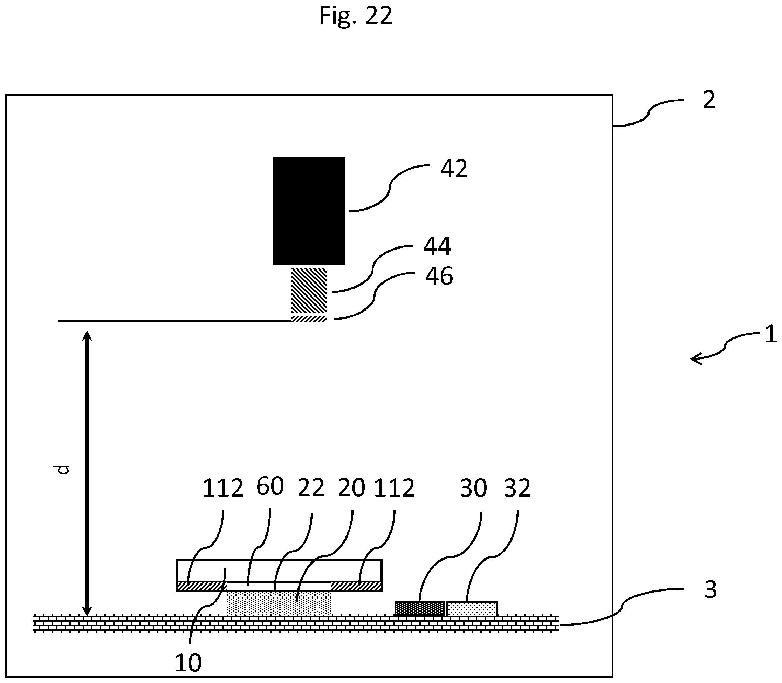

Das Anzeigefenster 60 kann auch durch eine Beschichtung auf dem Trägermaterial 112 oder durch eine Einfärbung des Trägermaterials 112 ausgebildet sein, sodass dieses einen im Wesentlichen nicht unterbrochene flächige Struktur darstellt, wie dieses beispielhaft der Figur 22 zu entnehmen ist.

Die Folie 112 oder das Trägermaterial kann unterhalb des Glas- oder Glaskeramiksubstrates 10 direkt an diesem oder in der Nähe zu diesem angebracht sein.

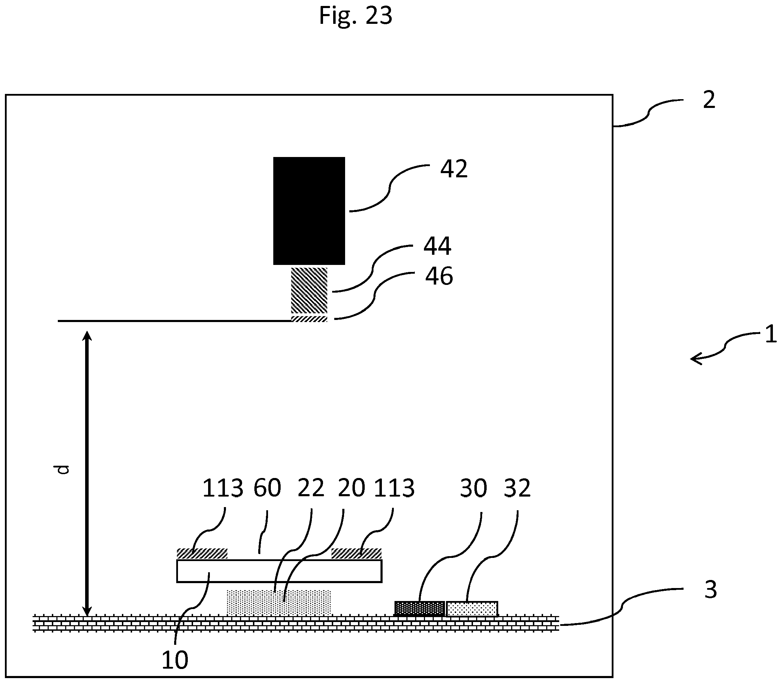

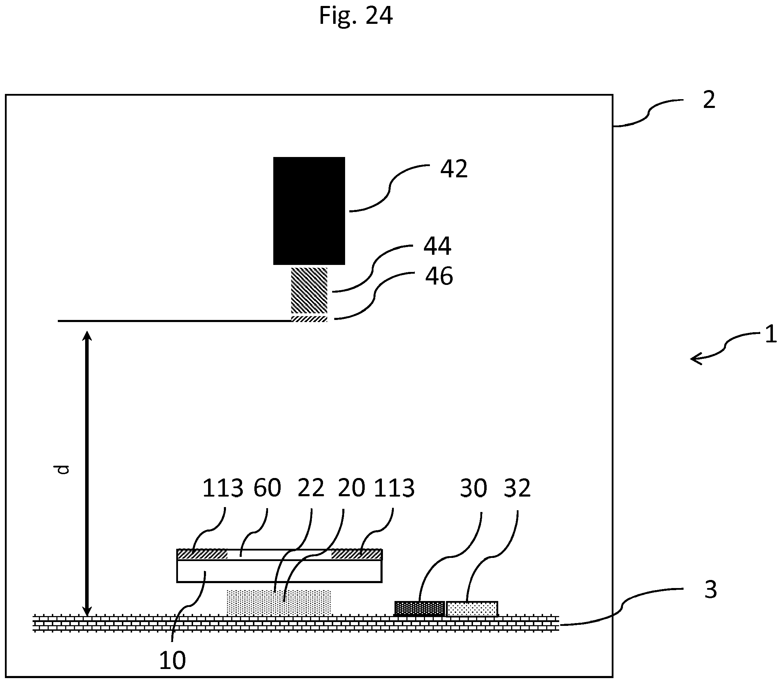

Wie zu Figur 1A beschrieben können mit der in den Figuren 21, 22 und 23 dargestellten Grauwertmesseinrichtung 1 auch die vorstehend beschriebenen Grauwerte G2 im Falle der Darstellung der Figuren 21 und 22 entweder durch das Substrat 10 oder im Falle der nachfolgend beschriebenen Darstellung der Figuren 23 und 24 auch auf dem Substrat 10 gemessen werden.

Fig. 23 zeigt schematisch in Seitenansicht, im Wesentlichen wie Figur 1A eine Grauwertmesseinrichtung 1 zur Bestimmung eines prozentualen Grauwerts einer Anzeigefläche 22 einer Anzeigeeinrichtung 20 im ausgeschalteten Zustand betrachtet durch das Substrat bzw. Glas- oder Glaskeramiksubstrat 10 hindurch ($G_1$) und eines prozentualen

Grauwerts ($G_2$) einer an der Oberseite angebrachten Beschichtung, insbesondere Außenbeschichtung 113 des Substrats oder in der Nähe der Oberseite des Substrats 10 angeordneten Folie oder eines Trägermaterials 113, welche eine Aussparung zur Definition des Anzeigefensters 60 aufweisen. Bei dieser Ausführungsform kann das Trägermaterial 113 aus Glas, insbesondere einer dünnen Glassicht bestehen, welche auch eingefärbt sein kann und auf diese Weise wie in Figur 24 dargestellt eine ununterbrochene Struktur mit durchgehender Oberfläche bereitstellt, in welcher das Anzeigefenster 60 durch eine Aufhellung definiert ist. Bei dieser Ausführungsform kann die Außenbeschichtung 113, das Trägermaterial 113 oder die dünne Glasschicht 113 auch nur einen Bereich des Anzeigefensters 60 so umgeben, dass der erwünschte Dead-Front-Effekt für diesen Bereich zur Verfügung gestellt wird, beispielsweise für einen abgesetzten Bereich des Glas- oder Glaskeramiksubstrats, welcher ein Bedienfeld definiert und nicht in unmittelbarer Nähe zu Heizeinrichtungen angeordnet ist, so dass weder Koch- oder Gargeschirr noch eine zu hohe Temperatur während des Betriebs negative Auswirkungen zeigen.

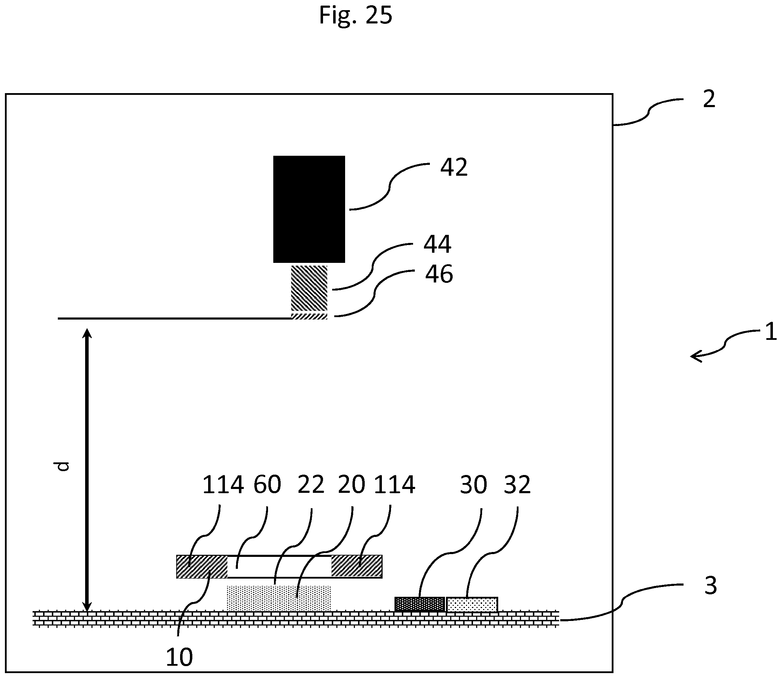

Eine weitere bevorzugte Ausführungsform der Erfindung ist in Fig. 25 gezeigt, welche schematisch in Seitenansicht eine Grauwertmesseinrichtung zur Bestimmung eines prozentualen Grauwerts einer Anzeigefläche einer Anzeigeeinrichtung im ausgeschalteten Zustand betrachtet durch ein Anzeigefenster 60 des Substrat 10 hindurch ($G_1$), welches durch eine Aufhellung des Glas- oder Glaskeramiksubstrats 10 definiert ist, und eines prozentualen Grauwerts ($G_2$) des Glas- oder Glaskeramiksubstrats 10 außerhalb des Anzeigefensters, insbesondere in den dunkleren oder eine Abdunkelung aufweisenden Bereichen 114 offenbart.

Ein Mechanismus zur Aufhellung des Glas- oder Glaskeramiksubstrats 10 ist beispielsweise in dem Dokument DE 10 2013 103 776 A1 angegeben. Hiernach erfolgt eine Änderung der Transmission durch die lokale und zeitlich begrenzte Einwirkung von elektromagnetischer Strahlung, wie z.B. Laserstrahlung eines Dioden-Laser mit 1 $\mu$m Wellenlänge, wobei die Strahlung zu einer lokalen Aufheizung des Materials führt. Um eine lokale Transmissionsänderung im Sinne einer Aufhellung zu erzielen, wird die Temperatur des Substrates erhöht, bis eine Transmissionsänderung eintritt. Im Anschluss wird eine vorzugsweise sehr schnelle Abkühlung durchgeführt. Die Erwärmung löst entsprechende physikalisch-chemische Reaktionen aus und/oder steigert die Elektronen- und Ionenmobilität im Ausgangsmaterial.

Das Glas- oder Glaskeramiksubstrat 10 kann dabei als volumengefärbtes Substrat vorliegen, vorzugsweise als ein mit färbenden Metallionen volumengefärbtes Glaskeramiksubstrat. Typischerweise liegt die Temperatur, bei welcher die Transmissionssteigerung auftritt, oberhalb der Temperatur, bei welcher die Viskosität der Glaskeramik bei $10^{14}$ dPas liegt. Vorzugsweise wird nicht bis zum Erweichungspunkt aufgeheizt, um Formveränderungen zu vermeiden.

Ein Mechanismus zur Abdunkelung des Glas- oder Glaskeramiksubstrats 10 ist beispielsweise in dem Dokument WO2015/044168 angegeben. Hiernach erfolgt eine Abdunkelung dadurch, dass mittels eines Lasers auf einen Bereich des Glas- oder Glaskeramiksubstrates 10 lokal begrenzt elektromagnetische Strahlung gerichtet wird, welche von dem Substrat absorbiert wird, so dass die Transmission im bestrahlten Bereich abnimmt. Die Leistungsdichte des Lasers wird dabei so gewählt, dass die Leistungsdichte vorzugsweise unterhalb der Ablationsschwelle des bestrahlen Substrates liegt. Die lokal veränderte Transmission wird insbesondere durch einen lokal veränderten Absorptionskoeffizienten verursacht. Vorzugsweise wird demgemäß im bestrahlten Bereich der Absorptionskoeffizient erhöht und damit die Transmission abgesenkt.

Für die Abdunkelung kann ein lichtstreuendes Glas- oder Glaskeramiksubstrat verwendet werden, welches mit dem Laser bestrahlt wird und wobei der Absorptionskoeffizient durch die Bestrahlung abgesenkt wird, so dass die Remission für sichtbares Licht im bestrahlten Bereich abgesenkt wird.

Das Glas- oder Glaskeramiksubstrat 10 dieser Ausführungsform kann beispielsweise dadurch erhalten werden, dass eine Aufhellung wie vorstehend erläutert und wie für das Anzeigefenster 60 gezeigt, mit einem höheren Lichttransmissionsgrad in ein Glas- oder Glaskeramiksubstrat 10 eingebracht wird, welches ansonsten zumindest in den Bereichen 114 einen niedrigeren Lichttransmissionsgrad aufweist und mit diesem den Grauwert $G_2$ bereitstellt. Ferner kann auch eine Abdunkelung wie vorstehend ausgeführt zumindest in den Bereichen 114 des Glas- oder Glaskeramiksubstrats 10 beispielsweise durch farbgebende Substanzen eingebracht werden, welche den Lichttransmissionsgrad in diesen Bereichen definiert vermindert um den Grauwert $G_2$ bereitzustellen.

Durch Auswahl der entsprechenden Innen- oder Außenbeschichtung sowie der jeweiligen Folie und des Trägermaterials, insbesondere auch durch deren jeweils entsprechende Einfärbung kann für diese jeweils vollflächig oder zumindest in einem Bereich, welcher das Anzeigefenster 60 umgibt auch der jeweils wahrnehmbare Farbton {$L_2^*, a_2^*, b_2^*$} oder eine Chromazität {$a_2^*, b_2^*$} definiert eingestellt werden.

Es wird somit eine oberhalb, unterhalb und/oder innerhalb des Glas- oder Glaskeramiksubstrats 10 angeordnete Anordnung offenbart, welche das zumindest eine Anzeigefenster 60 für das von der Anzeigefläche 22 ausgesendete Licht definiert.

Dabei umfasst die oberhalb, unterhalb und/oder innerhalb des Glas- oder Glaskeramiksubstrats 10 angeordnete Anordnung, welche das zumindest eine Anzeigefenster 60 für das von der Anzeigefläche 22 ausgesendete Licht definiert, eine Außenbeschichtung 113, vorzugsweise mit einer partiellen Unterbrechung zur Ausbildung eines unbeschichteten Bereiches, welcher das Anzeigefenster 60 definiert, welche an der Substrataußenseite angeordnet ist, und/oder eine Folie 112, 113 mit zumindest einer partiellen Aussparung, Beschichtung oder Einfärbung, welche benachbart zur Substratinnenseite oder Substrataußenseite oder an der Substratinnenseite oder der Substrataußenseite angeordnet ist und das Anzeigefenster 60 definiert, und/oder ein Trägermaterial 112, 113 mit zumindest einer Aussparung, Beschichtung oder Einfärbung, welche benachbart zur Substratinnenseite oder Substrataußenseite oder an der Substratinnenseite oder der Substrataußenseite angeordnet ist und das Anzeigefenster 60 definiert, und/oder einen geänderten Lichttransmissionsgrad des Glas- oder Glaskeramiksubstrats 10, insbesondere eine partielle Aufhellung oder Abdunkelung des Glas- oder Glaskeramiksubstrates 10, welche das Anzeigefenster 60 definiert.

Es ist ferner eine weitere Anzeigeeinrichtung vorgesehen mit einer weiteren Anzeigefläche zur Darstellung von Informationen durch Aussendung von Licht, insbesondere ausgebildet als Segmentanzeige, wobei die auf der Substratinnenseite aufgebrachte Innenbeschichtung, die Außenbeschichtung 113, die Folie 112, 113 oder das Trägermaterial 112, 113 vorzugsweise durch partielle Aussparung oder das Glas- oder Glaskeramiksubstrat 10 durch einen geänderten Lichttransmissionsgrad, insbesondere eine partielle Aufhellung und/oder Abdunkelung, ein weiteres Anzeigefenster für das von der weiteren Anzeigefläche ausgesendete Licht definiert und wobei das Glas- oder Glaskeramiksubstrat 10 im Bereich der weiteren Anzeigefläche bzw. des weiteren Anzeigefensters einen Lichttransmissionsgrad ($\tau_{vis}$) aufweist, welcher im Bereich von 0,5 % bis 5 % liegt.

Die Anzeigefläche 22 der Anzeigeeinrichtung 20 kann eine Leuchtdichte aufweisen, welche mindestens 200 cd/m$^2$, vorzugsweise mindestens 300 cd/m$^2$, besonders bevorzugt mindestens 400 cd/m$^2$, ganz besonders bevorzugt mindestens 500 cd/m$^2$ beträgt und welche höchstens 2000 cd/m$^2$, vorzugsweise höchstens 1500 cd/m$^2$, besonders bevorzugt höchstens 1200 cd/m$^2$, ganz besonders bevorzugt höchstens 1000 cd/m$^2$ und nochmals bevorzugter höchstens 800 cd/m$^2$ beträgt.

Zwischen einem prozentualen Grauwert G$_1$ der Anzeigefläche 22 der Anzeigeeinrichtung 20 im ausgeschalteten Zustand vorzugsweise durch das Glas- oder Glaskeramiksubstrat hindurch 10 betrachtet und einem prozentualen Grauwert G$_2$ der Innenbeschichtung 12 des Glas- oder Glaskeramiksubstrats 10 oder einem prozentualen Grauwert G$_2$ einer an der Substratinnenseite angebrachten oder in der Nähe der Substratinnenseite angebrachten Folie 112 oder eines an der Substratinnenseite angebrachten oder in der Nähe der Substratinnenseite angebrachten Trägermaterials 112, vorzugsweise durch das Glas- oder Glaskeramiksubstrat hindurch betrachtet oder einem prozentualen Grauwert G$_2$ einer Außenbeschichtung 113 oder einem prozentualen Grauwert G$_2$ einer an der Substrataußenseite angebrachten oder einem prozentualen Grauwert G$_2$ einer in der Nähe der Substrataußenseite angebrachten Folie 113 oder einem prozentualen Grauwert G$_2$ eines an der Substrataußenseite angebrachten oder in der Nähe der Substrataußenseite angebrachten Trägermaterials 113, oder einem prozentualen Grauwert G$_2$ eines abgedunkelten Bereichs des Glas- oder Glaskeramiksubstrats 114, vorzugsweise nicht durch das Glas- oder Glaskeramiksubstrat 10 hindurch sondern direkt betrachtet besteht ein Unterschied |G$_1$-G$_2$| von weniger als 5,0 %, vorzugsweise von weniger als 3,5 %, besonders bevorzugt von weniger 2,5 %, ganz besonders bevorzugt von weniger als 1,5 %.

Dieser Unterschied der prozentualen Grauwerte G$_1$ und G$_2$ wird bevorzugt berechnet mittels einer linearen Funktion G als G$_1$=G(M$_1$) und G$_2$=G(M$_2$) aus mittels einer Grauwertmesseinrichtung gemessenen Messwerten M$_1$ und M$_2$.

Dabei entspricht der Messwert M$_1$ der Anzeigefläche 60 der Anzeigeeinrichtung 22 im ausgeschalteten Zustand vorzugsweise durch das Glas- oder Glaskeramiksubstrat 10 hindurch betrachtet und ist mittels der Grauwertmesseinrichtung gemessen.

Der Messwert M$_2$ entspricht der Innenbeschichtung 12 des Glas- oder Glaskeramiksubstrats 10 oder der an der Substratinnenseite angebrachten oder in der Nähe der Substratinnenseite angebrachten Folie 112 oder des an der Substratinnenseite angebrachten oder in der Nähe der Substratinnenseite angebrachten Trägermaterials 112, vorzugsweise durch das Glas- oder Glaskeramiksubstrat 10 hindurch betrachtet oder entspricht der Außenbeschichtung 113 oder der an der Substrataußenseite angebrachten oder in der Nähe der Substrataußenseite angebrachten Folie 113 oder des an der Substrataußenseite angebrachten oder in der Nähe der Substrataußenseite angebrachten Trägermaterials 113, oder dem Glas- oder Glaskeramiksubstrat 10 in dessen abgedunkelten Bereich 114, vorzugsweise nicht durch das Glas- oder Glaskeramiksubstrat 10 hindurch, sondern direkt betrachtet und ist mittels der Grauwertmesseinrichtung 1 gemessen.

Die lineare Funktion G ist vorzugsweise dadurch definiert, dass diese einem Messwert, welcher einer RAL-Karte mit RAL-Farbe 9017 entspricht und mittels der Grauwertmesseinrichtung 1 gemessenen ist, einen prozentualen Grauwert von 20 % zuordnet und einem Messwert, welcher einer RAL-Karte mit RAL-Farbe 7012 entspricht und mittels der Grauwertmesseinrichtung 1 gemessen ist, einen prozentualen Grauwert von 90 % zuordnet, wobei die Grauwertmesseinrichtung 1 vorzugsweise eine Kamera umfasst und eingerichtet ist, ein Graustufenbild von der Anzeigefläche 20 der Anzeigeeinrichtung im ausgeschalteten Zustand vorzugsweise durch das Glas- oder Glaskeramiksubstrat 10 hindurch betrachtet, der Innenbeschichtung 12 des Glas- oder Glaskeramiksubstrats vorzugsweise durch das Glas- oder Glaskeramiksubstrat 10 hindurch betrachtet aufzunehmen und die zugehörigen Messwerte bereitzustellen.

Ferner ist die Grauwertmesseinrichtung 1 mit deren Kamera insbesondere bei den in den Figuren 21 und 22 dargestellten Ausführungsformen dazu eingerichtet, ein Graustufenbild, der an der Innenseite oder in der Nähe der Innenseite des Glas- oder Glaskeramiksubstrats angebrachten Folie 112 oder des an der Innenseite oder in der Nähe der Innenseite des Glas- oder Glaskeramiksubstrats 10 angebrachten Trägermaterials 112 vorzugsweise durch das Glas- oder Glaskeramiksubstrat 10 hindurch betrachtet aufzunehmen und die zugehörigen Messwerte bereitzustellen.

Die Grauwertmesseinrichtung 1 ist mit deren Kamera insbesondere bei den in den Figuren 23 und 24 dargestellten Ausführungsformen dazu eingerichtet, ein Graustufenbild, der an der Außenseite oder in der Nähe der Außenseite des Glas- oder Glaskeramiksubstrats 10 angebrachten Folie 113 oder des an der Außenseite oder in der Nähe der Außenseite des Glas- oder Glaskeramiksubstrats 10 angebrachten Trägermaterials 113 vorzugsweise nicht durch das Glas- oder Glaskeramiksubstrat 10 hindurch, sondern direkt betrachtet aufzunehmen und die zugehörigen Messwerte bereitzustellen.

Bei dem bevorzugten Kochfeld 5 besteht zwischen einem wahrnehmbaren Farbton $\{L_1^*, a_1^*, b_1^*\}$ oder einer Chromazität $\{a_1^*, b_1^*\}$ der Anzeigefläche 22 der Anzeigeeinrichtung 20 im ausgeschalteten Zustand, vorzugsweise durch das Glas- oder Glaskeramiksubstrat 10 hindurch betrachtet und einem wahrnehmbaren Farbton $\{L_2^*, a_2^*, b_2^*\}$ oder einer Chromazität $\{a_2^*, b_2^*\}$ der Innenbeschichtung 12 des Glas- oder Glaskeramiksubstrats 10 oder einem wahrnehmbaren Farbton $\{L_2^*, a_2^*, b_2^*\}$ oder einer Chromazität $\{a_2^*, b_2^*\}$ der an der Substratinnenseite angebrachten oder in der Nähe der Substratinnenseite angebrachten Folie 112 oder einem wahrnehmbaren Farbton $\{L_2^*, a_2^*, b_2^*\}$ oder einer Chromazität $\{a_2^*, b_2^*\}$ des an der Substratinnenseite angebrachten oder in der Nähe der Substratinnenseite angebrachten Trägermaterials 112, vorzugsweise durch das Glas- oder Glaskeramiksubstrat 10 hindurch betrachtet oder einem wahrnehmbaren Farbton $\{L_2^*, a_2^*, b_2^*\}$ oder einer Chromazität $\{a_2^*, b_2^*\}$ einer Außenbeschichtung 113 oder einem wahrnehmbaren Farbton $\{L_2^*, a_2^*, b_2^*\}$ oder einer Chromazität $\{a_2^*, b_2^*\}$ einer an der Substrataußenseite angebrachten oder einem wahrnehmbaren Farbton $\{L_2^*, a_2^*, b_2^*\}$ oder einer Chromazität $\{a_2^*, b_2^*\}$ einer in der Nähe der Substrataußenseite angebrachten Folie 113 oder einem wahrnehmbaren Farbton $\{L_2^*, a_2^*, b_2^*\}$ oder einer Chromazität $\{a_2^*, b_2^*\}$ eines an der Substrataußenseite angebrachten oder in der Nähe der Substrataußenseite angebrachten Trägermaterials 113 oder einem wahrnehmbaren Farbton $\{L_2^*, a_2^*, b_2^*\}$ oder einer Chromazität $\{a_2^*, b_2^*\}$ eines abgedunkelten Bereichs 114 des Glas- oder Glaskeramiksubstrats 10, vorzugsweise nicht durch das Glas- oder Glaskeramiksubstrat hindurch sondern direkt betrachtet eine Chromazitätsdifferenz $\Delta C^* = \sqrt{(a_2^* - a_1^*)^2 + (b_2^* - b_1^*)^2}$ $\Delta C^*$ von weniger als 8,0, vorzugsweise von weniger als 6,0, besonders bevorzugt von weniger als 4,5, ganz besonders bevorzugt von weniger als 3,0, insbesondere, wenn die Farbtöne $\{L_1^*, a_1^*, b_1^*\}$ und $\{L_2^*, a_2^*, b_2^*\}$ oder die Chromazitäten $\{a_1^*, b_1^*\}$ und $\{a_2^*, b_2^*\}$ gemessen sind unter den Normbedingungen D65-Normlicht und 2°-Normalbeobachter.

Die Anzeigefläche der Anzeigeeinrichtung weist im ausgeschalteten Zustand bei unmittelbarer Betrachtung einen wahrnehmbaren Farbton $\{L^*, a^*, b^*\}$ mit $0 < L^* < 45$ und/oder $-2 < a^* < 0$ und/oder $-1,7 < b^* < 3,0$ und/oder $C^* < 3,5$ auf, insbesondere, wenn der Farbton gemessen ist unter den Normbedingungen D65-Normlicht und 2°-Normalbeobachter.

Bei der Innenbeschichtung besteht, wenn sie auf dem Glas- oder Glaskeramiksubstrat aufgebracht ist auf einer der Oberflächen eines hochtransmissiven Substrats, insbesondere mit einem Lichttransmissionsgrad von über 80%, vorzugsweise von über 90%, besonders bevorzugt von über 95%, auf der gegenüberliegenden Substratoberfläche betrachtet durch das Substrat hindurch ein wahrnehmbarer Farbton $\{L^*, a^*, b^*\}$ mit $27 < L^* < 30$ und/oder $-0,6 < a^* < 0$ und/oder $-2 < b^* < 0$ und/oder $C^* < 2$.

Bei dem bevorzugten Kochfeld 5 besteht zwischen einem Rückstrahlvermögen $\rho_1$ der Anzeigefläche der Anzeigeeinrichtung im ausgeschalteten Zustand und einem Rückstrahlvermögen $\rho_2$ der Innenbeschichtung des Glas- oder Glaskeramiksubstrats 10, vorzugsweise durch das Glas- oder Glaskeramiksubstrat 10 hindurch betrachtet oder einem Rückstrahlvermögen $\rho_2$ der an der Substratinnenseite angebrachten oder in der Nähe der Substratinnenseite angebrachten Folie oder einem Rückstrahlvermögen $\rho_2$ des an der Substratinnenseite angebrachten oder in der Nähe der Substratinnenseite angebrachten Trägermaterials, vorzugsweise durch das Glas- oder Glaskeramiksubstrat 10 hindurch betrachtet oder einem Rückstrahlvermögen $\rho_2$ einer Außenbeschichtung oder einem Rückstrahlvermögen $\rho_2$ einer an der Substrataußenseite angebrachten oder einem Rückstrahlvermögen $\rho_2$ einer in der Nähe der Substrataußenseite angebrachten Folie oder einem Rückstrahlvermögen $\rho_2$ eines an der Substrataußenseite angebrachten oder in der Nähe der Substrataußenseite angebrachten Trägermaterials, oder einem Rückstrahlvermögen $\rho_2$ eines abgedunkelten Bereichs des Glas- oder Glaskeramiksubstrats, vorzugsweise nicht durch das Glas- oder Glaskeramiksubstrat hindurch sondern direkt betrachtet ein Unterschied $|\rho_1 - \rho_2|$ von weniger als 3 %, bevorzugt von weniger als 1,5 %, wobei die

Rückstrahlvermögen als $\rho_1 = \dfrac{\int_{S_1}^{S_2} R_1(\lambda)\, d\lambda}{\int_{S_1}^{S_2} d\lambda}$ , $\rho_2 = \dfrac{\int_{S_1}^{S_2} R_2(\lambda)\, d\lambda}{\int_{S_1}^{S_2} d\lambda}$ mit Integrationsgrenzen $S_1 = 400 nm$ und $S_2 = 700 nm$

definiert sind, wobei $R_1(\lambda)$ die spektrale Reflektivität der Anzeigefläche der Anzeigeeinrichtung im ausgeschalteten Zustand bezeichnet und $R_2(\lambda)$ die spektrale Reflektivität der Innenbeschichtung des Glas- oder Glaskeramiksubstrats bezeichnet.

Ferner umfasst bei einer bevorzugten Ausführungsform das Kochfeld 5 einen Kantenkontrastminimierungsbereich, welcher einen graduellen Übergang zwischen dem Grauwert und/oder dem Farbton der im ausgeschalteten Zustand durch das Glas- oder Glaskeramiksubstrat 10 im Bereich des Anzeigefensters 60 hindurch betrachteten Anzeigefläche 22 und dem Grauwert und/oder dem Farbton der durch das Glas- oder Glaskeramiksubstrat hindurch betrachten Innenbeschichtung 12, der Folie 112 oder dem Grauwert und/oder dem Farbton in direkter Betrachtung des Trägermaterials 113 oder der Außenbeschichtung 113 oder der Folie 113 erzeugt.

Ferner umfasst in einer bevorzugten Ausführungsform das Kochfeld 5 einen Kantenkontrastminimierungsbereich, welcher einen graduellen Übergang zwischen dem Grauwert und/oder dem Farbton der im ausgeschalteten Zustand durch das Glas- oder Glaskeramiksubstrat 10 im Bereich des Anzeigefensters 60 hindurch betrachteten Anzeigefläche 22 und dem Grauwert und/oder dem Farbton der durch das Glas- oder Glaskeramiksubstrat hindurch betrachten Innenbeschichtung 12 oder einer an der Innenseite des Glas- oder Glaskeramiksubstrats 10 oder in deren Nähe angebrachten Folie oder einem an der Innenseite des Glas- oder Glaskeramiksubstrats 10 oder in deren Nähe angebrachten Trägermaterials oder einer an der Außenseite des Glas- oder Glaskeramiksubstrats 10 oder in deren Nähe angebrachten Folie oder einem an der Außenseite des Glas- oder Glaskeramiksubstrats 10 oder in deren Nähe angebrachten Trägermaterials erzeugt.

Bei dem Anzeigefenster 60 und/oder dem weiteren Anzeigefenster kann die partielle Aussparung der Innenbeschichtung 12, der Außenbeschichtung 113, der Folie 112, 113 oder des Trägermaterials 112, 113 oder die Aufhellung des Glas- oder Glaskeramiksubstrats 10 rasterartig ausgeführt sein.

Das Kochfeld 5 umfasst außerdem eine weitere als Segmentanzeige ausgebildete Anzeigeeinrichtung 70 mit einer Anzeigefläche 72, die im eingeschalteten Zustand durch das Glaskeramiksubstrat 10 in einem weiteren Anzeigefenster 64 sichtbar ist. Im Bereich des weiteren Anzeigefensters 64 weist das Glaskeramiksubstrat 10 einen Lichttransmissionsgrad auf, welcher im Bereich von 0,5 % bis 5 % liegt. Dieser Lichttransmissionsgrad kann auch durch die Innenbeschichtung oder durch einen teilweise rasterartig ausgeführten Bereich der Innenbeschichtung erzielt werden.

Weiterhin umfasst das Kochfeld 5 eine Zone 80 im Kaltbereich, welche einen Lichttransmissionsgrad von unter 5 %, vorzugsweise unter 0,5 % aufweist und für Wellenlängen von 920 nm eine Transmission von über 20 %, vorzugsweise über 40 %, besonders bevorzugt über 60 % aufweist. Unterhalb der Zone 80 kann im Innenbereich ein Infrarotsensor angeordnet sein.

Ferner weist das Kochfeld 5 zumindest einen Kochbereich 100 mit einem Lichttransmissionsgrad von unter 5 %, vorzugsweise unter 0,5 % auf. Unterhalb des Kochbereichs ist insbesondere ein Heizkörper zur Erwärmung eines auf der Substrataußenseite aufgestellten Kochgeschirrs angeordnet.

Das Kochfeld 5 umfasst zudem einen Zone 90 im Heißbereich welche einen Lichttransmissionsgrad von unter 5 %, vorzugsweise unter 0,5 % aufweist und für Wellenlängen von 1500 nm, vorzugsweise Wellenlängen von 1600 nm, besonders bevorzugt Wellenlängen von 1750 nm eine Transmission von über 20 %, vorzugsweise über 40 %, besonders bevorzugt über 60 % aufweist. Unterhalb der Zone 90 kann im Innenbereich ein weiterer Infrarotsensor angeordnet sein, insbesondere zur Messung der Temperatur eines auf der Substrataußenseite aufgestellten Kochgeschirrs.

Selbstverständlich ist es auch möglich, die offenbarten unterschiedlichen Ausführungsformen zur lokalen Veränderung der optischen Eigenschaften zur Definition das Anzeigefensters 60 oder des Glas- oder Glaskeramiksubstrates 10 miteinander zu kombinieren. Diese unterschiedlichen Ausführungsformen können auch bei einem einzigen Glas- oder Glaskeramiksubstrat 10 verwendet oder miteinander kombiniert werden.

Nachfolgend sind für die in der Beschreibung genannten Proben 1 bis 18 Zusammensetzungen in Gew-% aufgeführt:

Probe 1 (Lichttransmissionsgrad = 12,4%)

| Komponenten | Gew-% | Gew-% (Beispiel) |
| --- | --- | --- |
| Li2O | 2,8 - 4,6 | 3,7 |
| Na2O | 0,4 - 0,7 | 0,6 |
| K2O | 0,2 - 0,3 | 0,3 |
| MgO | 0,3 - 0,5 | 0,4 |
| CaO | 0,3 - 0,5 | 0,4 |
| BaO | 1,7 - 2,9 | 2,3 |
| ZnO | 1,1 - 1,9 | 1,5 |
| Al2O3 | 15,7 - 26,1 | 20,9 |
| SiO2 | 48,6 - 80,9 | 64,8 |

(fortgesetzt)

| Komponenten | Gew-% | Gew-% (Beispiel) |
|---|---|---|
| TiO2 | 2,3 - 3,9 | 3,1 |
| ZrO2 | 1 - 1,7 | 1,4 |
| SnO2 | 0,2 - 0,3 | 0,24 |
| Fe2O3 | 0,1 - 0,1 | 0, 083 |
| V2O5 | 0 - 0,1 | 0,010 |
| Nd2O3 | 0,4 - 0,6 | 0,5 |

Probe 2 (Lichttransmissionsgrad = 13,6%)

| Komponenten | Gew-% | Gew-% (Beispiel) |
|---|---|---|
| Li2O | 2,8 - 4,7 | 3,8 |
| Na2O | 0,4 - 0,7 | 0,6 |
| K2O | 0,2 - 0,3 | 0,2 |
| MgO | 0,2 - 0,4 | 0,3 |
| CaO | 0,3 - 0,5 | 0,4 |
| SrO | 0 - 0,1 | 0,0 |
| BaO | 1,4 - 2,3 | 1,9 |
| ZnO | 1,2 - 1,9 | 1,6 |
| Al2O3 | 15,8 - 26,3 | 21,0 |
| SiO2 | 49,1 - 81,8 | 65,4 |
| TiO2 | 2,1 - 3,6 | 2,9 |
| ZrO2 | 1,2 - 1,9 | 1,5 |
| P2O5 | 0 - 0,1 | 0,061 |
| SnO2 | 0,2 - 0,3 | 0,26 |
| Fe2O3 | 0,1 - 0,1 | 0,073 |
| V2O5 | 0 - 0,1 | 0,016 |
| MnO2 | 0 - 0,1 | 0,016 |
| Nd2O3 | 0 - 0,1 | 0,017 |

Probe 3 (Lichttransmissionsgrad = 13,6%)

| Komponenten | Gew-% | Gew-% (Beispiel) |
|---|---|---|
| Li2O | 3-5 | 3,80 |
| Na2O | 0-<3 | 0,60 |
| K2O | 0-<3 | 0,25 |
| MgO | 0-3 | 0,29 |
| CaO | 0-4 | 0,40 |
| SrO | 0-4 | 0,02 |
| BaO | 0-4 | 2,23 |
| ZnO | 0-4 | 1,53 |
| Al2O3 | 18-25 | 20,9 |
| SiO2 | 60-70 | 65,0 |
| TiO2 | 1,5-5,5 | 3,10 |
| ZrO2 | 0-2,5 | 1,38 |
| P2O5 | 0-5 | 0,09 |
| SnO2 | 0,1-<0,7 | 0,25 |
| Fe2O3 | 0,01-0,025 | 0,088 |
| MoO3 | 0,003-0,5 | 0,078 |
| MnO2 | 0-0,05 | 0,025 |

Probe 4 (Lichttransmissionsgrad = 17,6%)

| Komponenten | Gew-% | Gew-% (Beispiel) |
|---|---|---|
| Li2O | 2,8 - 4,6 | 3,7 |
| Na2O | 0,4 - 0,7 | 0,6 |
| K2O | 0,2 - 0,3 | 0,3 |
| MgO | 0,3 - 0,5 | 0,4 |
| CaO | 0,3 - 0,5 | 0,4 |
| BaO | 1,7 - 2,9 | 2,3 |
| ZnO | 1,1 - 1,9 | 1,5 |
| Al2O3 | 15,7 - 26,2 | 21,0 |
| SiO2 | 48,8 - 81,4 | 65,1 |
| TiO2 | 2,3 - 3,9 | 3,1 |
| ZrO2 | 1 - 1,7 | 1,4 |
| SnO2 | 0,2 - 0,3 | 0,24 |
| Fe2O3 | 0 - 0,1 | 0,083 |

Probe 5 (Lichttransmissionsgrad = 20,4%)

| Komponenten | Gew-% | Gew-% (Beispiel) |
|---|---|---|
| Li2O | 3-5 | 3,80 |
| Na2O | 0-<3 | 0,60 |
| K2O | 0-<3 | 0,25 |
| MgO | 0-3 | 0,29 |
| CaO | 0-4 | 0,40 |
| SrO | 0-4 | 0,02 |
| BaO | 0-4 | 2,23 |
| ZnO | 0-4 | 1,53 |
| Al2O3 | 18-25 | 20,9 |
| SiO2 | 60-70 | 65,0 |
| TiO2 | 1,5-5,5 | 3,10 |
| ZrO2 | 0-2,5 | 1,38 |
| P2O5 | 0-5 | 0,09 |
| SnO2 | 0,1-<0,7 | 0,25 |
| Fe2O3 | 0,01-0,025 | 0,061 |
| MoO3 | 0,003-0,5 | 0,014 |
| MnO2 | 0-0,05 | 0,025 |

Probe 6 (Lichttransmissionsgrad = 22,4%)

| Komponenten | Gew-% | Gew-% (Beispiel) |
|---|---|---|
| Li2O | 2, 9 - 4, 8 | 3,9 |
| Na2O | 0,5 - 0,8 | 0,6 |
| K2O | 0,2 - 0,3 | 0,3 |
| MgO | 0,2 - 0,4 | 0,3 |
| CaO | 0,3 - 0,5 | 0,4 |
| BaO | 1,7 - 2,8 | 2,3 |
| ZnO | 1,1 - 1,9 | 1,5 |
| Al2O3 | 15,7 - 26,2 | 21,0 |
| SiO2 | 48,7 - 81,1 | 64,9 |
| TiO2 | 2,3 - 3,9 | 3,1 |
| ZrO2 | 1 - 1,7 | 1,4 |

(fortgesetzt)

| Komponenten | Gew-% | Gew-% (Beispiel) |
|---|---|---|
| $SnO_2$ | 0, 2 - 0, 3 | 0, 26 |
| $Fe_2O_3$ | 0,1 - 0,2 | 0,120 |
| $V_2O_5$ | 0 - 0,1 | 0,021 |

Probe 7 (Lichttransmissionsgrad = 24,2%)

| Komponenten | Gew-% | Gew-% (Beispiel) |
|---|---|---|
| $Li_2O$ | 2,8 - 4,7 | 3,8 |
| $Na_2O$ | 0,4 - 0,7 | 0,6 |
| $K_2O$ | 0,1 - 0,2 | 0,2 |
| $MgO$ | 0,2 - 0,4 | 0,3 |
| $CaO$ | 0,3 - 0,5 | 0,4 |
| $SrO$ | 0 - 0,1 | 0,1 |
| $BaO$ | 1,1 - 1,9 | 1,5 |
| $ZnO$ | 1,2 - 2 | 1, 6 |
| $Al_2O_3$ | 15,8 - 26,3 | 21,0 |
| $SiO_2$ | 49,4 - 82,4 | 65,9 |
| $TiO_2$ | 2 - 3,3 | 2,7 |
| $ZrO_2$ | 1,2 - 2,1 | 1,6 |
| $P_2O_5$ | 0 - 0,1 | 0,048 |
| $SnO_2$ | 0,2 - 0,3 | 0,27 |
| $Fe_2O_3$ | 0 - 0,1 | 0,053 |
| $V_2O_5$ | 0 - 0,1 | 0,010 |
| $MnO_2$ | 0 - 0,1 | 0,011 |
| $Nd_2O_3$ | 0 - 0,1 | 0,032 |

Probe 8 (Lichttransmissionsgrad = 24,5%)

| Komponenten | Gew-% | Gew-% (Beispiel) |
|---|---|---|
| $Li_2O$ | 2,8 - 4,6 | 3,7 |
| $Na_2O$ | 0,4 - 0,7 | 0,6 |
| $K_2O$ | 0,2 - 0,3 | 0,3 |
| $MgO$ | 0,3 - 0,5 | 0,4 |
| $CaO$ | 0,3 - 0,5 | 0,4 |
| $BaO$ | 1,7 - 2,8 | 2,3 |
| $ZnO$ | 1,1 - 1,9 | 1,5 |
| $Al_2O_3$ | 15,6 - 26 | 20,8 |
| $SiO_2$ | 48,3 - 80,5 | 64,4 |
| $TiO_2$ | 2,3 - 3,9 | 3,1 |
| $ZrO_2$ | 1 - 1,7 | 1,3 |
| $SnO_2$ | 0,2 - 0,3 | 0,24 |
| $Fe_2O_3$ | 0 - 0,1 | 0,083 |

Probe 9 (Lichttransmissionsgrad = 24,6%)

| Komponenten | Gew-% | Gew-% (Beispiel) |
|---|---|---|
| $Li_2O$ | 2,8 - 4,6 | 3,7 |
| $Na_2O$ | 0,4 - 0,7 | 0,6 |
| $K_2O$ | 0,2 - 0,3 | 0,3 |

(fortgesetzt)

| Komponenten | Gew-% | Gew-% (Beispiel) |
|---|---|---|
| MgO | 0,3 - 0,5 | 0,4 |
| CaO | 0,3 - 0,5 | 0,4 |
| BaO | 1,7 - 2,8 | 2,3 |
| ZnO | 1,1 - 1,9 | 1,5 |
| Al2O3 | 15,6 - 26 | 20,8 |
| SiO2 | 48,3 - 80,5 | 64,4 |
| TiO2 | 2,3 - 3,9 | 3,1 |
| ZrO2 | 1 - 1,7 | 1,3 |
| SnO2 | 0,2 - 0,3 | 0,24 |
| Fe2O3 | 0 - 0,1 | 0,083 |

Probe 10 (Lichttransmissionsgrad = 28,3%)

| Komponenten | Gew-% | Gew-% (Beispiel) |
|---|---|---|
| Li2O | 2,8 - 4,6 | 3,7 |
| Na2O | 0,4 - 0,7 | 0,6 |
| K2O | 0,2 - 0,3 | 0,3 |
| MgO | 0,3 - 0,5 | 0,4 |
| CaO | 0,3 - 0,5 | 0,4 |
| BaO | 1,7 - 2,9 | 2,3 |
| ZnO | 1,1 - 1,9 | 1,5 |
| Al2O3 | 15,7 - 26,2 | 21,0 |
| SiO2 | 48,8 - 81,4 | 65,1 |
| TiO2 | 2,3 - 3,9 | 3,1 |
| ZrO2 | 1 - 1,7 | 1,4 |
| SnO2 | 0,2 - 0,3 | 0,24 |
| Fe2O3 | 0 - 0,1 | 0,083 |

Probe 11 (Lichttransmissionsgrad = 28,4%)

| Komponenten | Gew-% | Gew-% (Beispiel) |
|---|---|---|
| Li2O | 2,8 - 4,7 | 3,8 |
| Na2O | 0,4 - 0,7 | 0,6 |
| K2O | 0,1 - 0,2 | 0,2 |
| MgO | 0,2 - 0,4 | 0,3 |
| CaO | 0,3 - 0,5 | 0,4 |
| SrO | 0 - 0,1 | 0,1 |
| BaO | 1,2 - 2 | 1,6 |
| ZnO | 1,2 - 2 | 1,6 |
| Al2O3 | 15,8 - 26,3 | 21,0 |
| SiO2 | 49,4 - 82,3 | 65,8 |
| TiO2 | 2 - 3,4 | 2,7 |
| ZrO2 | 1,2 - 2 | 1,6 |
| P2O5 | 0 - 0,1 | 0,05 |
| SnO2 | 0,2 - 0,3 | 0,26 |
| Fe2O3 | 0 - 0,1 | 0,058 |
| V2O5 | 0 - 0,1 | 0,012 |
| MnO2 | 0 - 0,1 | 0,012 |
| Nd2O3 | 0 - 0,1 | 0,029 |

Probe 12 (Lichttransmissionsgrad = 31,5%)

| Komponenten | Gew-% | Gew-% (Beispiel) |
|---|---|---|
| Li2O | 2, 9 - 4,9 | 3,9 |
| Na2O | 0,5 - 0,8 | 0,6 |
| K2O | 0,2 - 0,3 | 0,3 |
| MgO | 0,2 - 0,4 | 0,3 |
| CaO | 0,3 - 0,5 | 0,4 |
| BaO | 1,7 - 2,8 | 2,3 |
| ZnO | 1,2 - 2 | 1,6 |
| Al2O3 | 15,7 - 26,2 | 20,9 |
| SiO2 | 48,6 - 81 | 64,8 |
| TiO2 | 2,3 - 3,9 | 3,1 |
| ZrO2 | 1 - 1,7 | 1,4 |
| SnO2 | 0,2 - 0,3 | 0,25 |
| Fe2O3 | 0 - 0,1 | 0,095 |
| V2O5 | 0 - 0,1 | 0,004 |
| MnO2 | 0 - 0,1 | 0,025 |

Probe 13 (Lichttransmissionsgrad = 35,9%)

| Komponenten | Gew-% | Gew-% (Beispiel) |
|---|---|---|
| Li2O | 2, 9 - 4,9 | 3,9 |
| Na2O | 0,5 - 0,8 | 0,6 |
| K2O | 0,2 - 0,3 | 0,3 |
| MgO | 0,2 - 0,4 | 0,3 |
| CaO | 0,3 - 0,5 | 0,4 |
| BaO | 1,7 - 2,8 | 2,3 |
| ZnO | 1,2 - 2 | 1,6 |
| Al2O3 | 15,7 - 26,2 | 20,9 |
| SiO2 | 48,6 - 81 | 64,8 |
| TiO2 | 2,3 - 3,9 | 3,1 |
| ZrO2 | 1 - 1,7 | 1,4 |
| SnO2 | 0,2 - 0,3 | 0,25 |
| Fe2O3 | 0,1 - 0,1 | 0,095 |
| V2O5 | 0 - 0,1 | 0,004 |
| MnO2 | 0 - 0 | 0,025 |

Probe 14 (Lichttransmissionsgrad = 41,9%)

| Komponenten | Gew-% | Gew-% (Beispiel) |
|---|---|---|
| Li2O | 2,8 - 4,7 | 3,8 |
| Na2O | 0,4 - 0,7 | 0,6 |
| K2O | 0,1 - 0,2 | 0,2 |
| MgO | 0,2 - 0,4 | 0,3 |
| CaO | 0,3 - 0,5 | 0,4 |
| SrO | 0 - 0,1 | 0,1 |
| BaO | 1,1 - 1,8 | 1,4 |
| ZnO | 1,2 - 2 | 1,6 |
| Al2O3 | 15,8 - 26,3 | 21,0 |
| SiO2 | 49,5 - 82,5 | 66,0 |
| TiO2 | 1,9 - 3,2 | 2,6 |

(fortgesetzt)

| Komponenten | Gew-% | Gew-% (Beispiel) |
|---|---|---|
| ZrO2 | 1,3 - 2,1 | 1,7 |
| P2O5 | 0 - 0,1 | 0,05 |
| SnO2 | 0,2 - 0,3 | 0,27 |
| Fe2O3 | 0 - 0,1 | 0,048 |
| V2O5 | 0 - 0,1 | 0,009 |
| MnO2 | 0 - 0,1 | 0,009 |
| Nd2O3 | 0 - 0,1 | 0,037 |

Probe 15 (Lichttransmissionsgrad = 42,4%)

| Komponenten | Gew-% | Gew-% (Beispiel) |
|---|---|---|
| Li2O | 2, 9 - 4,9 | 3,9 |
| Na2O | 0,5 - 0,8 | 0,6 |
| K2O | 0,2 - 0,3 | 0,3 |
| MgO | 0,2 - 0,4 | 0,3 |
| CaO | 0,3 - 0,5 | 0,4 |
| BaO | 1,7 - 2,8 | 2,3 |
| ZnO | 1,2 - 2 | 1,6 |
| Al2O3 | 15,7 - 26,2 | 20,9 |
| SiO2 | 48,6 - 81 | 64,8 |
| TiO2 | 2,3 - 3,9 | 3,1 |
| ZrO2 | 1 - 1,7 | 1,4 |
| SnO2 | 0,2 - 0,3 | 0,25 |
| Fe2O3 | 0 - 0,1 | 0,095 |
| V2O5 | 0 - 0,1 | 0,004 |
| MnO2 | 0 - 0,1 | 0,025 |

Probe 16 (Lichttransmissionsgrad = 50,1%)

| Komponenten | Gew-% | Gew-% (Beispiel) |
|---|---|---|
| Li2O | 3-5 | 3,80 |
| Na2O | 0-<3 | 0,60 |
| K2O | 0-<3 | 0,25 |
| MgO | 0-3 | 0,29 |
| CaO | 0-4 | 0,40 |
| SrO | 0-4 | 0,02 |
| BaO | 0-4 | 2,23 |
| ZnO | 0-4 | 1,53 |
| Al2O3 | 18-25 | 20,9 |
| SiO2 | 60-70 | 65,0 |
| TiO2 | 1,5-5,5 | 3,10 |
| ZrO2 | 0-2,5 | 1,38 |
| P2O5 | 0-5 | 0,09 |
| SnO2 | 0,1-<0,7 | 0,25 |
| Fe2O3 | 0,01-0,025 | 0,0860 |
| MoO3 | 0,003-0,5 | 0,0130 |
| MnO2 | 0-0,05 | 0,025 |

Probe 17 (Lichttransmissionsgrad = 53,0%)

| Komponenten | Gew-% | Gew-% (Beispiel) |
|---|---|---|
| Li2O | 2,8 - 4,6 | 3,7 |
| Na2O | 0,4 - 0,7 | 0,6 |
| K2O | 0,2 - 0,3 | 0,3 |
| MgO | 0,3 - 0,5 | 0,4 |
| CaO | 0,3 - 0,5 | 0,4 |
| BaO | 1,7 - 2,9 | 2,3 |
| ZnO | 1,1 - 1,9 | 1,5 |
| Al2O3 | 15,7 - 26,1 | 20,9 |
| SiO2 | 48,6 - 81 | 64,8 |
| TiO2 | 2,3 - 3,9 | 3,1 |
| ZrO2 | 1 - 1,7 | 1,4 |
| SnO2 | 0,2 - 0,3 | 0,24 |
| Fe2O3 | 0 - 0,1 | 0,083 |
| CoO | 0 - 0,1 | 0,005 |
| Nd2O3 | 0,3 - 0,6 | 0,44 |

Probe 18 (Lichttransmissionsgrad = 55,3%)

| Komponenten | Gew-% | Gew-% (Beispiel) |
|---|---|---|
| Li2O | 2,1 - 3,5 | 2,8 |
| Na2O | 0,4 - 0,7 | 0,6 |
| K2O | 0,2 - 0,3 | 0,3 |
| MgO | 1,2 - 2 | 1,6 |
| CaO | 0,3 - 0,5 | 0,4 |
| BaO | 1,7 - 2,9 | 2,3 |
| ZnO | 1,1 - 1,9 | 1,5 |
| Al2O3 | 15,7 - 26,1 | 20,9 |
| SiO2 | 48,7 - 81,1 | 64,9 |
| TiO2 | 2,3 - 3,9 | 3,1 |
| ZrO2 | 1 - 1,7 | 1,4 |
| SnO2 | 0,2 - 0,3 | 0,24 |
| Fe2O3 | 0 - 0,1 | 0,083 |
| CoO | 0 - 0,1 | 0,005 |

Probe 19 (Lichttransmissionsgrad = 56,4%)

| Komponenten | Gew-% | Gew-% (Beispiel) |
|---|---|---|
| Li2O | 2,8 - 4,6 | 3,7 |
| Na2O | 0,4 - 0,7 | 0,6 |
| K2O | 0,2 - 0,3 | 0,3 |
| MgO | 0,3 - 0,5 | 0,4 |
| CaO | 0,3 - 0,5 | 0,4 |
| BaO | 1,7 - 2,9 | 2,3 |
| ZnO | 1,1 - 1,9 | 1,5 |
| Al2O3 | 15,7 - 26,1 | 20,9 |
| SiO2 | 48,6 - 80,9 | 64,8 |
| TiO2 | 2,3 - 3,9 | 3,1 |
| ZrO2 | 1 - 1,7 | 1,4 |
| SnO2 | 0,2 - 0,3 | 0,24 |

(fortgesetzt)

| Komponenten | Gew-% | Gew-% (Beispiel) |
|---|---|---|
| Fe2O3 | 0 - 0,1 | 0,083 |
| Nd2O3 | 0,4 - 0,6 | 0,5 |

Probe 20 (Lichttransmissionsgrad = 64,7)

| Komponenten | Gew-% | Gew-% (Beispiel) |
|---|---|---|
| Li2O | 2,9 - 4,8 | 3,9 |
| Na2O | 0,5 - 0,8 | 0,6 |
| K2O | 0,2 - 0,3 | 0,3 |
| MgO | 0,2 - 0,4 | 0,3 |
| CaO | 0,3 - 0,5 | 0,4 |
| BaO | 1,7 - 2,8 | 2,3 |
| ZnO | 1,1 - 1,9 | 1,5 |
| Al2O3 | 15,7 - 26,2 | 20,9 |
| SiO2 | 48,6 - 81 | 64,8 |
| TiO2 | 2,3 - 3,9 | 3,1 |
| ZrO2 | 1 - 1,7 | 1,4 |
| SnO2 | 0,2 - 0,3 | 0,25 |
| Fe2O3 | 0 - 0,2 | 0,100 |
| MnO2 | 0,2 - 0,3 | 0,200 |

Probe 21 (Lichttransmissionsgrad = 69,7%)

| Komponenten | Gew-% | Gew-% (Beispiel) |
|---|---|---|
| Li2O | 2,9 - 4, 8 | 3,9 |
| Na2O | 0,5 - 0,8 | 0,6 |
| K2O | 0,2 - 0,3 | 0,3 |
| MgO | 0,2 - 0,4 | 0,3 |
| CaO | 0,3 - 0,5 | 0,4 |
| BaO | 1,7 - 2,8 | 2,3 |
| ZnO | 1,1 - 1,9 | 1,5 |
| Al2O3 | 15,7 - 26,2 | 21,0 |
| SiO2 | 48,7 - 81,1 | 64,9 |
| TiO2 | 2,3 - 3,9 | 3,1 |
| ZrO2 | 1 - 1,7 | 1,4 |
| SnO2 | 0,2 - 0,3 | 0,25 |
| Fe2O3 | 0 - 0,2 | 0,100 |
| MnO2 | 0 - 0,1 | 0,025 |

Insbesondere kann im Rahmen der Erfindung eine Zusammensetzung vorgesehen sein, welche eine oder mehrere der folgenden Komponenten mit dem entsprechenden Anteil (Gew-%) umfasst:

| Komponenten | Gew-% |
|---|---|
| Li2O | 2,7 - 4 |
| Na2O | 0,5 - 0,7 |
| K2O | 0,1 - 0,4 |
| MgO | 0,2 - 1,7 |
| CaO | 0,3 - 0,6 |
| SrO | 0 - 0,1 |
| BaO | 1,3 - 2,4 |

(fortgesetzt)

| Komponenten | Gew-% |
|---|---|
| ZnO | 0,9 - 1,8 |
| Al2O3 | 19,5 - 22,5 |
| SiO2 | 63 - 67 |
| TiO2 | 2,5 - 3,25 |
| ZrO2 | 0,9 - 1,8 |
| P2O5 | 0 - 0,12 |
| SnO2 | 0,2 - 0,35 |
| Fe2O3 | 0,03 - 0,16 |
| V2O5 | 0 - 0,025 |
| MnO2 | 0 - 0,3 |
| CoO | 0 - 0,08 |
| Nd2O3 | 0 - 0,6 |

Bezugszeichenliste:

| | |
|---|---|
| 1 | Grauwertmesseinrichtung |
| 2 | Dunkelkammer |
| 3 | Auflage |
| 5 | Kochfeld |
| 10 | Glas- oder Glaskeramiksubstrat |
| 12 | Innenbeschichtung |
| 20 | Anzeigeeinrichtung |
| 22 | Anzeigefläche |
| 30 | RAL-Karte |
| 32 | RAL-Karte |
| 42 | Kamera |
| 44 | Objektiv |
| 46 | Filter |
| 50 | Messfenster |
| 52 | Messfenster |
| 54 | Messfenster |
| 56 | Messfenster |
| 60 | Anzeigefenster |
| 80 | Zone |
| 90 | Zone |
| 100 | Kochbereich |
| 112 | Trägersubstrat, Folie |
| 113 | Außenbeschichtung, Folie |
| 114 | Bereich |

**Patentansprüche**

1. Kochfeld für ein Kochgerät umfassend

ein Glas- oder Glaskeramiksubstrat mit einer einem Außenbereich zugewandten Substrataußenseite und einer gegenüberliegenden, einem Innenbereich, insbesondere einem Innenbereich des Kochfelds oder Kochgeräts zugewandten Substratinnenseite,
zumindest eine Anzeigeeinrichtung mit einer Anzeigefläche zur Darstellung von Informationen durch Aussendung von Licht, ausgebildet als graphisches, selektiv ansteuerbares, vorzugsweise farbige Pixel umfassendes Display,

wobei die Anzeigeeinrichtung im Innenbereich, insbesondere im Innenbereich des Kochfelds oder Kochgeräts so angeordnet ist, dass von der Anzeigefläche ausgesendetes Licht durch das Glas- oder Glaskeramiksubstrat hindurchtritt und von einem Benutzer im Außenbereich wahrnehmbar ist,

wobei die Anzeigefläche vom Außenbereich hindurch betrachtet eine Leuchtdichte aufweist, welche größer ist als 60 cd/m$^2$,

wobei zumindest ein Anzeigefenster für das von der Anzeigefläche ausgesendete Licht definiert ist,

wobei das Glas- oder Glaskeramiksubstrat im Bereich der Anzeigefläche bzw. des Anzeigefensters einen Lichttransmissionsgrad ($\tau_{vis}$) aufweist, welcher im Bereich von 5 % bis 70 %, vorzugsweise im Bereich von 7 % bis 55 %, besonders bevorzugt im Bereich von 9 % bis 45 %, ganz besonders bevorzugt im Bereich von 12 % bis 30 % liegt.

2.  Kochfeld gemäß Anspruch 1,
    wobei die Anzeigefläche der Anzeigeeinrichtung eine Leuchtdichte aufweist, welche mindestens 200 cd/m$^2$, vorzugsweise mindestens 300 cd/m$^2$, besonders bevorzugt mindestens 400 cd/m$^2$, ganz besonders bevorzugt mindestens 500 cd/m$^2$ beträgt und welche höchstens 2000 cd/m$^2$, vorzugsweise höchstens 1500 cd/m$^2$, besonders bevorzugt höchstens 1200 cd/m$^2$, ganz besonders bevorzugt höchstens 1000 cd/m$^2$ und nochmals bevorzugter höchstens 800 cd/m$^2$ beträgt.

3.  Kochfeld gemäß Anspruch 1 umfassend eine oberhalb, unterhalb und/oder innerhalb des Glas- oder Glaskeramiksubstrats angeordnete Anordnung, welche das zumindest eine Anzeigefenster für das von der Anzeigefläche ausgesendete Licht definiert.

4.  Kochfeld gemäß Anspruch 1 oder 2, umfassend eine auf der Substratinnenseite aufgebrachte Innenbeschichtung, welche durch partielle Aussparung das zumindest eine Anzeigefenster für das von der Anzeigefläche ausgesendete Licht definiert und insbesondere die Anordnung ausbildet, welche das zumindest eine Anzeigefenster für das von der Anzeigefläche ausgesendete Licht definiert.

5.  Kochfeld gemäß einem der Ansprüche 1, 2, oder 3, wobei die oberhalb, unterhalb und/oder innerhalb des Glas- oder Glaskeramiksubstrats angeordnete Anordnung, welche das zumindest eine Anzeigefenster für das von der Anzeigefläche ausgesendete Licht definiert,

    - eine Außenbeschichtung, vorzugsweise mit einer partiellen Unterbrechung zur Ausbildung eines unbeschichteten Bereiches, welche das Anzeigefenster definiert, welche an der Substrataußenseite angeordnet ist, und/oder
    - eine Folie mit zumindest einer partiellen Aussparung, Beschichtung oder Einfärbung, welche benachbart zur Substratinnenseite oder Substrataußenseite oder an der Substratinnenseite oder der Substrataußenseite angeordnet ist und das Anzeigefenster definiert, und/oder
    - ein Trägermaterial mit zumindest einer Aussparung, Beschichtung oder Einfärbung, welche benachbart zur Substratinnenseite oder Substrataußenseite oder an der Substratinnenseite oder der Substrataußenseite angeordnet ist und das Anzeigefenster definiert, und/oder
    - einen geänderten Lichttransmissionsgrad des Glas- oder Glaskeramiksubstrats 10, insbesondere eine partielle Aufhellung oder Abdunkelung des Glas- oder Glaskeramiksubstrates 10, welche das Anzeigefenster definiert.

6.  Kochfeld gemäß einem der vorhergehenden Ansprüche umfassend:

    eine weitere Anzeigeeinrichtung mit einer weiteren Anzeigefläche zur Darstellung von Informationen durch Aussendung von Licht, insbesondere ausgebildet als Segmentanzeige,
    wobei die auf der Substratinnenseite aufgebrachte Innenbeschichtung, die Außenbeschichtung, die Folie oder das Trägermaterial vorzugsweise durch partielle Aussparung oder das Glas- oder Glaskeramiksubstrat durch einen geänderten Lichttransmissionsgrad, insbesondere eine partielle Aufhellung und/oder Abdunkelung, ein weiteres Anzeigefenster für das von der weiteren Anzeigefläche ausgesendete Licht definiert und
    wobei das Glas- oder Glaskeramiksubstrat im Bereich der weiteren Anzeigefläche bzw. des weiteren Anzeigefensters einen Lichttransmissionsgrad ($\tau_{vis}$) aufweist, welcher im Bereich von 0,5 % bis 5 % liegt.

7.  Kochfeld gemäß einem der vorhergehenden Ansprüche,
    wobei die Anzeigefläche der Anzeigeeinrichtung eine Leuchtdichte aufweist, welche mindestens 200 cd/m$^2$, vorzugsweise mindestens 300 cd/m$^2$, besonders bevorzugt mindestens 400 cd/m$^2$, ganz besonders bevorzugt mindestens 500 cd/m$^2$ beträgt und welche höchstens 2000 cd/m$^2$, vorzugsweise höchstens 1500 cd/m$^2$, besonders

bevorzugt höchstens 1200 cd/m$^2$, ganz besonders bevorzugt höchstens 1000 cd/m$^2$ und nochmals bevorzugter höchstens 800 cd/m$^2$ beträgt.

8. Kochfeld gemäß einem der vorhergehenden Ansprüche

wobei zwischen einem prozentualen Grauwert $G_1$ der Anzeigefläche der Anzeigeeinrichtung im ausgeschalteten Zustand vorzugsweise durch das Glas- oder Glaskeramiksubstrat hindurch betrachtet und

einem prozentualen Grauwert $G_2$ der Innenbeschichtung des Glas- oder Glaskeramiksubstrats

oder einem prozentualen Grauwert $G_2$ einer an der Substratinnenseite angebrachten oder in der Nähe der Substratinnenseite angebrachten Folie oder eines an der Substratinnenseite angebrachten oder in der Nähe der Substratinnenseite angebrachten Trägermaterials, vorzugsweise durch das Glas- oder Glaskeramiksubstrat hindurch betrachtet oder

einem prozentualen Grauwert $G_2$ einer Außenbeschichtung oder

einem prozentualen Grauwert $G_2$ einer an der Substrataußenseite angebrachten oder

einem prozentualen Grauwert $G_2$ einer in der Nähe der Substrataußenseite angebrachten Folie oder

einem prozentualen Grauwert $G_2$ eines an der Substrataußenseite angebrachten oder in der Nähe der Substrataußenseite angebrachten Trägermaterials, oder

einem prozentualen Grauwert $G_2$ eines abgedunkelten Bereichs des Glas- oder Glaskeramiksubstrats, vorzugsweise nicht durch das Glas- oder Glaskeramiksubstrat hindurch sondern direkt betrachtet ein Unterschied $|G_1\text{-}G_2|$ von weniger als 5,0 %, vorzugsweise von weniger als 3,5 %, besonders bevorzugt von weniger 2,5 %, ganz besonders bevorzugt von weniger als 1,5 % besteht,

insbesondere wenn die prozentualen Grauwerte $G_1$ und $G_2$ berechnet sind mittels einer linearen Funktion G als $G_1{=}G(M_1)$ und $G_2{=}G(M_2)$ aus mittels einer Grauwertmesseinrichtung gemessenen Messwerten $M_1$ und $M_2$, wobei der Messwert $M_1$ der Anzeigefläche der Anzeigeeinrichtung im ausgeschalteten Zustand vorzugsweise durch das Glas- oder Glaskeramiksubstrat hindurch betrachtet entspricht und mittels der Grauwertmesseinrichtung gemessen ist und

wobei der Messwert $M_2$ der Innenbeschichtung des Glas- oder Glaskeramiksubstrats oder der an der Substratinnenseite angebrachten oder in der Nähe der Substratinnenseite angebrachten Folie oder des an der Substratinnenseite angebrachten oder in der Nähe der Substratinnenseite angebrachten Trägermaterials, vorzugsweise durch das Glas- oder Glaskeramiksubstrat hindurch betrachtet oder

der Außenbeschichtung oder

der an der Substrataußenseite angebrachten oder in der Nähe der Substrataußenseite angebrachten Folie oder des an der Substrataußenseite angebrachten oder in der Nähe der Substrataußenseite angebrachten Trägermaterials, oder

dem Glas- oder Glaskeramiksubstrat in dessen abgedunkelten Bereich vorzugsweise nicht durch das Glas- oder Glaskeramiksubstrat hindurch, sondern direkt betrachtet entspricht und mittels der Grauwertmesseinrichtung gemessen ist und

wobei die lineare Funktion G vorzugsweise dadurch definiert ist, dass diese einem Messwert, welcher einer RAL-Karte mit RAL-Farbe 9017 entspricht und mittels der Grauwertmesseinrichtung gemessenen ist, einen prozentualen Grauwert von 20 % zuordnet und einem Messwert, welcher einer RAL-Karte mit RAL-Farbe 7012 entspricht und mittels der Grauwertmesseinrichtung gemessen ist, einen prozentualen Grauwert von 90 % zuordnet und

wobei die Grauwertmesseinrichtung vorzugsweise eine Kamera umfasst und eingerichtet ist, ein Graustufenbild von der Anzeigefläche der Anzeigeeinrichtung im ausgeschalteten Zustand vorzugsweise durch das Glas- oder Glaskeramiksubstrat hindurch betrachtet, und der Innenbeschichtung des Glas- oder Glaskeramiksubstrats oder der an der Substratinnenseite angebrachten oder in der Nähe der Substratinnenseite angebrachten Folie oder des an der Substratinnenseite angebrachten oder in der Nähe der Substratinnenseite angebrachten Trägermaterials, vorzugsweise durch das Glas- oder Glaskeramiksubstrat hindurch betrachtet, der Außenbeschichtung oder

der an der Substrataußenseite angebrachten oder in der Nähe der Substrataußenseite angebrachten Folie oder des an der Substrataußenseite angebrachten oder in der Nähe der Substrataußenseite angebrachten Trägermaterials, oder

dem Glas- oder Glaskeramiksubstrat in dessen abgedunkelten Bereich vorzugsweise nicht durch das Glas- oder Glaskeramiksubstrat hindurch, sondern direkt betrachtet,

der RAL-Karte mit RAL-Farbe 9017 und der RAL-Karte mit RAL-Farbe 7012 aufzunehmen und die zugehörigen Messwerte bereitzustellen.

9. Kochfeld gemäß einem der vorhergehenden Ansprüche,

wobei zwischen einem wahrnehmbaren Farbton $\{L^*_1, \alpha^*_1, b^*_1\}$ oder einer Chromazität $\{\alpha^*_1, b^*_1\}$ der Anzeigefläche der Anzeigeeinrichtung im ausgeschalteten Zustand, vorzugsweise durch das Glas- oder Glaskeramiksubstrat hindurch betrachtet und einem wahrnehmbaren Farbton $\{L_2^*, \alpha_2^*, b_2^*\}$ oder einer Chromazität $\{\alpha_2^*, b_2^*\}$ der Innenbeschichtung des Glas- oder Glaskeramiksubstrats

oder

einem wahrnehmbaren Farbton $\{L^*_2, \alpha^*_2, b^*_2\}$ oder einer Chromazität $\{\alpha_2^*, b_2^*\}$ der an der Substratinnenseite angebrachten oder in der Nähe der Substratinnenseite angebrachten Folie oder

einem wahrnehmbaren Farbton $\{L_2^*, \alpha_2^*, b_2^*\}$ oder einer Chromazität $\{a_2^*, b_2^*\}$ des an der Substratinnenseite angebrachten oder in der Nähe der Substratinnenseite angebrachten Trägermaterials, vorzugsweise durch das Glas- oder Glaskeramiksubstrat hindurch betrachtet oder

einem wahrnehmbaren Farbton $\{L_2^*, \alpha_2^*, b_2^*\}$ oder einer Chromazität $\{\alpha_2^*, b_2^*\}$ einer Außenbeschichtung oder

einem wahrnehmbaren Farbton $\{L_2^*, \alpha_2^*, b_2^*\}$ oder einer Chromazität $\{\alpha_2^*, b_2^*\}$ einer an der Substrataußenseite angebrachten oder

einem wahrnehmbaren Farbton $\{L_2^*, \alpha_2^*, b_2^*\}$ oder einer Chromazität $\{\alpha_2^*, b_2^*\}$ einer in der Nähe der Substrataußenseite angebrachten Folie oder

einem wahrnehmbaren Farbton $\{L_2^*, \alpha_2^*, b_2^*\}$ oder einer Chromazität $\{\alpha_2^*, b_2^*\}$ eines an der Substrataußenseite angebrachten oder in der Nähe der Substrataußenseite angebrachten Trägermaterials, oder

einem wahrnehmbaren Farbton $\{L_2^*, \alpha_2^*, b_2^*\}$ oder einer Chromazität $\{\alpha_2^*, b_2^*\}$ eines abgedunkelten Bereichs des Glas- oder Glaskeramiksubstrats, vorzugsweise nicht durch das Glas- oder Glaskeramiksubstrat hindurch sondern direkt betrachtet eine Chromazitätsdifferenz $\Delta C^* = \sqrt{(a_2^* - a_1^*)^2 + (b_2^* - b_1^*)^2}$ von weniger als 8,0, vorzugsweise von weniger als 6,0, besonders bevorzugt von weniger als 4,5, ganz besonders bevorzugt von weniger als 3,0 besteht,

insbesondere, wenn die Farbtöne $\{L_1^*, \alpha_1^*, b_1^*\}$ und $\{L_2^*, \alpha_2^*, b_2^*\}$ oder die Chromazitäten $\{a_1^*, b_1^*\}$ und $\{a_2^*, b_2^*\}$ gemessen sind unter den Normbedingungen D65-Normlichtund 2°-Normalbeobachter.

10. Kochfeld gemäß einem der vorstehenden Ansprüche,

wobei die Anzeigefläche der Anzeigeeinrichtung im ausgeschalteten Zustand bei unmittelbarer Betrachtung einen wahrnehmbaren Farbton $\{L^*, a^*, b^*\}$ mit $25 < L^* < 45$ und/oder $-2 < a^* < 0$ und/oder $-1{,}7 < b^* < 3{,}0$ und/oder $C^* < 3{,}5$ aufweist,

insbesondere, wenn der Farbton gemessen ist unter den Normbedingungen D65-Normlicht und 2°-Normalbeobachter.

11. Kochfeld gemäß einem der vorstehenden Ansprüche,
wobei die Innenbeschichtung **dadurch gekennzeichnet ist, dass**, wenn sie aufgebracht ist auf einer der Oberflächen eines hochtransmissiven Substrats, insbesondere mit einem Lichttransmissionsgrad von über 80%, vorzugsweise von über 90%, besonders bevorzugt von über 95%, auf der gegenüberliegenden Substratoberfläche betrachtet durch das Substrat hindurch ein wahrnehmbarer Farbton $\{L^*, a^*, b^*\}$ mit $27 < L^* < 30$ und/oder $-0{,}6 < a^* < 0$ und/oder $-2 < b^* < 0$ und/oder $C^* < 2$ besteht.

12. Kochfeld gemäß einem der vorhergehenden Ansprüche,

wobei zwischen einem Rückstrahlvermögen $\rho_1$ der Anzeigefläche der Anzeigeeinrichtung im ausgeschalteten Zustand und einem Rückstrahlvermögen $\rho_2$ der Innenbeschichtung des Glas- oder Glaskeramiksubstrats, vorzugsweise durch das Glas- oder Glaskeramiksubstrat hindurch betrachtet oder

einem Rückstrahlvermögen $\rho_2$ der an der Substratinnenseite angebrachten oder in der Nähe der Substratinnenseite angebrachten Folie oder

einem Rückstrahlvermögen $\rho_2$ des an der Substratinnenseite angebrachten oder in der Nähe der Substratinnenseite angebrachten Trägermaterials, vorzugsweise durch das Glas- oder Glaskeramiksubstrat hindurch betrachtet oder

einem Rückstrahlvermögen $\rho_2$ einer Außenbeschichtung oder

einem Rückstrahlvermögen $\rho_2$ einer an der Substrataußenseite angebrachten oder
einem Rückstrahlvermögen $\rho_2$ einer in der Nähe der Substrataußenseite angebrachten Folie oder

einem Rückstrahlvermögen $\rho_2$ eines an der Substrataußenseite angebrachten oder in der Nähe der Substrataußenseite angebrachten Trägermaterials, oder

einem Rückstrahlvermögen $\rho_2$ eines abgedunkelten Bereichs des Glas- oder Glaskeramiksubstrats, vorzugsweise nicht durch das Glas- oder Glaskeramiksubstrat hindurch sondern direkt betrachtet, ein Unterschied $|\rho_1 - \rho_2|$ von weniger als 3 %, bevorzugt von weniger als 1,5 % besteht und die Rückstrahlvermögen als

$$\rho_1 = \frac{\int_{S_1}^{S_2} R_1(\lambda)\,d\lambda}{\int_{S_1}^{S_2} d\lambda}, \quad \rho_2 = \frac{\int_{S_1}^{S_2} R_2(\lambda)\,d\lambda}{\int_{S_1}^{S_2} d\lambda}$$

mit Integrationsgrenzen $S1 = 400nm$ und $S_2 = 700nm$ definiert sind,

wobei $R_1(\lambda)$ die spektrale Reflektivität der Anzeigefläche der Anzeigeeinrichtung im ausgeschalteten Zustand bezeichnet und $R_2(\lambda)$ die spektrale Reflektivität der Innenbeschichtung des Glas- oder Glaskeramiksubstrats bezeichnet.

**13.** Kochfeld gemäß einem der vorhergehenden Ansprüche umfassend
einen Kantenkontrastminimierungsbereich, welcher einen graduellen Übergang zwischen dem Grauwert und/oder dem Farbton der im ausgeschalteten Zustand durch das Glas- oder Glaskeramiksubstrat im Bereich des Anzeigefensters hindurch betrachteten Anzeigefläche und dem Grauwert und/oder dem Farbton der durch das Glas- oder Glaskeramiksubstrat hindurch betrachten Innenbeschichtung oder einer an der Innenseite des Glas- oder Glaskeramiksubstrats oder in deren Nähe angebrachten Folie oder einem an der Innenseite des Glas- oder Glaskeramiksubstrats oder in deren Nähe angebrachten Trägermaterials oder einer an der Außenseite des Glas- oder Glaskeramiksubstrats oder in deren Nähe angebrachten Folie oder einem an der Außenseite des Glas- oder Glaskeramiksubstrats oder in deren Nähe angebrachten Trägermaterials erzeugt.

**14.** Kochfeld gemäß einem der vorhergehenden Ansprüche,
wobei das Anzeigefenster und/oder das weitere Anzeigefenster **dadurch gekennzeichnet ist, dass** die partielle Aussparung der Innenbeschichtung, der Außenbeschichtung, der Folie oder des Trägermaterials oder die Aufhellung des Glas- oder Glaskeramiksubstrats rasterartig ausgeführt ist, vorzugsweise in Form von Linien, Punkten, eines gleichmäßigen und/oder stochastischen Rasters oder Punktrasters ausgeführt ist, insbesondere, um im Mittel eine Verminderung des Lichttransmissionsgrades ($\tau_{vis}$) zu bewirken.

**15.** Kochfeld gemäß einem der vorstehenden Ansprüche, wobei die Anzeigefläche und/oder die weitere Anzeigefläche vom Außenbereich durch das Glaskeramikelement hindurch betrachtet eine Leuchtdichte aufweist, welche größer ist als 100 cd/m$^2$, besonders bevorzugt größer ist als 150 cd/m$^2$, ganz besonders bevorzugt größer ist als 200 cd/m$^2$.

**16.** Kochfeld gemäß einem der vorstehenden Ansprüche umfassend

zumindest einen im Innenbereich angeordneten Heizkörper zur Erwärmung eines auf der Substrataußenseite aufgestellten Kochgeschirrs und/oder
zumindest einen im Innenbereich angeordneten Infrarotsensor insbesondere zur Messung der Temperatur eines auf der Substrataußenseite aufgestellten Kochgeschirrs,
wobei das Glas- oder Glaskeramiksubstrat im Bereich des Heizkörpers und/oder des Infrarotsensors (E) einen Lichttransmissionsgrad ($\tau_{vis}$) aufweist, welcher geringer ist als 5 %, vorzugsweise geringer ist als 1,5 %, besonders bevorzugt geringer ist als 1 % und nochmals bevorzugter geringer ist als 0,5%.

**17.** Kochfeld gemäß einem der vorstehenden Ansprüche, wobei das Glas- oder Glaskeramiksubstrat ein LAS-System umfasst.

**18.** Kochfeld gemäß einem der vorstehenden Ansprüche, bei welchem das Glas- oder Glaskeramiksubstrat volumengefärbt ist.

**19.** Kochfeld gemäß einem der vorstehenden Ansprüche, wobei das Glas- oder Glaskeramiksubstrat transparent ist.

**20.** Kochfeld gemäß einem der vorstehenden Ansprüche, wobei das Glas- oder Glaskeramiksubstrat im Bereich des Anzeigefensters eine spektrale Transmissionscharakteristik aufweist, welche als Neutral- oder Graufilter ausgeführt ist, wobei die Transmission über den spektralen Bereich von 380nm bis 780nm, vorzugsweise über den spektralen Bereich von **400nm** bis 700nm, besonders bevorzugt über den spektralen Bereich von 450nm bis 650nm höchstens um ± 20 % schwankt, vorzugsweise höchstens um ± 15 % schwankt, besonders bevorzugt höchstens um ± 10 % schwankt.

21. Kochfeld gemäß einem der vorstehenden Ansprüche, wobei die Innenbeschichtung einen Lichttransmissionsgrad ($\tau_{vis}$) aufweist, welcher im Bereich von < 0,5 % liegt, bevorzugt im Bereich von < 0,005 % und besonders bevorzugt im Bereich von 0 bis 0,00005 %.

22. Kochfeld gemäß einem der vorstehenden Ansprüche, wobei die Substrataußenseite des Glas- oder Glaskeramiksubstrats mit einer Außenbeschichtung, welche insbesondere ein Dekor ausbildet und/oder mit einer Kratzschutzschicht versehen ist und/oder wobei das Glas- oder Glaskeramiksubstrat poliert ist.

23. Kochfeld gemäß einem der vorstehenden Ansprüche, wobei die Innenbeschichtung und/oder die Außenbeschichtung des Glas- oder Glaskeramiksubstrats als Sputterschicht ausgebildet ist und/oder eine Lüsterfarbe umfasst und/oder mittels Solgel, physikalischer Gasphasenabscheidung und/oder Sputtern erzeugt ist.

24. Kochfeld gemäß einem der vorstehenden Ansprüche umfassend eine Farbkompensationsschicht, welche vorzugsweise als weitere Beschichtung des Glas- oder Glaskeramiksubstrats ausgebildet ist.

25. Kochfeld gemäß einem der vorstehenden Ansprüche umfassend eine elektrisch leitfähige Schicht, welche ausgebildet ist, eine Berührung der dem Außenbereich zugewandten Substrataußenseite durch den Benutzer zu detektieren.

26. Kochfeld gemäß dem vorstehenden Anspruch, wobei die elektrisch leitfähige Schicht als weitere Beschichtung des Glas- oder Glaskeramiksubstrats, insbesondere auf der Substratinnenseite, ausgebildet ist.

27. Kochfeld gemäß einem der zwei vorstehenden Ansprüche, wobei die elektrisch leitfähige Schicht auf der Anzeigefläche der Anzeigeeinrichtung und/oder der weiteren Anzeigefläche der weiteren Anzeigeeinrichtung angeordnet ist.

28. Kochfeld gemäß einem der vorstehenden Ansprüche, wobei die Anzeigeeinrichtung und/oder die weitere Anzeigeeinrichtung unmittelbar an der dem Innenbereich zugewandten Substratinnenseite angebracht ist.

29. Kochfeld gemäß einem der vorstehenden Ansprüche, wobei die Anzeigeeinrichtung und/oder die weitere Anzeigeeinrichtung beabstandet zu der dem Innenbereich zugewandten Substratinnenseite angeordnet ist.

30. Kochfeld gemäß einem der vorstehenden Ansprüche, wobei das Glas- oder Glaskeramiksubstrat eine Dicke im Bereich von 0,1 bis 10 Millimeter, vorzugsweise im Bereich von 1 bis 5 Millimeter, besonders bevorzugt im Bereich von 2 bis 4 Millimeter aufweist.

31. Kochgerät, insbesondere Induktionskochgerät, umfassend ein Kochfeld nach einem der vorstehenden Ansprüche.


**Claims**

1. A cooking hob for a cooking appliance, comprising:

   a glass or glass ceramic substrate having a substrate outer face facing an exterior and an opposite substrate inner face facing an interior, in particular an interior of the cooking hob or cooking appliance;
   at least one display device with a display surface for displaying information by emission of light, in particular in the form of a graphical selectively controllable, preferably coloured pixel display;
   wherein the display device is arranged in the interior, in particular in the interior of the cooking hob or cooking appliance, such that light emitted from the display surface passes through the glass or glass ceramic substrate and is perceptible by a user in the exterior;
   wherein the display surface, when viewed from the exterior, has a luminance of greater than 60 cd/m$^2$,
   wherein at least one display window is defined for the light emitted from the display surface;
   wherein within the range of the display surface or display window, the glass or glass ceramic substrate has a light transmittance ($\tau_{vis}$) in a range from 5 % to 70 %, preferably in a range from 7 % to 55 %, more preferably in a range from 9 % to 45 %, most preferably in a range from 12 % to 30 %.

**2.** The cooking hob according to claim 1, wherein the display surface of the display device exhibits a luminance of at least 200 cd/m$^2$, preferably at least 300 cd/m$^2$, more preferably at least 400 cd/m$^2$, most preferably at least 500 cd/m$^2$, and of at most 2000 cd/m$^2$, preferably not more than 1500 cd/m$^2$, more preferably not more than 1200 cd/m$^2$, even more preferably not more than 1000 cd/m$^2$, and most preferably not more than 800 cd/m$^2$.

**3.** The cooking hob according to claim 1, comprising an arrangement disposed above, below, and/or within the glass or glass ceramic substrate, which defines the at least one display window for the light emitted from the display surface.

**4.** The cooking hob according to claim 1 or 2, comprising an inner coating applied on the substrate inner face, which defines the at least one display window for the light emitted from the display surface by partially being omitted, and in particular forms the arrangement which defines the at least one display window for the light emitted from the display surface.

**5.** The cooking hob according to any one of claims 1, 2, or 3, wherein the arrangement disposed above, below, and/or within the glass or glass ceramic substrate, which defines the at least one display window for the light emitted from the display surface

- is an outer coating, preferably with a partial discontinuity to form a non-coated area defining the display window, which outer coating is disposed on the outer face of the substrate; and/or
- is a film with at least one partial opening, coating or colouration, which is arranged adjacent to the substrate inner face or to the substrate outer face or on the substrate inner face or on the substrate outer face, and which defines the display window; and/or
- is a carrier material having at least one opening, coating or colouration, which is arranged adjacent to the substrate inner face or to the substrate outer face or on the substrate inner face or on the substrate outer face, and which defines the display window; and/or
- is an altered light transmittance of the glass or glass ceramic substrate 10, in particular a partial lightening or darkening of the glass or glass ceramic substrate 10, which defines the display window.

**6.** The cooking hob according to any one of the preceding claims, comprising:

a further display device with a further display surface for displaying information by emission of light, in particular in the form of a segment display;
wherein a further display window for the light emitted from the further display surface is defined by any of the inner coating applied to the inner face of the substrate, the outer coating, the film, or the carrier material, preferably by partial discontinuities, or by an altered light transmittance of the glass or glass ceramic substrate, in particular a partial lightening and/or darkening;
wherein within the range of the further display surface or the further display window, the glass or glass ceramic substrate has a light transmittance ($\tau_{vis}$) in a range from 0.5 % to 5%.

**7.** The cooking hob according to any one of the preceding claims, wherein the display surface of the display device exhibits a luminance of at least 200 cd/m$^2$, preferably at least 300 cd/m$^2$, more preferably at least 400 cd/m$^2$, most preferably at least 500 cd/m$^2$, and of at most 2000 cd/m$^2$, preferably not more than 1500 cd/m$^2$, more preferably not more than 1200 cd/m$^2$, even more preferably not more than 1000 cd/m$^2$, and most preferably not more than 800 cd/m$^2$.

**8.** The cooking hob according to any one of the preceding claims,

wherein between a percentage grayscale value $G_1$ of the display surface of the display device in its off state, preferably viewed through the glass or glass ceramic substrate, and
a percentage grayscale value $G_2$ of the inner coating of the glass or glass ceramic substrate or
a percentage grayscale value $G_2$ of a film applied to the substrate inner face or applied near the substrate inner face or of a carrier material applied to the substrate inner face or applied near the substrate inner face, preferably viewed through the glass or glass ceramic substrate, or
a percentage grayscale value $G_2$ of an outer coating or
a percentage grayscale value $G_2$ of a film applied to the substrate outer face or applied near the substrate outer face or
a percentage grayscale value $G_2$ of a carrier material applied to the substrate outer face or applied near the substrate outer face or

a percentage grayscale value $G_2$ of a darkened portion of the glass or glass ceramic substrate, preferably not viewed through the glass or glass ceramic substrate but directly,

a difference $|G_1\text{-}G_2|$ is less than 5.0 %, preferably less than 3.5 %, more preferably less than 2.5 %, most preferably less than 1.5 %,

in particular if the percentage grayscale values $G_1$ and $G_2$ are calculated using a linear function G as $G_1 = G(M_1)$ and $G_2 = G(M_2)$ based on measured values $M_1$ and $M_2$ measured using a grayscale meter;

wherein the measured value $M_1$ corresponds to the display surface of the display device in its off state, preferably viewed through the glass or glass ceramic substrate, and is measured using the grayscale meter, and

wherein the measured value $M_2$ corresponds to the inner coating of the glass or glass ceramic substrate or

to the film applied to the substrate inner face or applied near the substrate inner face or

to the carrier material applied to the substrate inner face or applied near the substrate inner face, preferably viewed through the glass or glass ceramic substrate, or

to the outer coating or

to the film applied to the substrate outer face or applied near the substrate outer face or

to the carrier material applied to the substrate outer face or applied near the substrate outer face or

to the glass or glass ceramic substrate in its darkened portion, preferably not viewed through the glass or glass ceramic substrate but directly, and is measured using the grayscale meter; and

wherein the linear function G is preferably defined by the fact of matching a percentage grayscale value of 20 % to a measured value corresponding to a RAL card with colour RAL 9017 and measured by the grayscale meter, and a percentage grayscale value of 90 % to a measured value corresponding to a RAL card with colour RAL 7012 and measured by the grayscale meter; and

wherein the grayscale meter preferably comprises a camera and is configured to take a grayscale image of the display surface of the display device in its off state, preferably viewed through the glass or glass ceramic substrate, and of the inner coating of the glass or glass ceramic substrate or

of the film applied to the substrate inner face or applied near the substrate inner face or

of the carrier material applied to the substrate inner face or applied near the substrate inner face, preferably viewed through the glass or glass ceramic substrate, or of the outer coating or

of the film applied to the substrate outer face or applied near the substrate outer face, or

of the carrier material applied to the substrate outer face or applied near the substrate outer face, or

of the glass or glass ceramic substrate in its darkened portion, preferably not viewed through the glass or glass ceramic substrate, but directly,

of the RAL card with colour RAL 9017, and of the RAL card with colour RAL 7012; and to provide the associated measured values.

**9.** The cooking hob according to any one of the preceding claims,

wherein between a perceivable colour shade $\{L_1^*, a_1^*, b_1^*\}$ or a chroma $\{a_1^*, b_1^*\}$ of the display surface of the display device in its off state, preferably viewed through the glass or glass ceramic substrate, and a perceivable

colour shade $\{L_2^*, a_2^*, b_2^*\}$ or a chroma $\{a_2^*, b_2^*\}$ of the inner coating of the glass or glass ceramic substrate or

a perceivable colour shade $\{L_2^*, a_2^*, b_2^*\}$ or a chroma $\{a_2^*, b_2^*\}$ of the film applied to the substrate inner face or applied near the substrate inner face or

a perceivable colour shade $\{L_2^*, a_2^*, b_2^*\}$ or a chroma $\{a_2^*, b_2^*\}$ of the carrier material applied to the substrate inner face or applied near the substrate inner face, preferably viewed through the glass or glass ceramic substrate, or

a perceivable colour shade $\{L_2^*, a_2^*, b_2^*\}$ or a chroma $\{a_2^*, b_2^*\}$ of an outer coating or a perceivable colour shade $\{L_2^*, a_2^*, b_2^*\}$ or a chroma $\{a_2^*, b_2^*\}$ of a film applied to the substrate outer face or

a perceivable colour shade $\{L_2^*, a_2^*, b_2^*\}$ or a chroma $\{a_2^*, b_2^*\}$ of a film applied near the substrate outer face or

a perceivable colour shade $\{L_2^*, a_2^*, b_2^*\}$ or a chroma $\{a_2^*, b_2^*\}$ of a carrier material applied to the substrate outer face or applied near the substrate outer face or

a perceivable colour shade $\{L_2^*, a_2^*, b_2^*\}$ or a chroma $\{a_2^*, b_2^*\}$ of a darkened portion of the glass or glass ceramic substrate, preferably not viewed through the glass or glass ceramic substrate, but directly,

a chroma difference $\Delta C^* = \sqrt{(a_2^* - a_1^*)^2 + (b_2^* - b_1^*)^2}$ is less than 8.0, preferably less than 6.0, more preferably less than 4.5, most preferably less than 3.0,
in particular if the colour shades $\{L_1^*, a_1^*, b_1^*\}$ and $\{L_2^*, a_2^*, b_2^*\}$ or chromas $\{a_1^*, b_1^*\}$ and $\{a_2^*, b_2^*\}$ are measured under standard conditions of standard illuminant D65 and 2° standard observer.

10. The cooking hob according to any one of the preceding claims,

   wherein the display surface of the display device in its off state and when viewed directly has a perceivable colour shade $\{L^*, a^*, b^*\}$ with 25 < $L^*$ < 45 and/or -2 < $a^*$ < 0 and/or -1.7 < $b^*$ < 3.0 and/or C* < 3.5; in particular if the colour shade is measured under standard conditions of standard illuminant D65 and 2° standard observer.

11. The cooking hob according to any one of the preceding claims,
   wherein the inner coating, when applied to one of the faces of a highly transmissive substrate, in particular a substrate with a light transmittance of more than 80 %, preferably more than 90 %, most preferably more than 95 %, and when viewed from the opposite face of the substrate through the substrate, is **characterised by** having a perceivable colour shade $\{L^*, a^*, b^*\}$ with 27 < $L^*$ < 30 and/or -0.6 < $a^*$ < 0 and/or -2 < $b^*$ < 0 and/or C* < 2.

12. The cooking hob according to any one of the preceding claims,

   wherein between a reflectance $\rho_1$ of the display surface of the display device in its off state and a reflectance $\rho_2$ of the inner coating of the glass or glass ceramic substrate, preferably viewed through the glass or glass ceramic substrate, or
   a reflectance $\rho_2$ of the film applied to the substrate inner face or applied near the substrate inner face or
   a reflectance $\rho_2$ of the carrier material applied to the substrate inner face or applied near the substrate inner face, preferably viewed through the glass or glass ceramic substrate, or
   a reflectance $\rho_2$ of an outer coating or
   a reflectance $\rho_2$ of a film applied to the substrate outer face or
   a reflectance $\rho_2$ of a film applied near the substrate outer face or
   a reflectance $\rho_2$ of a carrier material applied to the substrate outer face or applied near the substrate outer face or
   a reflectance $\rho_2$ of a darkened portion of the glass or glass ceramic substrate, preferably not viewed through the glass or glass ceramic substrate, but directly,
   there is a difference $|\rho_1 - \rho_2|$ of less than 3 %, preferably less than 1.5 %, with the reflectances being defined

   as $\rho_1 = \dfrac{\int_{S_1}^{S_2} R_1(\lambda)\, d\lambda}{\int_{S_1}^{S_2} d\lambda}, \rho_2 = \dfrac{\int_{S_1}^{S_2} R_2(\lambda)\, d\lambda}{\int_{S_1}^{S_2} d\lambda}$ , with integration limits S$_1$ = 400 nm and S$_2$ = 700 nm,
   wherein $R_1(\lambda)$ denotes the spectral reflectance of the display surface of the display device in its off state, and $R_2(\lambda)$ denotes the spectral reflectance of the inner coating of the glass or glass ceramic substrate.

13. The cooking hob according to any one of the preceding claims, comprising
   an edge contrast minimization area which provides a gradual transition between the grayscale value and/or the colour shade of the display surface in its off state as viewed through the glass or glass ceramic substrate within the range of the display window and the grayscale value and/or the colour shade of the inner coating or of a film applied to or near the inner face of the glass or glass ceramic substrate or of a carrier material applied to or near the inner face of the glass or glass ceramic substrate, viewed through the glass or glass ceramic substrate, or of a film applied to or near the outer face of the glass or glass ceramic substrate or of a carrier material applied to or near the outer face of the glass or glass ceramic substrate.

14. The cooking hob according to any one of the preceding claims,
   wherein the display window and/or the further display window is **characterized in that** the partial discontinuity of the inner coating, of the outer coating, of the film or of the carrier material or the lightening of the glass or glass ceramic substrate is made in a grid-like manner, preferably in the form of lines, dots, a regular and/or stochastic grid or a dot matrix, in particular so as to cause an average reduction in light transmittance ($\tau_{vis}$).

15. The cooking hob according to any one of the preceding claims, wherein the display surface and/or the further display surface, when viewed from the exterior through the glass ceramic element, has a luminance of greater than 100 cd/m$^2$, more preferably greater than 150 cd/m$^2$, most preferably greater than 200 cd/m$^2$.

16. The cooking hob according to any one of the preceding claims, comprising

at least one heating element arranged in the interior, for heating cookware placed on the outer face of the substrate; and/or
at least one infrared sensor arranged in the interior, in particular for measuring a temperature of cookware placed on the outer face of the substrate;
wherein within the range of the heating element and/or of the infrared sensor (E), the glass or glass ceramic substrate exhibits a light transmittance ($\tau_{vis}$) of less than 5 %, preferably less than 1.5 %, more preferably less than 1 %, and most preferably of less than 0.5 %.

17. The cooking hob according to any one of the preceding claims, wherein the glass or glass ceramic substrate comprises an LAS system.

18. The cooking hob according to any one of the preceding claims, wherein the glass or glass ceramic substrate is volume-dyed.

19. The cooking hob according to any one of the preceding claims, wherein the glass or glass ceramic substrate is transparent.

20. The cooking hob according to any one of the preceding claims, wherein within the range of the display window, the glass or glass ceramic substrate exhibits a spectral transmittance characteristic in the form of a neutral or grey filter, wherein the transmittance varies by not more than $\pm$ 20 %, preferably by not more than $\pm$ 15 %, most preferably by not more than $\pm$ 10 % over the spectral range from 380 nm to 780 nm, preferably over the spectral range from 400 nm to 700 nm, most preferably over the spectral range from 450 nm to 650 nm.

21. The cooking hob according to any one of the preceding claims, wherein the inner coating exhibits a light transmittance ($\tau_{vis}$) in a range of < 0.5 %, preferably in a range of < 0.005 %, and most preferably in a range from 0 to 0.00005 %.

22. The cooking hob according to any one of the preceding claims, wherein the substrate outer face of the glass or glass ceramic substrate is provided with an outer coating which in particular provides a decoration, and/or with a scratch-resistant layer, and/or wherein the glass or glass ceramic substrate is polished.

23. The cooking hob according to any one of the preceding claims, wherein the inner coating and/or the outer coating of the glass or glass ceramic substrate is in the form of a sputter-deposited layer and/or comprises a lustre glaze and/or is produced using sol-gel, physical vapour deposition, and/or sputter-deposition.

24. The cooking hob according to any one of the preceding claims comprising a colour compensation layer which is preferably provided as a further coating of the glass or glass ceramic substrate.

25. The cooking hob according to any one of the preceding claims comprising an electrically conductive layer which is provided for detecting a touch by a user on the substrate outer face facing the exterior.

26. The cooking hob according to the preceding claim, wherein the electrically conductive layer is provided as a further coating of the glass or glass ceramic substrate, in particular on the substrate inner face.

27. The cooking hob according to any one of the two preceding claims, wherein the electrically conductive layer is disposed on the display surface of the display device and/or on the further display surface of the further display device.

28. The cooking hob according to any one of the preceding claims, wherein the display device and/or the further display device is mounted directly to the substrate inner face facing the interior.

29. The cooking hob according to any one of the preceding claims, wherein the display device and/or the further display device is arranged spaced apart from the substrate inner face facing the interior.

30. The cooking hob according to any one of the preceding claims, wherein the glass or glass ceramic substrate has a thickness in a range from 0.1 to 10 millimetres, preferably in a range from 1 to 5 millimetres, most preferably in a range from 2 to 4 millimetres.

31. A cooking appliance, in particular an induction cooking appliance, comprising a cooking hob according to any one of the preceding claims.

**Revendications**

1. Table de cuisson destinée à un appareil de cuisson, comprenant

   un substrat en verre ou vitrocéramique avec une face de substrat externe, tournée vers une zone extérieure, et une face de substrat interne située en vis-à-vis et tournée vers une zone intérieure, notamment une zone intérieure de la table de cuisson ou de l'appareil de cuisson,
   au moins un dispositif d'affichage doté d'une surface d'affichage pour la représentation d'informations par émission de lumière, réalisé sous forme d'élément de visualisation graphique à activation sélective, comportant de préférence des pixels de couleur,
   le dispositif d'affichage étant installé dans la zone intérieure, notamment dans la zone intérieure de la table de cuisson ou de l'appareil de cuisson, de manière à ce que la lumière émise par la surface d'affichage traverse le substrat en verre ou vitrocéramique et soit perceptible par un utilisateur dans la zone extérieure,
   la surface d'affichage, lorsqu'on regarde à travers depuis la zone extérieure, présentant une diode électroluminescente qui est plus grande que 60 cd/m$^2$,
   au moins une fenêtre d'affichage étant définie pour la lumière émise par la surface d'affichage,
   le substrat en verre ou vitrocéramique présentant dans la région de la surface d'affichage ou de la fenêtre d'affichage, un facteur de transmission lumineuse ($\tau_{vis}$) qui se situe dans la plage allant de 5 % à 70 %, de préférence dans la plage allant de 7 % à 55 %, de manière particulièrement avantageuse dans la plage allant de 9 % à 45 %, et de manière tout à fait préférée dans la plage allant de 12 % à 30 %.

2. Table de cuisson selon la revendication 1, dans laquelle la surface d'affichage du dispositif d'affichage présente une luminance qui est d'au moins 200 cd/m$^2$, de préférence d'au moins 300 cd/m$^2$, de manière particulièrement avantageuse d'au moins 400 cd/m$^2$, et de manière tout à fait préférée d'au moins 500 cd/m$^2$, et qui est au maximum de 2 000 cd/m$^2$, de préférence au maximum de 1 500 cd/m$^2$, de manière particulièrement avantageuse au maximum de 1 200 cd/m$^2$, de manière tout à fait préférée au maximum de 1 000 cd/m$^2$, et de manière encore plus préférée au maximum de 800 cd/m$^2$.

3. Table de cuisson selon la revendication 1, comprenant un agencement qui est disposé au-dessus, en dessous et/ou à l'intérieur du substrat en verre ou vitrocéramique et qui définit la fenêtre d'affichage, au nombre d'au moins une, pour la lumière émise par la surface d'affichage.

4. Table de cuisson selon la revendication 1 ou 2, comprenant un revêtement intérieur qui est appliqué sur la face de substrat interne et définit, par évidement partiel, la fenêtre d'affichage, au nombre d'au moins une, pour la lumière émise par la surface d'affichage, et qui constitue notamment l'agencement définissant la fenêtre d'affichage, au nombre d'au moins une, pour la lumière émise par la surface d'affichage.

5. Table de cuisson selon l'une des revendications 1, 2 ou 3, dans laquelle l'agencement qui est disposé au-dessus, en dessous et/ou à l'intérieur du substrat en verre ou vitrocéramique et qui définit la fenêtre d'affichage, au nombre d'au moins une, pour la lumière émise par la surface d'affichage,

   - un revêtement extérieur, de préférence avec une interruption partielle pour la formation d'une zone dépourvue de revêtement, définissant la fenêtre d'affichage, qui est disposé sur la face de substrat externe, et/ou
   - un film avec au moins un évidement, un revêtement ou une coloration partiels, qui est disposé à proximité de la face de substrat interne ou de la face de substrat externe ou sur la face de substrat interne ou la face de substrat externe et définit la fenêtre d'affichage, et/ou
   - un matériau support avec au moins un évidement, un revêtement ou une coloration, qui est disposé à proximité de la face de substrat interne ou de la face de substrat externe ou sur la face de substrat interne ou la face de substrat externe et définit la fenêtre d'affichage, et/ou
   - un facteur de transmission lumineuse modifié du substrat en verre ou vitrocéramique 10, notamment un éclaircissement ou un obscurcissement partiel du substrat en verre ou vitrocéramique 10, qui définit la fenêtre d'affichage.

**6.** Table de cuisson selon l'une des revendications précédentes, comprenant

un dispositif d'affichage supplémentaire doté d'une surface d'affichage supplémentaire pour la représentation d'informations par émission de lumière, réalisé notamment sous forme de dispositif d'affichage à segments, le revêtement intérieur, le revêtement extérieur, le film ou le matériau support, appliqué sur la face de substrat interne, définissant une fenêtre d'affichage supplémentaire pour la lumière émise par la surface d'affichage supplémentaire, de préférence par évidement partiel, ou, pour le substrat en verre ou vitrocéramique, du fait d'un facteur de transmission lumineuse modifié, notamment un éclaircissement et/ou un obscurcissement partiel, et

le substrat en verre ou vitrocéramique présentant dans la région de la surface d'affichage supplémentaire ou de la fenêtre d'affichage supplémentaire, un facteur de transmission lumineuse ($\tau_{vis}$) qui se situe dans la plage allant de 5 % à 5 %.

**7.** Table de cuisson selon l'une des revendications précédentes, dans laquelle la surface d'affichage du dispositif d'affichage présente une luminance qui est d'au moins 200 cd/m$^2$, de préférence d'au moins 300 cd/m$^2$, de manière particulièrement avantageuse d'au moins 400 cd/m$^2$, et de manière tout à fait préférée d'au moins 500 cd/m$^2$, et qui est au maximum de 2 000 cd/m$^2$, de préférence au maximum de 1 500 cd/m$^2$, de manière particulièrement avantageuse au maximum de 1 200 cd/m$^2$, de manière tout à fait préférée au maximum de 1 000 cd/m$^2$, et de manière encore plus préférée au maximum de 800 cd/m$^2$.

**8.** Table de cuisson selon l'une des revendications précédentes,

dans laquelle, entre un pourcentage de gris $G_1$ de la surface d'affichage du dispositif d'affichage, à l'état éteint, vu de préférence à travers le substrat en verre ou vitrocéramique, et
un pourcentage de gris $G_2$ du revêtement intérieur du substrat en verre ou vitrocéramique
ou un pourcentage de gris $G_2$ d'un film disposé sur la face de substrat interne ou à proximité de la face de substrat interne ou d'un matériau support disposé sur la face de substrat interne ou à proximité de la face de substrat interne, vu de préférence à travers le substrat en verre ou vitrocéramique, ou
un pourcentage de gris $G_2$ d'un revêtement extérieur, ou
un pourcentage de gris $G_2$ d'un film disposé sur la face de substrat externe, ou
un pourcentage de gris $G_2$ d'un film disposé à proximité de la face de substrat externe, ou
un pourcentage de gris $G_2$ d'un matériau support disposé sur la face de substrat externe ou à proximité de la face de substrat externe, ou
un pourcentage de gris $G_2$ d'une zone obscurcie du substrat en verre ou vitrocéramique, vue de préférence non pas à travers le substrat en verre ou vitrocéramique mais directement, il existe une différence $|G_1\text{-}G_2|$ de moins de 5,0 %, de préférence de moins de 3,5 %, de manière particulièrement avantageuse de moins de 2,5 %, et de manière tout à fait préférée de moins de 1,5 %,
en particulier lorsque les pourcentages de gris $G_1$ et $G_2$ sont calculés à l'aide d'une fonction linéaire G en tant que $G_1$=$G(M_1)$ et $G_2$=$G(M_2)$, à partir de valeurs de mesure $M_1$ et $M_2$ mesurées à l'aide d'un dispositif de valeurs de gris,
la valeur der mesure $M_1$ correspondant à la surface d'affichage du dispositif d'affichage à l'état éteint, vue de préférence à travers le substrat en verre ou vitrocéramique, et est mesurée à l'aide du dispositif de mesure de valeurs de gris, et
la valeur de mesure $M_2$ correspondant au revêtement intérieur du substrat en verre ou vitrocéramique ou
au film disposé sur la face de substrat interne ou à proximité de la face de substrat interne, ou
au matériau support disposé sur la face de substrat interne ou à proximité de la face de substrat interne, vu de préférence à travers le substrat en verre ou vitrocéramique, ou
au revêtement extérieur ou
au film disposé sur la face de substrat externe ou à proximité de la face de substrat externe, ou
au matériau support disposé sur la face de substrat externe ou à proximité de la face de substrat externe, ou
au substrat en verre ou vitrocéramique, dans la zone obscurcie de celui-ci, vue de préférence non pas à travers le substrat en verre ou vitrocéramique mais directement, et est mesurée à l'aide du dispositif de mesure de valeurs de gris, et
dans laquelle la fonction linéaire G est de préférence définie par le fait que celle-ci associe un pourcentage de gris de 20 % à une valeur de mesure qui correspond à une carte RAL avec une couleur RAL 9017 et est mesurée à l'aide du dispositif de mesure de valeurs de gris, et associe un pourcentage de gris de 90 % à une valeur de mesure qui correspond à une carte RAL avec une couleur RAL 7012 et est mesurée à l'aide du dispositif de mesure de valeurs de gris, et

dans laquelle le dispositif de mesure de valeurs de gris comprend de préférence une caméra et est conçu pour réaliser une image en niveaux de gris de la surface d'affichage du dispositif d'affichage, à l'état éteint, vue de préférence à travers le substrat en verre ou vitrocéramique, et du revêtement intérieur du substrat en verre ou vitrocéramique, ou

du film disposé sur la face de substrat interne ou à proximité de la face de substrat interne, ou

du matériau support disposé sur la face de substrat interne ou à proximité de la face de substrat interne, vu de préférence à travers le substrat en verre ou vitrocéramique, du revêtement extérieur, ou

du film disposé sur la face de substrat externe ou à proximité de la face de substrat externe, ou

du matériau support disposé sur la face de substrat externe ou à proximité de la face de substrat externe, ou

du substrat en verre ou vitrocéramique, dans la zone obscurcie de celui-ci, vue de préférence non pas à travers le substrat en verre ou vitrocéramique mais directement,

de la carte RAL avec la couleur RAL 9017 et de la carte RAL avec la couleur RAL 7012 et mettre à disposition les valeurs mesurées associées.

9. Table de cuisson selon l'une des revendications précédentes,

dans laquelle, entre une teinte perceptible $\{L_1^*, a_1^*, b_1^*\}$ ou une chromacité $\{a_1^*, b_1^*\}$ de la surface d'affichage du dispositif d'affichage, à l'état éteint, vue de préférence à travers le substrat en verre ou vitrocéramique, et

une teinte perceptible $\{L_2^*, a_2^*, b_2^*\}$ ou une chromacité $\{a_2^*, b_2^*\}$ du revêtement intérieur du substrat en verre ou vitrocéramique,
ou

une teinte perceptible $\{L_2^*, a_2^*, b_2^*\}$ ou une chromacité $\{a_2^*, b_2^*\}$ du film disposé sur la face de substrat interne ou à proximité de la face de substrat interne, ou

une teinte perceptible $\{L_2^*, a_2^*, b_2^*\}$ ou une chromacité $\{a_2^*, b_2^*\}$ du matériau support disposé sur la face de substrat interne ou à proximité de la face de substrat interne, vu de préférence à travers le substrat en verre ou vitrocéramique, ou

une teinte perceptible $\{L_2^*, a_2^*, b_2^*\}$ ou une chromacité $\{a_2^*, b_2^*\}$ d'un revêtement extérieur, ou

une teinte perceptible $\{L_2^*, a_2^*, b_2^*\}$ ou une chromacité $\{a_2^*, b_2^*\}$ d'un disposé sur la face de substrat externe, ou

une teinte perceptible $\{L_2^*, a_2^*, b_2^*\}$ ou une chromacité $\{a_2^*, b_2^*\}$ d'un film disposé à proximité de la face de substrat externe, ou

une teinte perceptible $\{L_2^*, a_2^*, b_2^*\}$ ou une chromacité $\{a_2^*, b_2^*\}$ d'un matériau support disposé sur la face de substrat externe ou à proximité de la face de substrat externe, ou

une teinte perceptible $\{L_2^*, a_2^*, b_2^*\}$ ou une chromacité $\{a_2^*, b_2^*\}$ d'une zone obscurcie du substrat en verre ou vitrocéramique, vue de préférence non pas à travers le substrat en verre ou vitrocéramique mais directement, il existe une différence de chromacité $\Delta C^* = \sqrt{(a_2^* - a_1^*)^2 + (b_2^* - b_1^*)^2}$ de moins de 8,0 %, de préférence de moins de 6,0 %, de manière particulièrement avantageuse de moins de 4,5 % et de manière tout à fait préférée de moins de 3,0 %,

notamment lorsque les teintes $\{L_1^*, a_1^*, b_1^*\}$ et $\{L_2^*, a_2^*, b_2^*\}$ ou les chromacités $\{a_1^*, b_1^*\}$ et $\{a_2^*, b_2^*\}$ sont mesurées dans les conditions normalisées de lumière normalisée D65 et d'observateur normal 2°.

10. Table de cuisson selon l'une des revendications précédentes,

dans laquelle la surface d'affichage du dispositif d'affichage, à l'état éteint et lors d'une observation directe, présente une teinte perceptible {L*,$\alpha$*,b*} avec 25 < L* < 45 et/ou -2 < $\alpha$* < 0 et/ou -1,7 < b* < 3,0 et/ou C* < 3,5, notamment lorsque la teinte est mesurée dans les conditions normalisées de lumière normalisée D65 et d'observateur normal 2°

11. Table de cuisson selon l'une des revendications précédentes,

dans laquelle le revêtement intérieur est **caractérisé par le fait que**, lorsqu'il est appliqué sur l'une des surfaces d'un substrat hautement transmissif, ayant notamment un facteur de transmission lumineuse supérieur à 80 %, de préférence supérieur à 90 % et de manière particulièrement avantageuse supérieur à 95 %, vu sur la surface opposée du substrat, il existe, vu à travers le substrat, une teinte perceptible {L*,$\alpha$*,b*} avec 27 < L* < 30 et/ou -0,6 < $\alpha$* < 0 et/ou -2 < b* < 0 et/ou C* < 2.

12. Table de cuisson selon l'une des revendications précédentes,

dans laquelle, entre un pouvoir de réflexion $\rho_1$ de la surface d'affichage du dispositif d'affichage, à l'état éteint, et un pouvoir de réflexion $\rho_2$ du revêtement intérieur du substrat en verre ou vitrocéramique, vu de préférence à travers le substrat en verre ou vitrocéramique, ou
un pouvoir de réflexion $\rho_2$ du film disposé sur la face de substrat interne ou à proximité de la face de substrat interne, ou
un pouvoir de réflexion $\rho_2$ du matériau support disposé sur la face de substrat interne ou à proximité de la face de substrat interne, vu de préférence à travers le substrat en verre ou vitrocéramique, ou
un pouvoir de réflexion $\rho_2$ d'un revêtement extérieur, ou
un pouvoir de réflexion $\rho_2$ d'un disposé sur la face de substrat externe, ou
un pouvoir de réflexion $\rho_2$ d'un film disposé à proximité de la face de substrat externe, ou
un pouvoir de réflexion $\rho_2$ d'un matériau support disposé sur la face de substrat externe ou à proximité de la face de substrat externe, ou
un pouvoir de réflexion $\rho_2$ d'une zone obscurcie du substrat en verre ou vitrocéramique, vue de préférence non pas à travers le substrat en verre ou vitrocéramique mais directement, il existe une différence $|\rho_1-\rho_2|$ de moins de 3 %, de préférence de moins de 1,5 %, et les pouvoirs de réflexion sont définis comme

$$\rho_1 = \frac{\int_{S_1}^{S_2} R_1(\lambda)\, d\lambda}{\int_{S_1}^{S_2} d\lambda}, \quad \rho_2 = \frac{\int_{S_1}^{S_2} R_2(\lambda)\, d\lambda}{\int_{S_1}^{S_2} d\lambda}$$ avec des limites d'intégration S$_1$ = 400 nm et S$_2$ = 700 nm,

R$_1$($\lambda$) désignant la réflectivité spectrale de la surface d'affichage du dispositif d'affichage, à l'état éteint, et R$_2$ ($\lambda$) désignant la réflectivité spectrale du revêtement intérieur du substrat en verre ou vitrocéramique.

13. Table de cuisson selon l'une des revendications précédentes, comprenant
une zone de minimisation de contraste des bords qui crée une transition graduelle entre la valeur de gris et/ou la teinte de la surface d'affichage vue, à l'état éteint, à travers le substrat en verre ou vitrocéramique, dans la région de la fenêtre d'affichage, et la valeur de gris et/ou la teinte du revêtement intérieur, vu à travers le substrat en verre ou vitrocéramique, ou d'un film disposé sur la face interne du substrat en verre ou vitrocéramique ou à proximité de celle-ci, ou d'un matériau support disposé sur la face interne du substrat en verre ou vitrocéramique ou à proximité de celle-ci, ou d'un film disposé sur la face externe du substrat en verre ou vitrocéramique ou à proximité de celle-ci, ou d'un matériau support disposé sur la face externe du substrat en verre ou vitrocéramique ou à proximité de celle-ci.

14. Table de cuisson selon l'une des revendications précédentes,
dans laquelle la fenêtre d'affichage et/ou la fenêtre d'affichage supplémentaire est **caractérisée par le fait que** l'évidement partiel du revêtement intérieur, du revêtement extérieur, du film ou du matériau support ou l'éclaircissement du substrat en verre ou vitrocéramique est réalisé sous forme de trame, de préférence sous forme de lignes, de points, d'une trame régulière et/ou stochastique ou d'une trame à points, notamment pour obtenir en moyenne une réduction du facteur de transmission lumineuse ($\tau_{vis}$).

15. Table de cuisson selon l'une des revendications précédentes, dans laquelle la surface d'affichage et/ou la surface d'affichage supplémentaire, vue de l'extérieur à travers l'élément en vitrocéramique, présente une luminance qui est supérieure à 100 cd/m$^2$, de manière particulièrement avantageuse supérieure à 150 cd/m$^2$ et de manière tout à fait préférée supérieure 200 cd/m$^2$.

16. Table de cuisson selon l'une des revendications précédentes, comprenant

au moins un élément chauffant disposé dans la zone interne et destiné au chauffage d'un ustensile de cuisson posé sur la face externe du substrat, et/ou
au moins un capteur infrarouge disposé dans la zone interne et destiné notamment à mesurer la température d'un ustensile de cuisson posé sur la face externe du substrat,

le substrat en verre ou vitrocéramique présentant dans la région de l'élément chauffant et/ou du capteur infrarouge (E), un facteur de transmission lumineuse ($\tau_{vis}$) qui est inférieur à 5 %, de préférence inférieur à 1,5 %, de manière particulièrement avantageuse inférieur à 1 %, et de manière tout à fait préférée inférieur à 0,5 %.

17. Table de cuisson selon l'une des revendications précédentes, dans laquelle le substrat en verre ou vitrocéramique comprend un système LAS.

18. Table de cuisson selon l'une des revendications précédentes, dans laquelle le substrat en verre ou vitrocéramique est teinté dans la masse.

19. Table de cuisson selon l'une des revendications précédentes, dans laquelle le substrat en verre ou vitrocéramique est transparent.

20. Table de cuisson selon l'une des revendications précédentes, dans laquelle le substrat en verre ou vitrocéramique présente dans la région de la fenêtre d'affichage, une caractéristique de transmission spectrale qui est mise en œuvre sous forme de filtre de densité neutre ou filtre gris, la transmission variant dans le domaine spectral de 380 nm à 780 nm, de préférence dans le domaine spectral de 400 nm à 700 nm, de manière particulièrement avantageuse dans le domaine spectral de 450 nm à 650 nm, au maximum de ± 20 %, de préférence au maximum de + 15 %, et de manière particulièrement avantageuse au maximum de ± 10 %.

21. Table de cuisson selon l'une des revendications précédentes, dans laquelle le revêtement intérieur présente un facteur de transmission lumineuse ($\tau_{vis}$) qui est de l'ordre de < 0,5 %, de préférence de l'ordre de 0,005 % et de manière particulièrement avantageuse de l'ordre de 0,00005 %.

22. Table de cuisson selon l'une des revendications précédentes, dans laquelle la face de substrat externe du substrat en verre ou vitrocéramique est dotée d'un revêtement extérieur, qui crée notamment un décor, et/ou d'une couche anti-rayures, et/ou dans laquelle le substrat en verre ou vitrocéramique est poli.

23. Table de cuisson selon l'une des revendications précédentes, dans laquelle le revêtement intérieur et/ou le revêtement extérieur du substrat en verre ou vitrocéramique est réalisé sous forme de couche appliquée par pulvérisation cathodique et/ou comprend une peinture à lustre et/ou est réalisé à l'aide d'un sol-gel, par séparation physique en phase gazeuse et/ou par pulvérisation cathodique.

24. Table de cuisson selon l'une des revendications précédentes, comprenant une couche de compensation de peinture qui est de préférence réalisée comme revêtement supplémentaire du substrat en verre ou vitrocéramique.

25. Table de cuisson selon l'une des revendications précédentes, comprenant une couche électriquement conductrice qui est conçue pour détecter un contact de l'utilisateur avec la face de substrat externe tournée vers l'extérieur.

26. Table de cuisson selon la revendication précédente, dans laquelle la couche électriquement conductrice est réalisée comme revêtement supplémentaire du substrat en verre ou vitrocéramique, en particulier sur la face de substrat interne.

27. Table de cuisson selon l'une des deux revendications précédentes, dans laquelle la couche électriquement conductrice est disposée sur la surface d'affichage du dispositif d'affichage et/ou sur la surface d'affichage supplémentaire du dispositif d'affichage supplémentaire.

28. Table de cuisson selon l'une des revendications précédentes, dans laquelle le dispositif d'affichage et/ou le dispositif d'affichage supplémentaire est disposé directement sur la face de substrat interne tournée vers la zone intérieure.

29. Table de cuisson selon l'une des revendications précédentes, dans laquelle le dispositif d'affichage et/ou le dispositif d'affichage supplémentaire est installé à distance de la face de substrat interne tournée vers la zone intérieure.

30. Table de cuisson selon l'une des revendications précédentes, dans laquelle le substrat en verre ou vitrocéramique présente une épaisseur qui est comprise dans la plage allant de 0,1 à 10 millimètres, de préférence dans la plage allant de 1 à 5 millimètres et de manière particulièrement avantageuse dans la plage allant de 2 à 4 millimètres.

31. Appareil de cuisson, en particulier appareil de cuisson à induction, comprenant une table de cuisson selon l'une des revendications précédentes.

Fig. 1
Light Properties
Graphical Display

Fig. 2A

Fig. 2B

Fig. 3

Fig. 4

Fig. 5

Fig. 6

Fig. 7

Fig. 8

Fig. 9

$$\Delta C^* = \sqrt{(a_2^* - a_1^*)^2 + (b_2^* - b_1^*)^2}$$

Fig. 10

Fig. 11

$$\Delta C^* = \sqrt{(a_2^* - a_1^*)^2 + (b_2^* - b_1^*)^2}$$

$\tau_{vis} \ / \ \%$

$$\Delta C^* = \sqrt{(a_2^* - a_1^*)^2 + (b_2^* - b_1^*)^2}$$

Fig. 12

$$\Delta C^* = \sqrt{(a_2^* - a_1^*)^2 + (b_2^* - b_1^*)^2}$$

Fig. 13

$$\Delta C^* = \sqrt{(a_2^* - a_1^*)^2 + (b_2^* - b_1^*)^2}$$

Fig. 14

$$\Delta C^* = \sqrt{(a_2^* - a_1^*)^2 + (b_2^* - b_1^*)^2}$$

Fig. 15

◁

$$\Delta C^* = \sqrt{(a_2^* - a_1^*)^2 + (b_2^* - b_1^*)^2}$$

Fig. 16A

Fig. 16B

$$\Delta C^* = \sqrt{(a_2^* - a_1^*)^2 + (b_2^* - b_1^*)^2}$$

Fig. 16C

$$\Delta C^* = \sqrt{(a_2^* - a_1^*)^2 + (b_2^* - b_1^*)^2}$$

$R^2 = 0{,}8941$

$R^2 = 0{,}6117$

$R^2 = 0{,}4954$

$R^2 = 0{,}9125$

$R^2 = 0{,}9779$

Schulnote

$|G_1 - G_2| \, / \, \%$

Fig. 16D

$$\Delta C^* = \sqrt{(a_2^* - a_1^*)^2 + (b_2^* - b_1^*)^2}$$

$R^2 = 0{,}8493$

$R^2 = 0{,}6018$

$R^2 = 0{,}9755$

$R^2 = 0{,}9464$

$R^2 = 0{,}9343$

$|G_1 - G_2| \; / \; \%$

Schulnote

EP 3 339 741 B1

Fig. 17B

Fig. 17A

Fig. 17D

Fig. 17C

Fig. 17E

Fig. 17F

Fig. 17G

Fig. 17H

Fig. 17J

Fig. 17L

Fig. 17I

Fig. 17K

Fig. 17N

Fig. 17M

72

Fig. 18

Fig. 19

$\tau_{vis}$ (Typ B) = 20%

$\tau_{vis}$ (Typ B+CCF) = 12,5%

Wellenlänge / nm

Spektraler Transmissionsgrad

Fig. 20

EP 3 339 741 B1

Fig. 21

EP 3 339 741 B1

Fig. 22

Fig. 23

EP 3 339 741 B1

Fig. 24

EP 3 339 741 B1

Fig. 25

EP 3 339 741 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012001300 A1
- DE 202010018044 U1
- DE 202011110363 U1
- DE 202012012718 U1
- DE 102015102743 A1
- DE 202016104800 U1
- US 2014305929 A1
- DE 102008031426 A1
- DE 102008031428 A1
- DE 102013103776 A1
- WO 2015044168 A